(19) **Europäisches Patentamt**
**European Patent Office**
**Office européen des brevets**

(11) **EP 1 564 999 B1**

(12) **EUROPEAN PATENT SPECIFICATION**

(45) Date of publication and mention
of the grant of the patent:
**13.03.2013 Bulletin 2013/11**

(51) Int Cl.:
***H04N 7/26*** (2006.01)

(21) Application number: **05076145.1**

(22) Date of filing: **27.11.2002**

(54) **Method and apparatus for encoding and decoding data**

Verfahren und Vorrichtung zur Datenkodierung und -dekodierung

Méthode et appareil pour le codage et le décodage de données

(84) Designated Contracting States:
**BE DE ES FR GB NL**

(30) Priority: **27.11.2001 US 333130**
 **03.12.2001 US 334541**
 **26.12.2001 US 342101**
 **04.04.2002 US 369597**
 **02.11.2002 KR 2002067679**

(43) Date of publication of application:
**17.08.2005 Bulletin 2005/33**

(62) Document number(s) of the earlier application(s) in
accordance with Art. 76 EPC:
**02258179.7 / 1 320 266**

(73) Proprietor: **Samsung Electronics Co., Ltd.**
**Suwon-si, Gyeonggi-do, 443-742 (KR)**

(72) Inventors:
 • **Woo, Sang-oak**
 **Dongan-gu**
 **Anyang-city**
 **Kyungki-do (KR)**
 • **Jang, Euee-seon**
 **1-dong**
 **Seongdong-gu**
 **Seoul (KR)**
 • **Jung, Seok-yoon**
 **Seocho-gu**
 **Seoul (KR)**
 • **Ha, Mahn-jin**
 **Bundang-gu**
 **Seongnam-city**
 **Kyungki-do (KR)**
 • **Kim, Do-kyoon**
 **Seongnam-city**
 **Kyungki-do (KR)**
 • **Lee, Shin-jun**
 **Secoho-gu**
 **Seoul (KR)**
 • **Jang, Gyeong-ja**
 **Deokyang-gu**
 **Goyang-city**
 **Kyungki-do (KR)**

(74) Representative: **Greene, Simon Kenneth**
**Elkington and Fife LLP**
**Prospect House**
**8 Pembroke Road**
**Sevenoaks**
**Kent TN13 1XR (GB)**

(56) References cited:
**WO-A-01/41156**

 • **KIM D K; WOO S O; JUNG S Y; JANG G J; LEE S-J; HAN M; JANG E S: "A proposal for interpolator compression" ISO/IEC JTC1/SC29/WG11 MPEG01/M7473, 9 July 2001 (2001-07-09), pages 1-29, XP002404968**
 • **SIGNES J: "BINARY FORMAT FOR SCENE (BIFS): COMBINING MPEG-4 MEDIA TO BUILD RICH MULTIMEDIA SERVICES" PROCEEDINGS OF THE SPIE, SPIE, BELLINGHAM, VA, US, vol. 3653, 25 January 1999 (1999-01-25), pages 1506-1517, XP000984179 ISSN: 0277-786X**
 • **KIM J D K ET AL: "Animation data compression in MPEG-4: interpolators" PROCEEDINGS 2002 INTERNATIONAL CONFERENCE ON IMAGE PROCESSING. ICIP 2002. ROCHESTER, NY, SEPT. 22 - 25, 2002, INTERNATIONAL CONFERENCE ON IMAGE PROCESSING, NEW YORK, NY : IEEE, US, vol. VOL. 2 OF 3, 22 September 2002 (2002-09-22), pages 33-36, XP010607503 ISBN: 0-7803-7622-6**

**Description**

The present invention relates to an apparatus and a method for encoding and decoding data, and more particularly, to a differential pulse code modulation (DPCM) operation, a method of normalizing data, and a method and an apparatus for encoding and decoding data using the DPCM operation and the method of normalizing data.

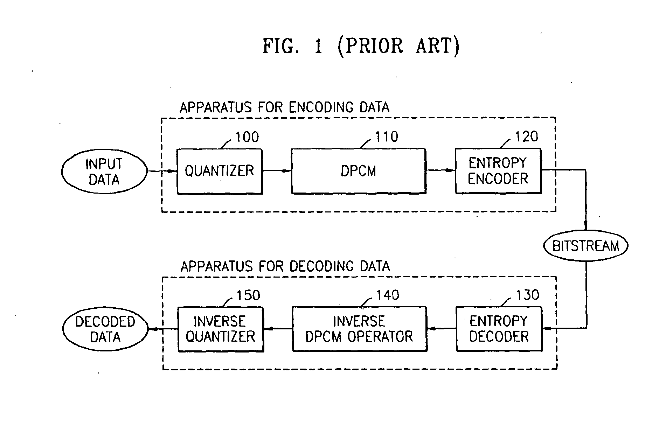

FIG. 1 is a block diagram showing the structures of a conventional apparatus for encoding data and a conventional apparatus for decoding data. Referring to FIG. 1, a conventional apparatus for encoding data includes a quantizer 100, a DPCM operator 110, and an entropy decoder 120. According to a conventional method for encoding data, input data are quantized with a predetermined number of bits in the quantizer 100 and are input into the DPCM operator 110. The DPCM operator 110 generates differential data by subtracting the current quantized data input from the quantizer 100 from previous quantized data and outputs the differential data to the entropy decoder 120. The entropy decoder 120 encodes the differential data into a bitstream using a predetermined entropy-encoding method.

Referring to FIG. 1, a conventional apparatus for decoding data includes an entropy decoder 130, an inverse DPCM operator 140, and an inverse quantizer 150. A bitstream, into which data are encoded, is input into the entropy decoder 130. The entropy decoder 130 outputs differential data inversely performing the process performed by the entropy encoder, and then the inverse DPCM operator 140 converts the differential data input from the entropy decoder 130 into quantized data and outputs the quantized data to the inverse quantizer 150. The inverse quantizer 150 inversely quantizes the quantized data input from the inverse DPCM operator 140 and then outputs decoded data.

However, since the aforementioned conventional method for encoding data only performs a simple DPCM operation so as to reduce the amount of data to be encoded and encodes data having a plurality of components without considering the characteristics of each of the x, y, and z components of the data, especially when the data are consecutively input, its encoding efficiency is not high enough.

The present invention seeks to provide a DPCM operation and a DPCM operator which can considerably reduce the size of data to be encoded.

It is another aspect of the present invention to provide a method and an apparatus for encoding and decoding data, using a method of normalizing data which can reduce the size of data having a plurality of components by normalizing data of each of the x, y, and z components based on one component.

It is another aspect of the present invention to provide a method and an apparatus for encoding data, in which the DPCM operation, the error minimization method, and the data normalization method according to the present invention are applied to a method for encoding and decoding key value data of a position interpolator for representing the positions of objects appearing in a three-dimensional animation, and a method and an apparatus for decoding a bitstream which has been encoded following the method and apparatus for encoding data.

In an aspect, there is provided an apparatus for encoding data according to claim. 1.

To achieve the above and other aspects of the present invention, there is provided a method for encoding data according to claim 6.

To achieve the above and other aspects of the present invention, there is provided an apparatus for decoding data according to claim 25, which decodes a bitstream into which data having a plurality of components are encoded.

To achieve the above and other aspects of the present invention, there is provided a method for decoding data according to claim 37, which decodes a bitstream into which data having a plurality of components are encoded.

The above objects and advantages of the present invention will become more apparent by describing in detail preferred embodiments thereof with reference to the attached drawings in which:

> FIG. 1 is a block diagram showing the structures of a conventional apparatus for encoding data and a conventional apparatus for decoding data;
>
> FIG. 2A is a block diagram of an apparatus for performing a DPCM operation according to a preferred embodiment of the present invention, and FIG. 2B is a flowchart of a DPCM operation according to a preferred embodiment of the present invention;
>
> FIG. 3A is a block diagram of an apparatus for encoding data using a DPCM operator according to a preferred embodiment of the present invention, and FIG. 3B is a flowchart of the operation of the apparatus for encoding data shown in FIG. 3A;
>
> FIG. 4A is a block diagram of an apparatus for encoding data according to a preferred embodiment of the present invention, which can minimize a quantization error, and FIG. 4B is a flowchart of a method of minimizing a quantization error;
>
> FIG. 5A is a block diagram of an apparatus for encoding data according to a preferred embodiment of the present invention, which normalizes input data having a plurality of components and then encodes the normalized data, and FIG. 5B is a flowchart of a method of normalizing data;
>
> FIG. 6A is a block diagram of an apparatus for encoding data which encodes key value data of a position interpolator according to a preferred embodiment of the present invention, and FIG. 6B is a flowchart of a method of encoding key value data;

FIGS. 7A and 7B are flowcharts of the operation of a floating-point number encoder shown in FIG. 6A;

FIGS. 7C and 7D are flowcharts of the operation of an entropy decoder according to a preferred embodiment of the present invention;

FIG. 8 is a diagram illustrating step S683 shown in FIG. 7C;

FIGS. 9A and 9B are diagrams illustrating the steps shown in FIG. 7D;

FIG. 10A is a block diagram of an inverse DPCM operator according to a preferred embodiment of the present invention, and FIG. 10B is a flowchart of an inverse DPCM operation;

FIG. 11 is a block diagram of an apparatus for decoding data using an inverse DPCM operator according to a preferred embodiment of the present invention;

FIG. 12A is a block diagram of an apparatus for decoding data using an inverse normalizer according to a preferred embodiment of the present invention, and FIG. 12B is a flowchart of the operation of an inverse normalizer;

FIG. 13A is a block diagram of an apparatus for decoding key value data according to a preferred embodiment of the present invention, and FIG. 13B is a flowchart of a method for decoding key value data;

FIG. 14A is a detailed flowchart of step S1320 shown in FIG. 13B;

FIG. 14B is a detailed flowchart of step S1330 shown in FIG. 14A;

FIG. 14C is a detailed flowchart of step S1380 shown in FIG. 13B;

FIG. 15 is a diagram illustrating the order of components of a bitstream which is input into an entropy decoder according to a preferred embodiment of the present invention;

FIGS. 16A and 16B are graphs illustrating the results of a predictive DPCM operation according to a preferred embodiment of the present invention;

FIGS. 17A through 17C are graphs illustrating the results of a circular-DPCM operation according to a preferred embodiment of the present invention;

FIGS. 18A and 18B are graphs illustrating keys of a position interpolator and key value data; and

FIGS. 19 through 27 are diagrams showing examples of program codes by which a process of reading a bitstream in a method for decoding data according to a preferred embodiment of the present invention is realized.

Hereinafter, the present invention will now be described more fully with reference to the accompanying drawings.

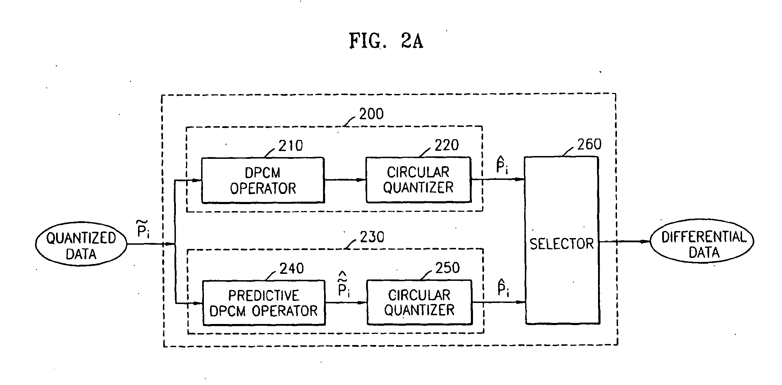

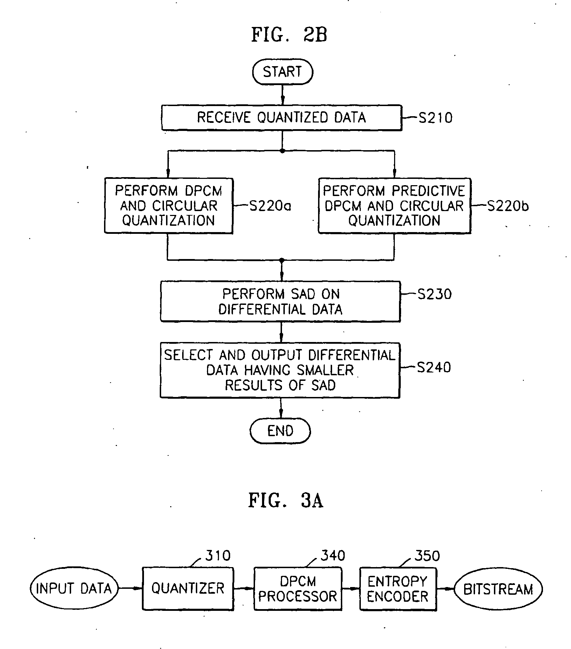

FIG. 2A is a block diagram of an apparatus for performing a DPCM operation according to a preferred embodiment of the present invention, and FIG. 2B is a flowchart of a DPCM operation according to a preferred embodiment of the present invention.

Referring to FIG. 2A, an apparatus for performing a DPCM operation according to a preferred embodiment of the present invention includes a circular DPCM operator 200, which includes a DPCM operator 210 performing a general DPCM operation and then outputting differential data and a circular quantization operator 220 performing a circular quantization operation on differential data input thereinto so as to reduce their range, a predictive-circular DPCM operator 230, which includes a predictive DPCM operator performing a predictive DPCM operation on quantized data input thereinto and then outputting predicted differential data and a circular quantizer 250 performing a circular quantization operation on differential data input thereinto so as to reduce their range, and a selector 260, which selects one from between the differential data input from the circular DPCM operator 200 and the differential data input from the predictive-circular DPCM operator 230 based on the value of the differential data input thereinto.

Referring to FIG. 2B, a DPCM operation according to a preferred embodiment of the present invention will be described in the following.

Data, which are quantized following an arbitrary quantization method, are input into the circular DPCM operator 200 and the predictive-circular DPCM operator 230 in step S210.

In the circular DPCM operator 200, the DPCM operator 210 generates differential data by performing a general DPCM operation on the quantized data input thereinto and outputs the generated differential data to the circular quantizer 220. The circular quantizer 220, then, performs a circular quantization on the differential data input from the DPCM operator 210 in step S220a.

In particular, the DPCM operator 210 calculates the differential data by subtracting previous quantized data from the current quantized data input in step S210. Thereafter, the circular quantizer 220 performs circular quantization on the calculated differential data. The operation of the circular DPCM operator 200 is expressed by the following equation.

$$\hat{P}_i = CircularQuantization(\widetilde{P}_i - \widetilde{P}_{i-1}) \quad (i = 1, 2, \ldots, n) \quad \cdots (1)$$

In Equation (1), n represents the number of data. The circular quantization will be described later.

The predictive DPCM operator 240 in the predictive-circular DPCM operator 230 calculates predicted differential data by performing a predictive DPCM operation on differential data input thereinto, and then the circular quantizer 250 performs a circular quantization on the predicted differential data in step S220b.

In particular, the predictive DPCM operator 240 generates the predicted differential data by subtracting predicted data from current quantized data and outputs them. In order to obtain the predicted data for the current quantized data, differential values are obtained by subtracting from previous quantized data quantized data prior to the previous quantized data and then are added to previous differential data so that the predicted data for the current data are calculated.

The predicted data calculated by the predictive DPCM operator 240 may not be beyond a maximum range of quantized data input thereinto. In other words, if the predicted data exceed a maximum value in a quantization range of the input quantized data, the predictive DPCM operator 240 sets up the predicted data as a maximum value in a quantization range of the input quantized data and generates differential data for current data by subtracting the current data from the predicted data. If the predicted data are smaller than a minimum value in the quantization range of the input data, the predictive DPCM operator 240 determines the current data as predicted differential data. Hereinafter, this operation of the predictive DPCM operator 240 will be referred to as a "modified predictive DPCM operation" in the following.

The predicted differential data calculated by the predictive DPCM operator 230 are input into the circular quantizer 250 and are subjected to a circular quantization operation.

The operation of the predictive-circular DPCM operator 230 may be expressed by the following equation.

$$\hat{\tilde{P}}_i = (2^{nQuantBit} - 1) - \tilde{P}_i \qquad (if \; 2 \times \tilde{P}_{i-1} - \tilde{P}_{i-2} > 2^{nQuantBit} - 1) \quad \cdots (2)$$

$$\hat{\tilde{P}}_i = \tilde{P}_i \qquad\qquad\qquad (if \; 2 \times \tilde{P}_{i-1} - \tilde{P}_{i-2} < 0)$$

$$\hat{\tilde{P}}_i = \tilde{P}_i - (2 \times \tilde{P}_{i-1} - \tilde{P}_{i-2}) \quad (otherwise)$$

$$\hat{P}_i = CircularQuantization(\hat{\tilde{P}}_i)$$

In Equation (2), i is an integer between 2 and n - 1, and n indicates the number of data.

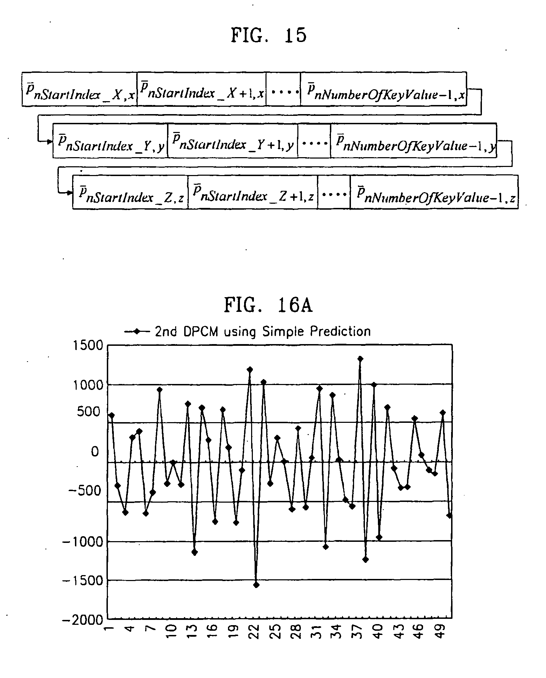

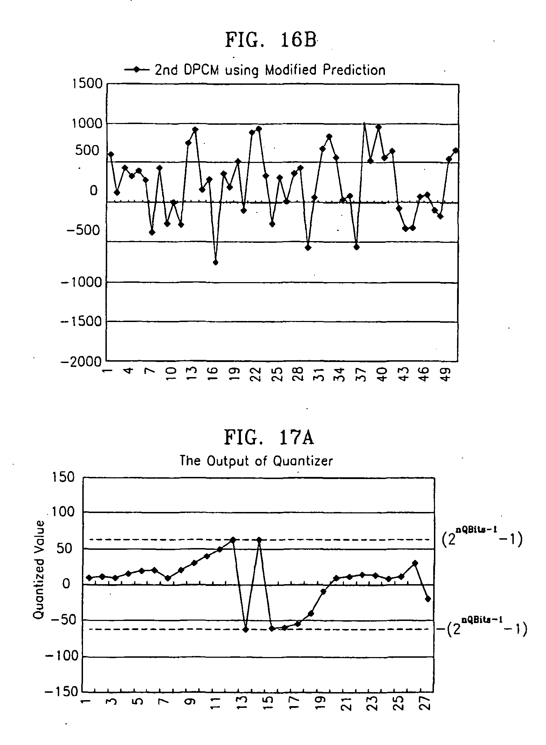

FIG. 16A shows the results of performing a simple predictive DPCM operation on 50 quantized data having a maximum value of 1024 and a minimum value of 0, and FIG. 16B shows the results of performing a modified predictive DPCM operation on the same data as in the case of FIG. 16A so that differential data for the data are adjusted following Equation (2), in a case where predicted data values for the data are beyond the maximum value or below the minimum value among the data.

As a result of the simple predictive DPCM operation, predicted differential data have as wide a range as about 3,000, as shown in FIG. 16A. As a result of the modified predictive DPCM operation, predicted differential data have as narrow a range as no greater than 2,000, as shown in FIG. 16B. This means that it is more likely to obtain predicted differential data having a narrower range in the modified predictive DPCM operation than in the simple predicted DPCM operation.

Hereinafter, circular quantization will be described in the following.

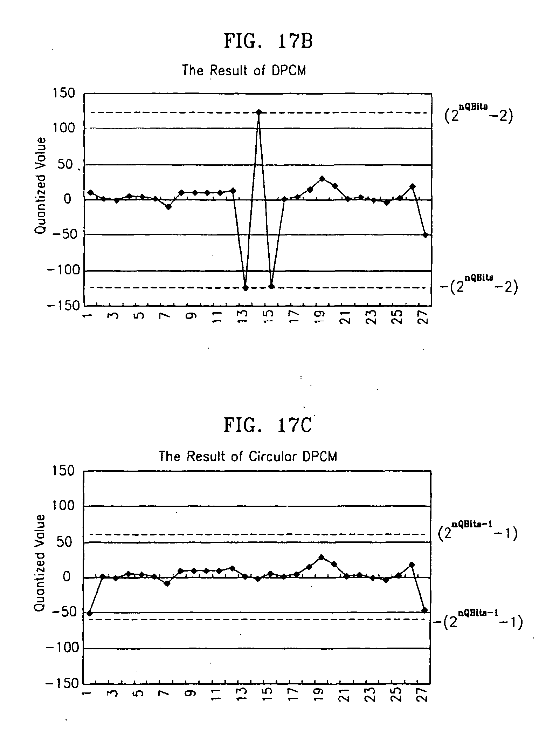

FIG. 17A shows quantized data, and FIG. 17B shows the results of performing a DPCM operation on the quantized data shown in FIG. 17A. As shown in FIG. 17B, the range of differential data can be increased after a DPCM operation up to two times as wide as it used to be before the DPCM operation. Accordingly, it is possible to say that a circular quantization operation is employed for making it happen that a DPCM operation is performed while maintaining the range of differential data subjected to the DPCM operation within the range of input data.

The circular quantization operation is performed on the assumption that a maximum value and a minimum value in a quantization range are circularly connected to each other. Accordingly, if differential data, which are the results of performing linear DPCM on two consecutive quantized data, are greater than half of the maximum value in the quantization range, their values can be decreased by subtracting the maximum value from each of the differential data.

If the differential data are smaller than half of the minimum value in the quantization range, their values can be decreased even more by adding the maximum value in the quantization range to each of the differential data.

Supposing that $X$ and $\hat{X}$ indicate input differential data and circularly-quantized differential data, respectively, the circular quantization can be expressed by the following equation.

$$CircularQuantization(X_i) = \hat{X}_i = Min(|X_i|, |X'_i|) \quad \cdots (3)$$

$$X'_i = X_i - (2^{nQBits} - 1) \quad (if \ X \geq 0)$$

$$X'_i = X_i + (2^{nQBits} - 1) \quad (otherwise)$$

In Equation (3), nQBits indicates a bit size used for quantization. FIG. 17C shows the results of performing the circular quantization on the differential data shown in FIG. 17B.

Referring to FIG. 2B again, circularly-quantized differential data and circular-quantized predicted differential data are output to the selector 260, and then the selector 260 performs a sum-of-absolute-difference (SAD) operation on the input differential data in step S230. Here, the SAD operation is performed so that the absolute values of input data are all added. In step S230, the selector adds all the absolute values of the circular-quantized differential data and adds all the absolute values of the circular-quantized predicted differential data.

Thereafter, the selector 260 compares the sum of the absolute values of the quantized differential data and the sum of the absolute values of the predicted differential data, selects differential data having a smaller sum of absolute values from between the quantized differential data and the predicted differential data, and outputs the selected differential data in step S240. The reason why the selector 260 selects differential data having a smaller sum of absolute values is that they supposedly have a narrower range of values. For example, in entropy-encoding predicted differential data, the number of bits required for encoding differential data having a smaller sum of absolute values is expected to be smaller than the number of bits required for encoding differential data having a larger sum of absolute values.

It is obvious to one skilled in the art that the SAD operation is merely one of the methods for selecting a certain group of differential data, and thus the selector 260 may adopt a different method to select differential data.

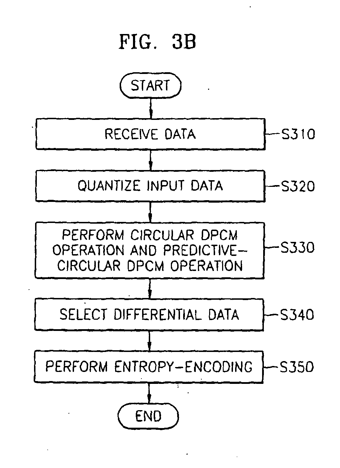

FIG. 3A is a block diagram of an apparatus for encoding data not part of the present invention, and FIG. 3B is a flowchart illustrating the operation of the apparatus for encoding data not part of the present invention. The apparatus of FIG. 3A includes the aforementioned DPCM operator of the present invention.

The apparatus for encoding data shown in FIG. 3A includes a quantizer 310 which quantizes input data with a predetermined quantization bit, a DPCM processor 340 which performs a circular DPCM operation and a predictive DPCM operation on the quantized data and then outputs differential data, and an entropy encoder 350 which performs a predetermined entropy-encoding operation on the differential data input from the DPCM processor 340 and then outputs a bitstream. The DPCM processor 340 comprises the aforementioned DPCM operator of the present invention.

Referring to FIGS. 3A and 3B, data to be encoded are input into the apparatus for encoding data in step S310, and are quantized with a predetermined number of quantization bits in the quantizer 310 and output to the DPCM processor 340 in step S320.

The circular DPCM operator 200 in the DPCM processor 340 performs a DPCM operation and a circular quantization operation on the quantized data input from the quantizer 310 and then outputs the results to the selector 260. In addition, the predictive-circular DPCM operator performs a predictive DPCM operation and circular quantization on the quantized data input from the quantizer 310 in step S330.

The selector 260 performs an SAD operation on the differential data input from the circular DPCM operator 200 and the differential data input from the predictive-circular DPCM operator 230, selects differential data to be output to the entropy decoder 350, and outputs the selected differential data in step S340.

The entropy encoder 350 performs a predetermined entropy-encoding operation on the differential data input from the selector 260 so that they are entropy-encoded and a bitstream is generated in step S350.

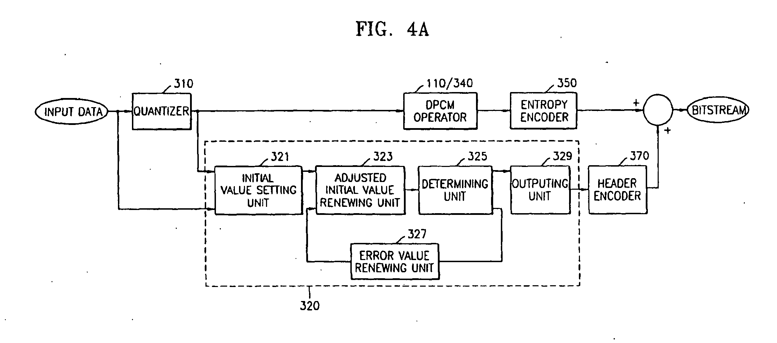

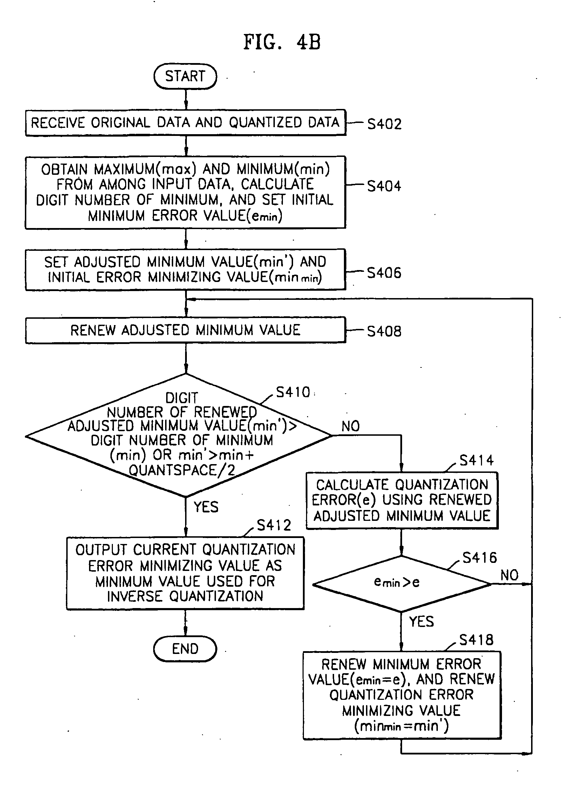

FIG. 4A is a block diagram of an apparatus for encoding data not part of the present invention, and FIG. 4B is a flowchart of the operation of a quantization error minimizer shown in FIG. 4A.

An apparatus for encoding data according to fig. 4A includes a maximum value and a minimum value used for minimizing a quantization error in a bitstream and encodes the bitstream so that a quantization error can be minimized when decoding encoded data.

Referring to FIG. 4A, an apparatus for encoding data includes a quantizer 310, a DPCM operator 110/340, an entropy encoder 350, a quantization error minimizer 320 which receives data and quantized data, adjusts a maximum value and a minimum value among the data so that the quantization error can be minimized, and outputs the adjusted maximum and minimum values, and a header encoder 370 which encodes the maximum and minimum values input from the quantization error minimizer 320 into header information and lets the information included in a bitstream.

The quantization error minimizer 320 includes an initial value setting unit 321 which sets a minimum error value $e_{min}$, an adjusted minimum value min', and a quantization error minimum value $min_{min}$, an adjusted minimum value renewing unit 323 which renews the adjusted minimum value min' by performing a predetermined operation, a determining unit 325 which determines the quantization error minimizing value $min_{min}$ as a minimum value to be used for inverse quantization based on the digit number and value of the renewed adjusted minimum value, an error value renewing unit 327 which calculates a quantization error value using the renewed adjusted minimum value, renews the adjusted minimum value min' and the calculated error value into the quantization error minimum value $min_{min}$ and the minimum error value $e_{min}$, respectively, if the calculated error value is smaller than the minimum error value $e_{min}$, and outputs the results of the renewal to the adjusted minimum value renewing unit 323.

The quantization error minimizer 320 controls a quantization range so as to minimize a quantization error by performing quantization and inverse quantization on input data.

In particular, when Max represents a fixed maximum value to be used for quantization, Min represents an adjusted minimum value to be used for quantization, $X_i$ represents an input value, and nQuanBit represents the number of bits used for quantization, a quantized input value $\widetilde{X}_i$, an inversely quantized value $\hat{X}_i$, and an error $e_i$ are calculated following Equation (4).

$$\widetilde{X}_i = floor(\frac{X_i - Min}{Max - Min} * (2^{nQuantBit} - 1) + 0.5) \quad \cdots (4)$$

$$\hat{X}_i = \frac{\widetilde{X}_i * (Max - Min)}{2^{nQuantBit} - 1} + Min$$

$$e_i = X_i - \hat{X}_i$$

In order to reduce the sum $\Sigma e_i$ of errors, the quantization error minimizer 320 controls Min so that the sum $\Sigma e_i$ of errors can be minimized and decodes quantized data using a minimum value which can minimize a quantization error in decoding data.

The quantizer 310, the DPCM operator 110/340, and the entropy encoder 350 are almost the same as the corresponding elements of the aforementioned apparatus for encoding data, and thus their detailed description will not be repeated here. Hereinafter, the operation of the quantization error minimizer 320 will be described more fully with reference to FIG. 4B.

The initial value setting unit 321 receives the same data as data input into the quantizer 310 as well as quantized data output from the quantizer 310 in step S402.

The initial value setting unit 321 obtains a maximum value max and a minimum value min from among the input data and calculates the digit number of the minimum value min. Next, the initial value setting unit 321 calculates a quantization error e by inversely quantizing the quantized data using the maximum value max and the minimum value min and sets the quantization error e as an initial minimum error value $e_{min}$ in step S404.

The initial value setting unit 321 subtracts the result of dividing a quantization step size QuantSpace by 2 from the minimum value min among the input data and sets the result of the subtraction as an initial adjusted minimum value min'. Then, the initial value setting unit 321 sets the initial adjusted minimum value min' as a quantization error minimum value $min_{min}$ and outputs the adjusted minimum value min' to the adjusted minimum value renewing unit 323 in step S406.

The adjusted minimum value renewing unit 323 renews the adjusted minimum value min' input from the initial value setting unit 321 by performing a predetermined operation. According to a preferred embodiment, the adjusted minimum value renewing unit 323 renews the adjusted minimum value min' input from the initial value setting unit 321 following Equation (5) and outputs the renewed adjusted minimum value min' to the determining unit 325 in step S408.

$$min' = \frac{Mantissa(min') + 1}{10^{Exponent(min')}} \quad \cdots (5)$$

The determining unit 325 calculates the digit number of the renewed adjusted minimum value min', compares the result of the calculation with the digit number of the minimum value min among the input data, which is calculated by the initial value setting unit 321, and compares the renewed adjusted minimum value min' with the result of adding the minimum value min among the input data to the result of dividing the quantization bit size QuantSpace by 2, in step S410.

If the digit number of the renewed adjusted minimum value min' is greater than the digit number of the minimum value min among the input data, or if the renewed adjusted minimum value min' is greater than $min + \dfrac{QuantSpace}{2}$,

the determining unit 325 determines the currently stored quantization error minimizing value $min_{min}$ as a minimum value

**6**

to be used for inverse quantization and outputs the quantization error minimizing value $min_{min}$ to the outputting unit 329. If the digit number of the renewed adjusted minimum value min' is not greater than the digit number of the minimum value min among the input data and the renewed adjusted minimum value min' is not greater than $min + \dfrac{QuantSpace}{2}$,

the determining unit 325 outputs the renewed adjusted minimum value min' to the error value renewing unit 327.

The error value renewing unit 327 inversely quantizes the quantized data using the renewed adjusted minimum value min' and the maximum value max obtained by the initial value setting unit 321 and calculates the quantization error e in step S414.

The error value renewing unit 327 compares the newly calculated error value e with the minimum error value $e_{min}$ in step S446. As a result of the comparison, if the newly calculated error value e is smaller than the minimum error value $e_{min}$, the error value renewing unit 327 renews the minimum error value $e_{min}$ with the newly calculated error value e and renews the quantization error minimum value $min_{min}$ with the renewed adjusted minimum value min' in step S418. On the other hand, if the newly calculated error value e is greater than the minimum error value $e_{min}$, the error value renewing unit 327 performs step S408 again without renewing the minimum error value $e_{min}$ and the quantization error minimum value $min_{min}$.

The maximum and minimum values used for minimizing a quantization error, which are obtained through the above-mentioned processes, are output to the header encoder 370 and are encoded as header information. Then, the header information is included in a bitstream generated by the entropy encoder 350.

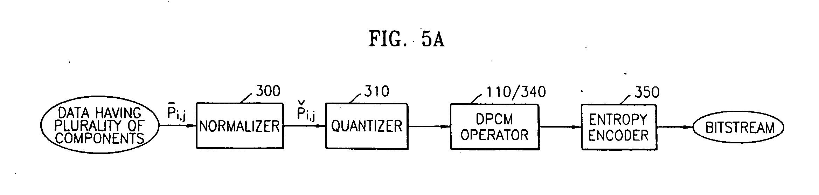

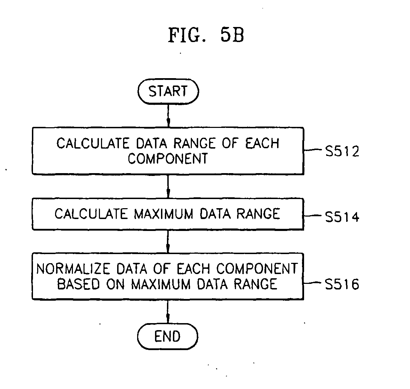

FIG. 5A is a block diagram of an apparatus for encoding data according to a first embodiment of the present invention, and FIG. 5B is a flowchart of the operation of a normalizer shown in FIG. 5A. An apparatus for encoding data according to a first embodiment of the present invention increases the efficiency of encoding data by normalizing input data having a plurality of components.

As shown in FIG. 5A, an apparatus for encoding data according to a first embodiment of the present invention includes a normalizer 300 which calculates a maximum range among data ranges of components input into the apparatus for encoding data and normalizes data of each of the x, y, and z components based on the maximum range, a quantizer 310 which quantizes normalized data with a predetermined number of quantization bits, a DPCM operator 110/340 which performs a DPCM operation on quantized data and outputs differential data, and an entropy encoder 350 which entropy-encodes differential data and then outputs an encoded bitstream.

The quantizer 310, the DPCM operator 110/340, and the entropy encoder 350 are the same as the corresponding elements of the apparatus for encoding data according to FIG. 3A, and thus their detailed description will not be repeated here. Only the operation of the normalizer 300 will be described in the following with reference to FIG. 5B.

In a case where data to be encoded comprises a plurality of components, for example, if input data consists of three components x, y, and z to represent the location of an object in a three-dimensional space, each of the x, y, and z components is input into the normalizer 300 of the apparatus for encoding data. Then, the normalizer 300 calculates a maximum range among the ranges of the x, y, and z components and normalizes data of each of the x, y, and z components based on the maximum range.

The normalizer 300 receives data of each component and calculates data ranges of the x, y, and z components following Equation (6) in step S512. Then, the normalizer 300 calculates a maximum range among the data ranges of the x, y, and z components by comparison in step S514.

$$Max_j = Max_{i=0}^{n}(\overline{P}_{ij}) \qquad \cdots (6)$$
$$Min_j = Min_{i=0}^{n}(\overline{P}_{ij})$$
$$Range_{max} = Max(Max_x - Min_x, Max_y - Min_y, Max_z - Min_z)$$

Thereafter, the normalizer 300 normalizes the data of each of the x, y, and z components using the following equation in step S516.

$$\breve{P}_{ij} = \frac{\overline{P}_{ij} - Min_j}{Range_{max}} \qquad \cdots (7)$$

In Equations (6) and (7), n represents the number of data, i = 0, 1, ..., n-1, and j represents each of the components x, y, and z. As shown in Equation (7), the x, y, and z components are normalized using the maximum range $Range_{max}$ among their data ranges. As a result of such normalization, the redundancy of data regarding components not having the maximum range $Range_{max}$ increases, and accordingly, the efficiency of encoding data also increases.

The normalizer 300 normalizes each of the components of the input components and outputs the results of the normalization to the quantizer 310, and then the quantizer 310 quantizes the normalized data input from the normalizer 300 with a predetermined number of quantization bits and outputs the results of the quantization to the DPCM operator 110/340. Thereafter, the DPCM operator 110/340 generates differential data by performing a DPCM operation on the quantized data input from the quantizer 310 and outputs the differential data to the entropy encoder 350 so that they can be encoded.

Hereinafter, an apparatus for encoding data according to a second embodiment of the present invention, into which the aforementioned DPCM operator of the present invention, the aforementioned apparatus for encoding data according to the present invention which is capable of minimizing a quantization error, and the aforementioned apparatus for encoding data according to the present invention, which is capable of encoding data having a plurality of components, are integrated, will be described.

Even though an apparatus for encoding data according to a second embodiment of the present invention will be specifically described as encoding key value data of a position interpolator among three-dimensional animation data in the following, it can also encode other general types of data obviously.

A position interpolator is information on the position of a path of an animation in a key frame-based animation which is one of basic techniques of representing a computer-synthesized 3D animation. The key frame-based animation is used for defining the order of animations based on the moment when key data appear. A frame corresponding to the moment when key data appear is called a key frame.

In the key frame-based animation, a plurality of key frames and frames among the key frames constitute an animation, and the frames are interpolated among the key frames (or the frames among the key frames are generated using interpolation).

International multimedia standards, such as MPEG-4 binary format for scene (BIFS) and virtual reality modeling language (VRML), support a key frame-based animation using an interpolator node. In MPEG-4 BIFS and VRML, there are various kinds of interpolators including a scalar interpolator, a position interpolator, a coordinate interpolator, an orientation interpolator, a normal interpolator, and a color interpolator. These interpolators and their functions and characteristics are shown in Table 1.

Table 1

| Kind of Interpolator | Characteristics | Function |
|---|---|---|
| Scalar interpolator | Linear interpolation of scalar variations | Capable of representing area, diameter, and intensity |
| Position interpolator | Linear interpolation on 3D coordinates | Parallel movement in 3D space |
| Orientation interpolator | Linear interpolation of 3D coordinate axis and amount of rotation | Rotation in 3D space |
| Coordinate interpolator | Linear interpolation of variations in 3D coordinates | 3D morphing |
| Normal interpolator | Linear interpolation of 3D coordinates of normal | Capable of representing variations in 3D vector of normal |
| Color interpolator | Linear interpolation of color information | Capable of representing variations in color |

The position interpolator shown in Table 1 is used to show the position information of a keyframe-based animation and is comprised of keys and key value fields. Key fields represent the position of each key frame on a temporal axis using_ discontinuous numbers in a range between - ∞ and ∞. Each of the key value fields specifies information on the position of an object at a moment represented by each of the keys and includes three components x, y, and z. Each of the key value fields includes as many key values as each of the key fields has.

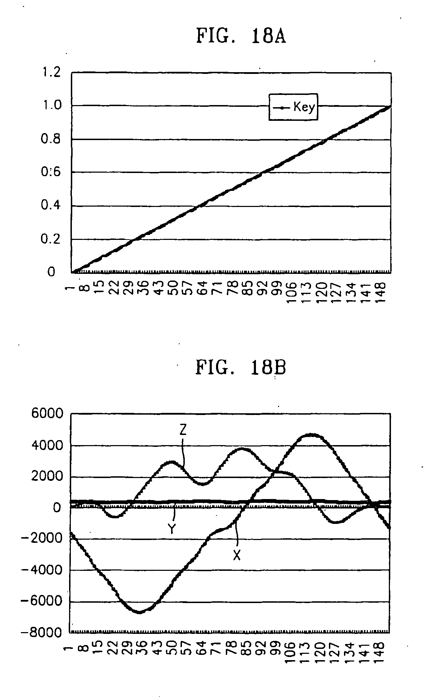

An example of the position interpolator is shown in FIGS. 18A and 18B. In particular, FIG. 18A shows key data, and FIG. 18B shows key value data.

Linear interpolation has been employed in MPEG-4 BIFS and VRML. However, in order to represent an animation smoothly and naturally using linear interpolation, a considerable amount of key data and key value data has been required. In addition, in order to store and transmit such an animation, a storage having a large capacity and plenty of time have been required. Accordingly, it is preferable to compress interpolators to store and transmit the interpolators.

In MPEG-4 BIFS, a method for encoding and decoding an interpolator node called predictive MF coding (PMFC) has been used. In the PMFC method, like the operation of the conventional apparatus for encoding data shown in FIG. 1, key value data of a position interpolator are encoded using a quantizer, a DPCM operator, and an entropy encoder. The quantizer and the DPCM operator reduces redundant key value data, and the output of the DPCM operator is input into the entropy encoder. However, in the PMFC method, differential data obtained by a DPCM operation are entropy-encoded, and thus the encoding efficiency is not high enough. In addition, due to the limits that the entropy encoder has, it is almost impossible to provide an animation of high quality.

Accordingly, the present invention provides an apparatus for encoding key values into which the aforementioned DPCM operator according to the present invention, the aforementioned apparatus for encoding data according to the present invention which is capable of minimizing a quantization error, and the aforementioned apparatus for encoding data according to the present invention, which is capable of encoding data having a plurality of components, are integrated, thus increasing the efficiency of encoding key value data

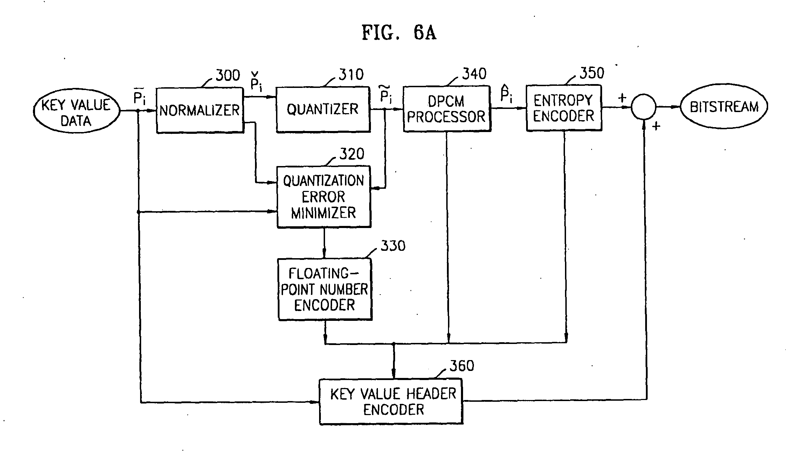

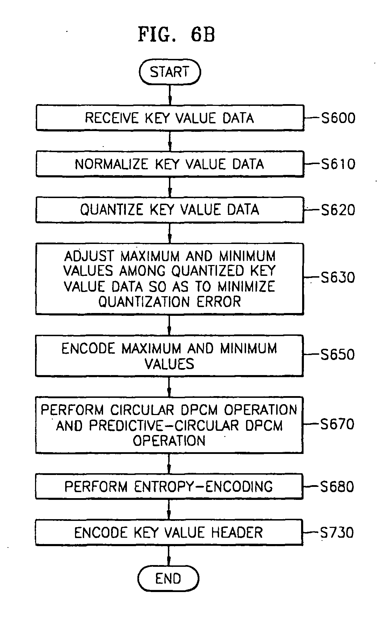

FIG. 6A is a block diagram of an apparatus for encoding key value data according to a second embodiment of the present invention, and FIG. 6B is a flowchart of the operation of the apparatus for encoding key value data.

Referring to FIG. 6A, the apparatus for encoding key value data includes a normalizer 300 which normalizes input key value data of each component based on a maximum range among the data ranges of the x, y, and z components, a quantizer 310 which quantizes normalized key value data with a predetermined quantization bit, a quantization error minimizer 320 which receives the minimum values and the maximum range from the normalizer 300 and adjusts and outputs maximum and minimum values so that a quantization error can be minimized, a floating-point number encoder 330 which receives the minimum values and the maximum range from the quantization error minimizer 320 and converts the maximum range and the minimum values used for minimizing a quantization error into decimal numbers, a DPCM processor 340 which obtains differential data and predicted differential data of quantized key value data and performs a circular quantization operation so as to reduce the range of the differential data, an entropy encoder 350 which entropy-encodes differential data and then outputs a bitstream into which key value data are encoded, and a key value header encoder 360 which encodes information required for decoding a bitstream and allows the information to be included in the bitstream.

The operation of the apparatus for encoding key value data according to the present invention will be described with reference to FIG. 6B.

Key value data of each of the x, y, and z components are input into the normalizer 300 of the apparatus for encoding key value data in step S600. Then, the normalizer 300 calculates a maximum range among the data ranges of the x, y, and z components and normalizes the key value data of the input x, y, and z components based on the maximum range in step S610. The process of normalizing the key value data input into the normalizer 300 has been described above and thus will not be repeated here.

The normalized key value data of the x, y, and z components are input into the quantizer 310, and then the quantizer 310 quantizes the normalized key value data with a predetermined number of quantization bits nQuanBit following Equation (8) in step S620.

$$\widetilde{P}_{ij} = floor(\overline{P}_{ij} \times (2^{nQuantBit} - 1) + 0.5) \quad \cdots (8)$$

In Equation (8), floor( ) is a function for converting an input floating-point number into a maximum integer of no greater than the input floating-point number. The quantizer 310 outputs the quantized key value data to the DPCM processor 340 and the quantization error minimizer 320.

The quantization error minimizer 320 receives the minimum values and the maximum range from the normalizer 300, calculates the minimum values and the maximum values using the minimum values and the maximum range input from the normalizer 300, determines a minimum value and a maximum value to minimize a quantization error in step S630, calculates the minimum values and the maximum range using the determined minimum and maximum values, and outputs the minimum values and the maximum range to the floating-point number converter 330 so that they are encoded into a key value header. Here, the minimum and maximum values determined by the quantization error minimizer 320 are used to minimize a quantization error.

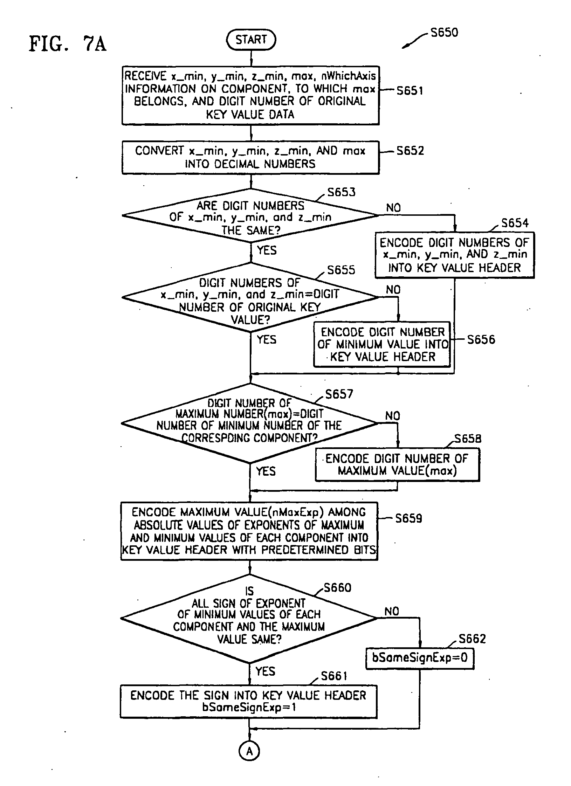

Hereinafter, step S650 performed by the floating-point number encoder 330 will be described with reference to FIG. 7A.

The floating-point number encoder 330 receives minimum values x_min, y_min, and z_min among the key value data of each of the x, y, and z components, a maximum value max of a component having the maximum range, information nWhichAxis on which component a maximum value max belongs to, and the digit number nKeyValueDigit of the original key value data in step S651.

In order to enhance the efficiency of encoding key value data by decreasing the number of bits required for encoding, the floating-point number encoder 330 converts x_min, y_min, z_min, and max, which are represented by binary numbers, into decimal numbers in step S652.

A computer stores floating-point numbers in the form of 32-bit binary numbers. When a floating-point number in the binary system is input, the floating-point number encoder 330 converts the floating-point number into a mantissa and its exponent in the decimal system, following Equation (9).

$$\underbrace{mantissa\_binary * 2^{exponent\_binary}}_{floating-point\ number\ in\ binary\ system} = \underbrace{mantissa * 10^{exponent}}_{floating-point\ number\ in\ decimal\ system} \qquad \cdots(9)$$

For example, a floating-point number 12.34 in the decimal system can be converted into a binary number by a computer, which is shown in the following.

$$\underline{0}\ \underline{10001010111000010100011}\ \underline{10000010}$$
$$1 \qquad\qquad 2 \qquad\qquad\qquad 3$$

1: the sign
2: the mantissa in the binary system
3: the exponent in the binary system

The binary number can be converted back into the original decimal number following Equation (9), which is shown in the following.

$$\underline{0}\ \underline{1234}\ \underline{2}$$
$$1 \quad 2 \quad 3$$

1: the sign
2: the mantissa in the decimal system
3: the exponent in the decimal system

In order to include a mantissa and an exponent of the decimal system in a bitstream, the number of bits required to represent the mantissa and the number of bits required to represent the exponent must be calculated. An exponent has a value between -38 and 38 and thus may be expressed together with its sign using 7 bits. The number of bits required to represent a mantissa depends on the digit number of the mantissa. Values of various ranges and the number of bits required to represent their mantissas are shown in the following table.

Table 2

| Ranges of values | Digit number of mantissa | Number of bits required to represent mantissa |
|---|---|---|
| 0 | 0 | 0 |
| 1 - 9 | 1 | 4 |
| 10 - 99 | 2 | 7 |
| 100 - 999 | 3 | 10 |
| 1000 - 9999 | 4 | 14 |
| 10000 - 99999 | 5 | 17 |
| 100000 - 999999 | 6 | 20 |
| 1000000 - 9999999 | 7 | 24 |

The floating-point number encoder 330 checks if the digit numbers of x_min, y_min, and z_min are the same in step S453. If they are not the same, they are output to the key value header encoder 360 and are encoded as a key value header in step 654.

If the digit numbers of x_min, y_min, and z_min are the same, the floating-point number encoder 330 checks if they are the same as the digit number of the original key value data in step S655. If their digit numbers of x_min, y_min, and z_min are not the same as the digit number of the original key value data, one of the digit numbers of x_min, y_min, and z_min is output to the key value header encoder 360 and are encoded as a key header in step S656.

Thereafter, the floating-point number encoder 330 checks among which component key value data the maximum value max among all the key value data of the x, y, and z components is selected from and determines whether or not the digit number of max is the same as the digit number of a minimum value among the key value data of the component, from which the maximum value max comes, in step S657.

If the digit number of max is not the same as the digit number of the minimum value among the key value data of the component, from which the maximum value max comes, it is output to the key value header encoder 360 and is encoded as a key value header. On the other hand, if the digit number of max is the same as the digit number of the minimum value among the key value data of the component to which the maximum value max belongs to, state information describing that they are the same is output to the key value header encoder 360 in step S658.

The aforementioned operation of the floating-point number encoder 330 is for encoding the mantissa of a converted floating-point number, and a process of encoding information on the exponent of the floating-point number into a key value header will be described in the following.

The floating-point number encoder 330 identifies which one is a maximum value among the absolute values of the exponents of x_min, y_min, z_min, and max, stores the identified maximum value as nMaxExp, and encodes nMaxExp into a key value header of several bits in step S659.

Thereafter, the floating-point number encoder 330 checks if the signs of the exponents of x_min, y_min, z_min, and max are the same in step S460. If they are the same, bSameSignExp is set to 1 and their sign is output to the key value header encoder 360 in step S661. On the other hand, if they are not the same, bSameSignExp is set to 0 in step S662, and then encoding of the information on the exponents of x_min, y_min, z_min, and max are completed.

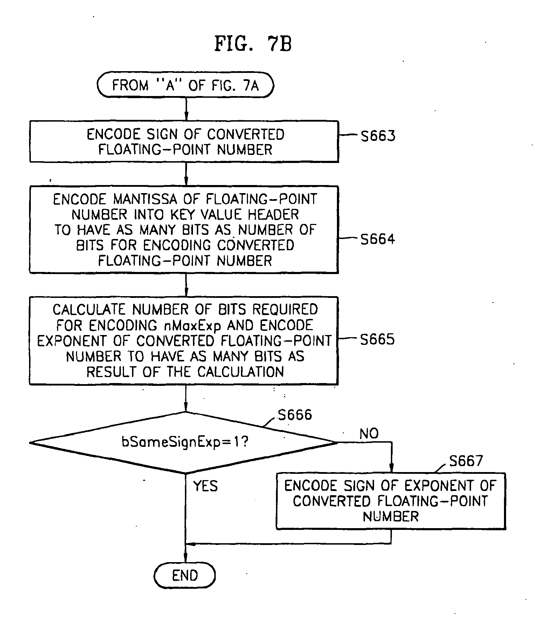

Referring to FIG. 7B, the floating-point number encoder 330 encodes the sign of the converted floating-point number in step S663 before encoding x_min, y_min, z_min, and max into a key value header.

Next, the floating-point number encoder 330 calculates the number of bits required for encoding the floating-point number referring to Table 2 and outputs the mantissa of the floating-point number, having as many bits as the result of the calculation, to the key value header encoder 360 in step S664.

The floating-point number encoder 330 calculates the number of bits required for encoding nMaxExp referring to Table 2 and outputs the exponent of the floating-point number having as many bits as the result of the calculation, to the key value header encoder 360 in step S665.

The floating-point number encoder 330 checks based on bSameSignExp if exponents of x_min, y_min, z_min, and max have the same sign. If they do not have the same sign, their signs are output to the key value header encoder 360 and are encoded in step S667, thus completing the process of encoding the maximum and minimum values among the key data of each of the x, y, and z components input from the normalizer 300.

The floating-point number encoder 330 receives the maximum and minimum values required for minimizing a quantization error from the quantization error minimizer 320 and encodes them into the key header through the above-described steps.

Referring to FIG. 6B again, the DPCM processor 340 performs a circular DPCM operation and a predictive-circular DPCM operation on the quantized key value data and outputs differential data to the entropy encoder 350 in step S670. The DPCM processor 340 is constituted by the aforementioned DPCM operator, and the operation and structure of the DPCM operator have been described above. The only difference between the DPCM processor 340 and the aforementioned DPCM operator is that the DPCM processor 340 performs a circular DPCM operation and a predictive-circular DPCM operation on the key value data of each of the x, y, and z components, separately.

The differential data output from the DPCM processor 340 are entropy-encoded in the entropy encoder 350 in step S680.

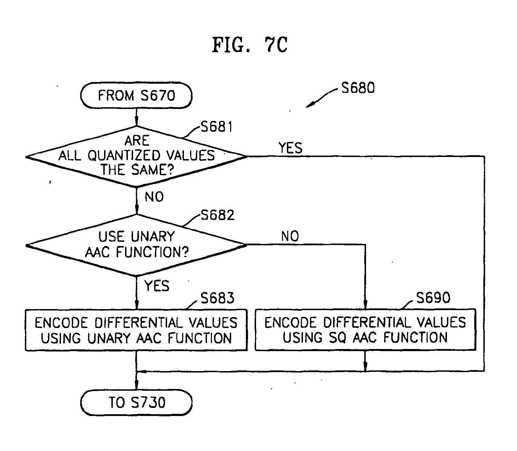

Referring to FIG. 7C, the entropy encoder 350 entropy-encodes the differential data of the key value data of each of the x, y, and z components.

The entropy encoder 350 checks referring to the differential data of each of the x, y, and z components if the quantized values of the x, y, and z components are the same and completes the entropy-encoding in step S681 if they are the same. For example, in a case where in a three-dimensional animation, a train moves in a horizontal direction which is the same as the direction of the x component, the key value data of the x component vary. However, there is little change in the y and z components. Accordingly, if the y and z components are quantized, they are supposed to have the same value. Accordingly, there is no need to encode all key value data which are practically the same, and thus it is possible to enhance the efficiency of encoding by encoding only one of the key value data into a key value header.

If the quantized key value data of each of the x, y, and z components are not the same, the entropy encoder 350 reads a predetermined value which has been set up in advance, in step S682. Thereafter, the entropy encoder 350 encodes the differential data of the quantized key value data of each of the x, y, and z components using a unary AAC function in step S683 or encodes them using a successive quantization AAC function in step S685.

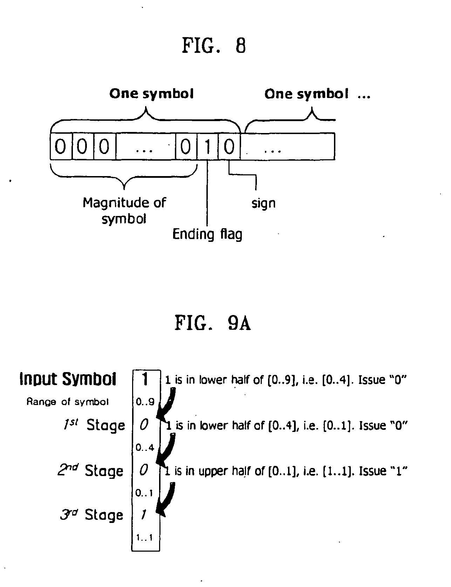

Hereinafter, the unary AAC function will be described with reference to FIG. 8. The unary AAC function converts symbols to be encoded into several bits which consist of a series of 0s, a flag bit 1 indicating that the series of zeros end, and one bit representing the sign of the symbol. Here, the series of zeros corresponds to the magnitude of the symbol. For example, 256 is encoded using the unary AAC function into a series of bits consisting of two hundred fifty six 0s, 1 which is a flag bit indicating the series of 0s ends, and 0 which represents the sign of 256, i.e., a plus sign. Due to the unary AAC function, the redundancy of the bits representing the symbol to be encoded increases, which enhances the efficiency of encoding the symbol.

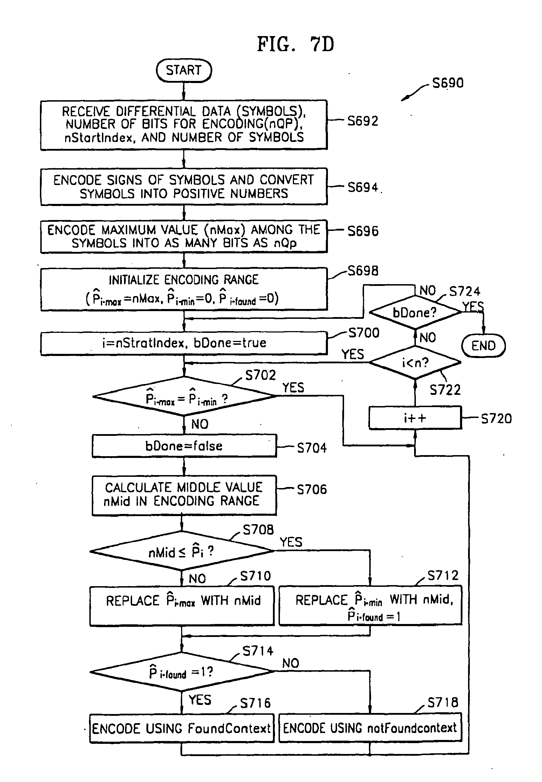

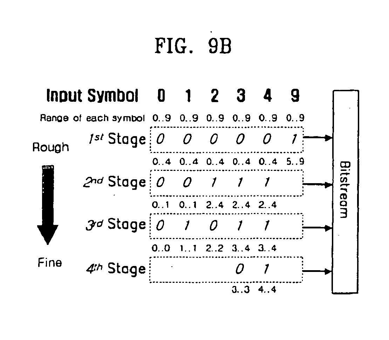

Referring to FIGS. 7D, 9A, and 9B, a method of encoding symbols using the SQ AAC function will be described. The SQ AAC function encodes symbols continuously renewing a quantization range.

FIG. 9A is a diagram illustrating a method of encoding symbols using the SQ AAC function. As shown in FIG. 9A, an input symbol to be encoded is 1, and a minimum value and a maximum value in an encoding range are 0 and 9, respectively.

Referring to FIG. 9A, in a first step of encoding the symbol, the encoding range is divided into two sub-ranges, i.e., an upper range and a lower range, and then it is checked whether the symbol to be encoded, i.e., 1, belongs to the upper range or the lower range. Since 1 belongs to the lower range, 0 is encoded and the lower range is renewed into a new encoding range. Accordingly, the new encoding range for the second step is from 0 to 4.

In the second step, the new encoding range of 0 - 4 is divided into two sub-ranges, i.e., an upper range and a lower range, and then it is checked whether 1 belongs to the upper range or the lower range. Since 1 belongs to the lower range, 0 is encoded, and the maximum value in the encoding range is renewed into 1 which is the maximum value in the lower range. Accordingly, a new encoding range for the third step, which used to be the lower range, is from 0 to 1.

In the third step, the encoding range of 0 - 1 is divided into an upper value and a lower value, and then it is checked whether 1 belongs to an upper range. Since 1 is equal to the upper value, 1 is encoded and then the minimum value in the corresponding encoding range is renewed into 1. Accordingly, a new encoding range is [1, 1] so that its maximum and minimum values are the same. When minimum and maximum values in an encoding range are the same, the encoding process using the SQ AAC function is completed.

FIG. 7D is a flowchart of a process of encoding differential data of key value data of a component using the SQ AAC function, which is performed in the entropy encoder 350 according to the present invention.

Referring to FIG. 7D, the entropy encoder 350 receives differential data (hereinafter, referred to as symbols) of key value data, the number nQP of bits required for entropy-encoding the symbols, nstartIndex indicating the first index of symbols to be encoded into a bitstream, and the number (n) of symbols to be encoded in step S692.

The entropy encoder 350 encodes the signs of the symbols and converts the symbols into positive numbers in step S694. The reason the symbols are converted into positive numbers is that negative numbers are not allowed in subsequent processes.

The entropy encoder 350 identifies a maximum value among the positive numbers, stores the maximum value as nMax, and encodes nMax into as many bits as nQP in step S696.

The entropy encoder 350 initializes a range within which the symbols will be encoded and sets a minimum value $\hat{P}_{i \cdot min}$ and a maximum value $\hat{P}_{i \cdot max}$ in the encoding range to 0 and nMax, respectively. In addition, the entropy encoder 350 allots a one-bit flag $\hat{P}_{i \cdot found}$ to each of the symbols. The flag $\hat{P}_{i \cdot found}$ is used for changing probability models during encoding the symbols. The flag $\hat{P}_{i \cdot found}$ is set as 'false' at the beginning and is converted into 'true' when a value to be encoded next is 1, and thereafter, the probability model having been used for encoding the symbols so far is replaced by another.

Next, the entropy encoder 350 identifies a differential datum (i = nStartIndex) of each of the x, y, and z components, which is supposed to be encoded first, and sets a flag bDone, which indicates whether or not encoding all the symbols is completed, as 'true' in step S700.

The entropy encoder 350 repeatedly performs steps S702 through S718, which will be described in the following, until maximum and minimum values in an encoding range for each of the symbols become the same, i.e., until there is no symbol left to be encoded. Here, when maximum and minimum values in an encoding range for a symbol are the same, it is considered that encoding of the symbol is completed.

The entropy encoder 350 checks if $\hat{P}_{i \cdot max}$ is equal to $\hat{P}_{i \cdot min}$ in step S702. If $\hat{P}_{i \cdot max}$ is equal to $\hat{P}_{i \cdot min}$, the method moves on to a step for encoding the next symbol, and if not, bDone is set as 'false', which means the encoding of the current symbol (the symbol currently being encoded) is not completed yet, in step S704.

The entropy encoder 350 calculates a middle value nMid in the encoding range for the current symbol in step S706 and compares the middle value nMid with the value of the current symbol in step S708. In a preferred embodiment of the present invention, the middle value nMid is calculated using the following equation.

$$nMid = \frac{\hat{P}_{i \cdot max} + \hat{P}_{i \cdot min}}{2} + \hat{P}_{i \cdot min} + 1 \quad \cdots (10)$$

As a result of the comparison, if the current symbol value is not greater than the middle value nMid, which means that the current symbol belongs to the upper range, then 0 is issued to a bitstream and the maximum range $\hat{P}_{i \cdot max}$ in the encoding range for the current symbol is replaced by the middle value nMid in step S710.

On the other hand, if the current symbol value is greater than the middle value nMid, which means that the current symbol belongs to the upper range, then 1 is issued to the bitstream and the minimum value $\hat{P}_{i \cdot min}$ in the encoding range for the current symbol is replaced by the middle value nMid. When the value of the symbol currently being encoded exceeds the middle value nMid for the first time, in other words, when 1 is issued to the bitstream for the first time, $\hat{P}_{i.found}$ is set as 'true' in step S712 so as to change the probability model for encoding the symbols.

There are two probability models used in the SQ AAC function. One is notFoundContext for entropy-encoding bits output before 1 is issued from each of the symbols for the first time, and the other is FoundContext for entropy-encoding bits output right after 1 is issued from each of the symbols for the first time. The purpose of using two different probability models is to increase the probability of 0 being generated during using notFoundContext. As the probability of 0 being generated increases, the efficiency of entropy-encoding a symbol increases.

Thereafter, the entropy encoder 350 checks if $\hat{P}_{i \cdot found}$ is true or false in step S714. If $\hat{P}_{i \cdot found}$ is true, the entropy encoder 350 encodes the symbols using FoundContext in step S716, and if not, the entropy encoder 350 encodes the symbols using notFoundContext in step S718.

When the process of encoding the current symbol ranging from step S702 to step S718 is completed, which means the entropy encoder completes the encoding of the current symbol in only one stage, the entropy encoder 350 increases an encoding index i by 1 in step S720. Next, the entropy 350 checks whether or not all the symbols are completely encoded in the current stage in step S722. If there are symbols left to be encoded in the current stage, the entropy encoder 350 performs steps S702 through S722 again.

When all the symbols in one stage are completely encoded, the entropy encoder 350 checks based on the flag bDone if the encoding of all stages is completed, in step S724. If bDone is true, the entropy encoder 350 completes the whole encoding process in the current stage and starts to encode the next component, and if not, the entropy encoder 350 performs steps S700 through S722 again to encode the remaining symbols.

FIG. 9B is a diagram illustrating a process of encoding a plurality of symbols using the SQ AAC function. Specifically, FIG. 9B shows a process of encoding 0, 1, 2, 3, 4, and 9 using the SQ AAC function.

Referring to FIG. 6B again, if the apparatus for encoding data according to the present invention generates a bitstream by entropy-encoding all input key value data, the key value header encoder 360 encodes information required for decoding the encoded key value data into key value header information, adds the key value header information to the bitstream, and outputs the resulting bitstream in step S730.

The key value header encoder 360 encodes the number and digit number of input key value data to be encoded and the quantization bit size of the key value data. Next, the key value header encoder 360 identifies if each of the x, y, and z components has the same quantized values (for example, even though the key value data of each of the x, y, and z components vary, the quantized key value data of the x component have the same value because the degree to which the key value data of the x component vary is very small) and encodes the result into a flag.

For example, if the quantized values of the x component are not the same, whether a circular DPCM operation or a predictive-circular DPCM operation has been used to encode the key value data of the x component and whether the key value data of the x component will be encoded using the unary AAC function or the SQ AAC function are encoded into flags. If the key value data of the x component is not expected to be encoded using the unary AAC function, the encoding bit size of the x component and the start index of x component to be entropy-encoded is encoded into a key value header.

Likewise, if the key value data of each of the y and z components are not the same, header information of the y and z components, which exactly corresponds to the aforementioned header information of the x component is encoded into a header.

If the quantized values of the x component are not the same, the unary AAC function is not used to encode the key value data of the x component, and the start index of x component to be entropy-encoded is 1, then the first quantized key value datum is encoded as an intra datum. In the same manner, the first quantized key value datum of each of the y and z components is encoded as an intra datum.

The key value header encoder 360 identifies which component among the x, y, and z components has a maximum range. If the x component has a maximum range, the key value header encoder 360 sets up a variable nWhichAxis at 0. If the component y has a maximum range, the key value header encoder 360 sets up nWhichAxis at 1. If the component z has a maximum range, the key value header encoder 360 sets up nWhichAxis at 2. Thereafter, the key value header encoder 360 encodes nWhichAxis, x_min, y_min, z_min, and max into a key header using the floating-point number encoder 330.

Hereinafter, an example of computer programs into which a method for encoding data according to a second embodiment of the present invention is realized will be described.

The apparatus for encoding data according to the present invention encodes a position interpolator into a bitstream, which will be described in the following. For better understanding, conventional program codes and variables will be described in the following in the form of SDL language.

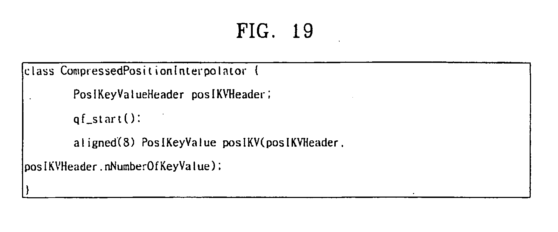

FIG. 19 shows an example of program codes into which a compressed position interpolator is realized. In FIG. 19, a top class for reading a bitstream of a compressed position interpolator is shown. The first class includes PosIKey-ValueHeader and PosIKeyValue. PosIKeyValueHeader includes header information for decoding PosIKeyValue, and class PosIKeyValue reads key value data regarding the compressed position interpolator from the bitstream. A function qf_start( ) is used to initialize an arithmetic decoder before reading part of the bitstream which is AAC-encoded.

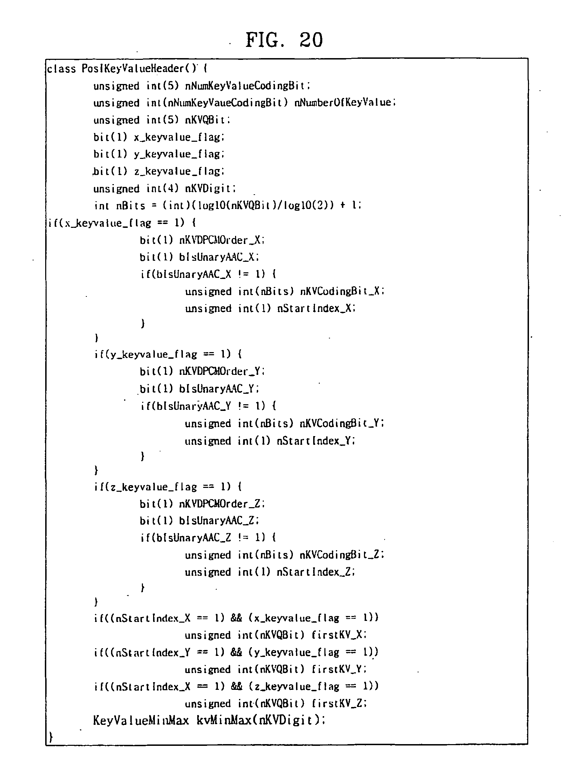

FIG. 20 shows program codes of PosIKeyValueHeader. Referring to FIG. 20, among variables stored in PosIKey-ValueHeader, nNumKeyValueCodingBit represents the bit size of nNumberOfKeyValue, nNumberOfKeyValue represents the number of key value data, and nKVQBit represents the quantization bit size of the key value data.

x_keyvalue_flag, y_keyvalue_flag, and z_keyvalue_flag indicate if the x, y, and z components has the same quantized value and nKVDigit represents a maximum number of most significant digits of each of the key value data. nKVDPCMOrder_X, nKVDPCMOrder_Y, and nKVDPCMOrder_Z correspond to the order of DPCM used for the key value data of each of the x, y, and z components, respectively. If DPCM has been performed, a flag is set to 0, and if predictive DPCM has been performed, the flag is set to 1.

bIsUnaryAAC_X, bIsUnaryAAC_Y, and bIsUnaryAAC_Z each indicate that an unary AAC function has been used during entropy-encoding. nKVCodingBit_X, nKVCodingBit_Y, and nKVCodingBit_Z indicate the encoding bit size for the x, y, and z components, respectively. nStartIndex_X, nStartIndex_Y, and nStartIndex_Z represent the start index of each component axis to be encoded. firstKV_X, firstKV_Y, and firstKV_Z represent a first quantized key value datum of each of the x, y, and z components, respectively, which are encoded as intra data.

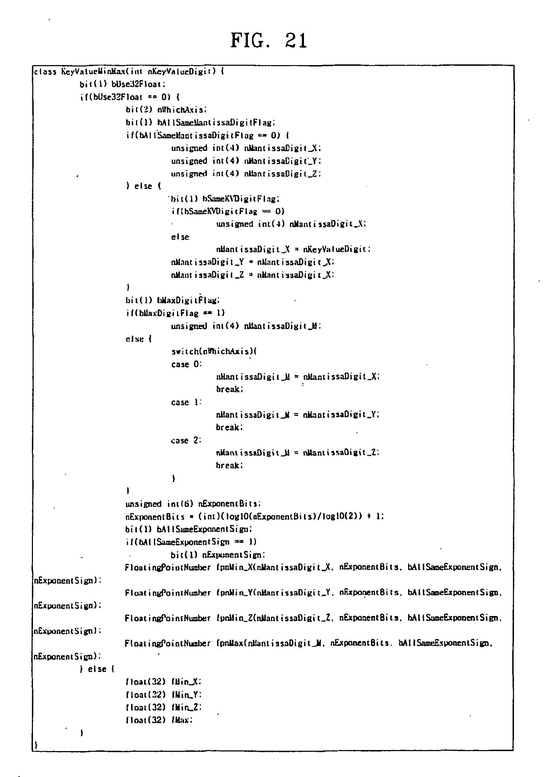

FIG. 21 shows program codes of class KeyValueMinMax. Referring to FIG. 21, class KeyValueMin retrieves the maximum and minimum values that have been used for normalization of key value data. bUse32float indicates whether or not a 32-bit floating-point number has been used to store the maximum and minimum values. If bUse32Float is 0, the maximum and minimum values for normalization of key value data are encoded using IEEE Standard 754 floating-point number format. If not, the maximum and minimum values for normalization of key value data are encoded using the floating-point number encoder.

nWhichAxis represents a component having a maximum range among the x, y, and z components. In the present embodiment, if nWhichAxis is 0, the X-axis has a maximum range, if nWhichAxis is 1, the Y-axis has a maximum range, and if nWhichAxis is 2, the Z-axis has a maximum range.

bAllSameMantissaDigitFlag indicates whether or not the mantissas of minimum values among the key value data of each of the x, y, and z components have the same digit number, and bSameKVDigitFlag represents the digit number of the mantissas of the minimum values is the same as nKVDigit. nMantissaDigit_X, nMantissaDigit_Y, and nMantissaDigit_Z represent the digit number of the mantissas of the minimum values among the key value data of each of the x, y, and z components, respectively.

bMaxDigitFlag indicates whether or not the mantissa of a maximum value has the same digit number as a minimum value of component, from which the maximum value max comes. If the digit number of the mantissa of the maximum value is different from the digit number of the mantissa of the minimum value, the digit number of the mantissa of the maximum value is read from the bitstream.

nMantissaDigit_M represents the digit number of the mantissa of the maximum value, and nExponentBits represents the number of bits required for encoding the maximum absolute exponent among the exponent of the maximum and minimum values. bAllSameExponentSign indicates whether or not the signs of the x, y, and z components are the same, and nExponentSign represents the sign of an exponent when bAllSameExponentSign is true.

fpnMin_X, fpnMin_Y, fpnMin_Z, and fpnMax represent floating-point numbers in the decimal system which are decoded. A method of decoding fpnMin_X, fpnMin_Y, fpmMin_Z, and fpnMax will be described later with FloatingPoint-Number. fMin_X, fMin_Y, and fMin_Z represent a minimum value among the key value of each of the x, y, and z components, and fMax represents a maximum value among the key value data of the component having the maximum range.

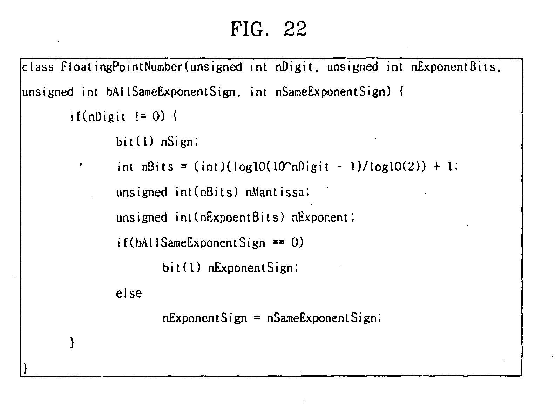

Program codes of class FloatingPointNumber will be described in the following with reference to FIG. 22. Class FloatingPointNumber expresses floating-point numbers using the decimal system. nMantissa represents the mantissa of a floating-point number in the decimal system, and nExponent represents the exponent of the floating-point number.

nSign represents the sign of a floating-point number, and nExponentSign represents the sign of the exponent of the floating-point number.

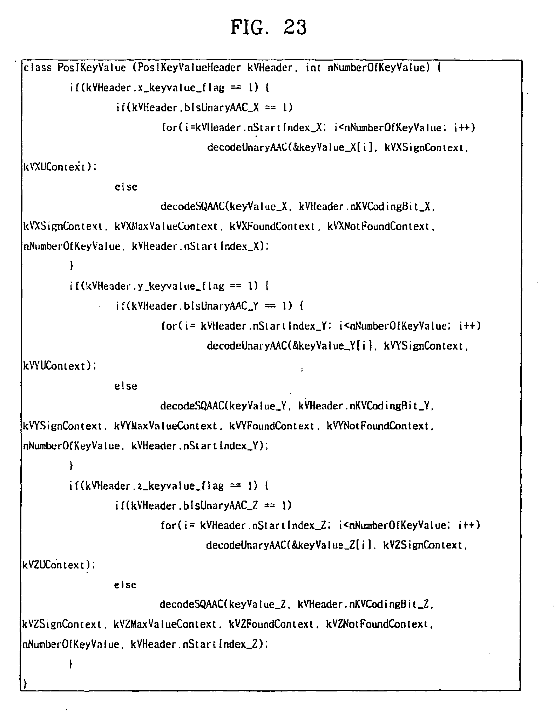

Program codes of class PosIKeyValue will be described in the following with reference to FIG. 23. Referring to FIG. 23, among variables stored in class PoslKeyValue, keyValue_X, keyValue_Y, and keyValue_Z represent an array of the key value data of each of the x, y, and z components, respectively, in a position interpolator. If nStartIndex_X is set to 0, keyValue_X[0] is decoded from a bitstream using an arithmetic decoder. If nStartIndex_X is set to 1, keyValue_X[0] is decoded from the key value header decoder. In the same manner, keyValue_Y[0] and keyValue_Z[0] are determined. When arithmetically decoding keyValue_X[0], keyValue_Y[0], and keyValue_Z[0] from the bitstream, a decodeUnaryAAC or decodeSQAAC function is used.

Context models kVXSignContext, kVYSignContext, and kVZSignContext are used to decode the signs of keyValue_X, keyValue_Y, and keyValue_Z, respectively. The context models kVXSignContext, kVYSignContext, and kVZSignContext are transmitted to the decodeUnaryAAC or decodeSQAAC function.

MaxValueContext, FoundContext, and NotFoundContext are used to entropy-decode the absolute values of key values. For example, kVXMaxValueContext, kVXFoundContext, and kVXNotFoundContext are used to decode keyValue_X. MaxValueContext, FoundContext, and NotFoundContext are transmitted to the decodeUnaryAAC or decodeSQAAC function.

Context models kVXUContext, kVYUContext, and kVZUContext are used to decode keyValue_X, keyValue_Y, and keyValue_Z and are transmitted to the decodeUnaryAAC function.

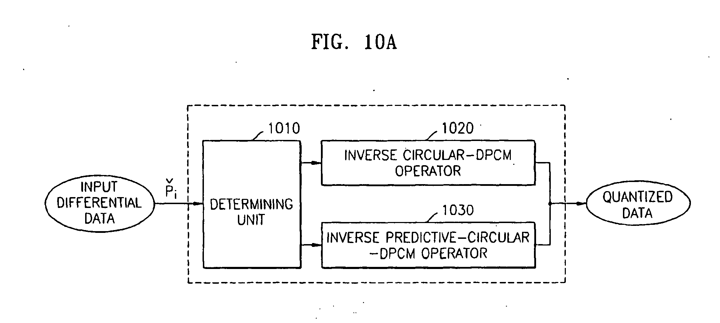

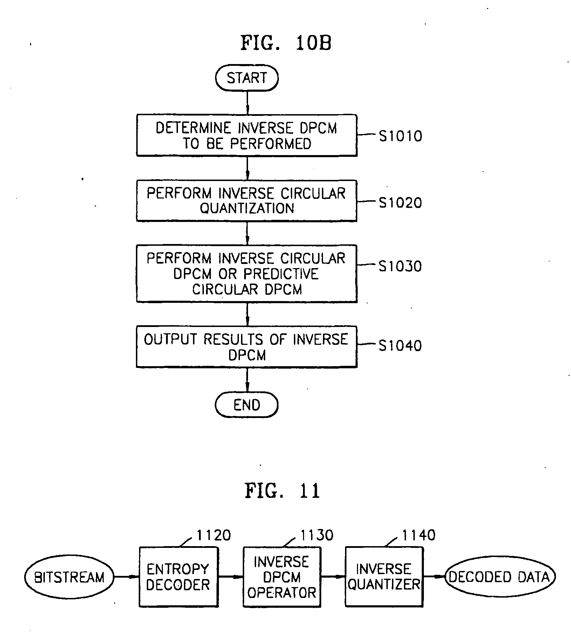

Hereinafter, an inverse DPCM operator, which outputs quantized data by restoring differential data generated by the aforementioned DPCM operator, will be described with reference to FIGS. 10A and 10B.

FIG. 10A is a block diagram of an inverse DPCM operator according to the present invention, and FIG. 10B is a flowchart of an inverse DPCM operation.

Referring to FIG. 10A, an inverse DPCM operator according to the present invention includes an inverse circular DPCM operator 1020, which performs an inverse circular quantization operation on differential data input thereinto so as to extend their range, performs an inverse DPCM operation on the input differential data, and then outputs quantized data, an inverse predictive-circular DPCM operator 1030 which performs an inverse circular quantization operation on differential data input thereinto so as to extend their range, performs an inverse predictive DPCM operation on the input differential data, and then outputs quantized data, and a determining unit 1010 which outputs differential data to either the inverse circular DPCM operator 1020 or the inverse predictive-circular DPCM operator 1030 depending on the kind of DPCM that has been performed on the differential data.

An inverse DPCM operation will be described in the following with reference to FIG. 10B. Referring to FIGS. 10A and 10B, differential data subjected to an inverse DPCM operation are input into the determining unit 1010. Then the determining unit 1010 identifies what kind of DPCM has been performed on the input differential data, determines what kind of inverse DPCM will be performed on the input differential data based on the result, and outputs the differential data to either the inverse circular DPCM operator 1020 or the inverse predictive-circular DPCM operator 1030 in step S1010.

If the differential data are input into the inverse circular DPCM operator 1020 and nMax is a maximum value in a quantization range of the input differential data, the inverse circular DPCM operator 1020 obtains quantized differential data $\breve{P}'_i$ in step S1020 by performing inverse circular quantization on the input differential data $\breve{P}_i$, which is shown in the following equation.

$$\breve{P}'_i = \breve{P}_i - (nMax + 1) \qquad (if\ \breve{P}_i \geq 0) \quad \cdots (11)$$
$$\breve{P}'_i = \breve{P}_i + (nMax + 1) \qquad (if\ \breve{P}_i < 0)$$

Thereafter, the inverse circular DPCM operator 1020 obtains a value A of an inverse-DPCMed differential datum and a value B of an inverse-DPCMed differential datum by substituting input differential data $\breve{P}_i$ and inversely circular-quantized differential data $\breve{P}'_i$, respectively, obtained from Equation (11) into Equation (12).

$$A = \breve{P}_i + \widetilde{P}_{i-1} \quad \cdots (12)$$
$$B = \breve{P}'_i + \widetilde{P}_{i-1}$$

In Equation (12), n represents the number of data, and i represents an integer between 1 and n - 1.

If A is not smaller than 0 and not greater than nMax, the inverse circular DPCM operator 1020 outputs A as inverse circular-DPCMed data $\tilde{P}_i$. If A is smaller than 0 or greater than nMax, the inverse circular DPCM operator 1020 outputs B in step S1040.

The inverse predictive-circular DPCM operator 1030 obtains the inversely circular-quantized predicted differential data $\tilde{P}_i$ in step S1020 by performing inverse circular quantization on the predicted differential data $\tilde{P}_i$ using Equation (11).

If P=2 x $\tilde{P}_{i-1}$ + $\tilde{P}_{i-2}$ where P represents predicted data used for decoding, the inverse circular DPCM operator 1030 calculates A by substituting $\tilde{P}_i$ into Equation (13) and calculates B by substituting $\check{P}'_i$ into Equation (14).

$$
\begin{aligned}
A &= nMax - \check{P}_i & (if\ P > nMax) &\quad \cdots (13)\\
A &= \check{P}_i & (if\ P < 0)\\
A &= \check{P}_i + P & (otherwise)
\end{aligned}
$$

$$
\begin{aligned}
B &= nMax - \check{P}'_i & (if\ P > nMax) &\quad \cdots (14)\\
B &= \check{P}'_i & (if\ P < 0)\\
B &= \check{P}'_i + P & (otherwise)
\end{aligned}
$$

In Equations (13) and (14), n represents the number of data and i is an integer between 1 and n - 1.

If A is not smaller than 0 and not greater than nMax, the inverse circular DPCM operator 1020 outputs A as the inversely predictive-circular-DPCMed data $\tilde{P}_i$. If A is smaller than 0 or greater than nMax, the inverse predictive-circular DPCM operator 1020 outputs B as $\tilde{P}_i$ in step S1040.

Hereinafter, an apparatus for decoding data not part of the present invention will be described with reference to FIG. 11. The apparatus for decoding data not part of the present invention decodes a bitstream, into which input data have been encoded using the apparatus for encoding data according to tFIG. 3A, using the DPCM operator according to the present invention.

Referring to FIG. 11, the apparatus for decoding data includes an entropy decoder 1120, an inverse DPCM processor 1130, which is constituted by the aforementioned inverse DPCM operator, and an inverse quantizer 1140.

The entropy decoder 1120 generates differential data by entropy-decoding an input bitstream and outputs the differential data to the inverse DPCM processor 1130.

The inverse DPCM processor 1130, as described above, identifies what kind of DPCM has been performed on the input differential data, performs an inverse circular DPCM operation or an inverse predictive-circular DPCM operation on the differential data, and outputs quantized data to the inverse quantizer 1140.

The inverse quantizer 1140 inversely quantizes the quantized data input from the inverse DPCM processor 1130 with predetermined quantization bits and outputs retrieved data.

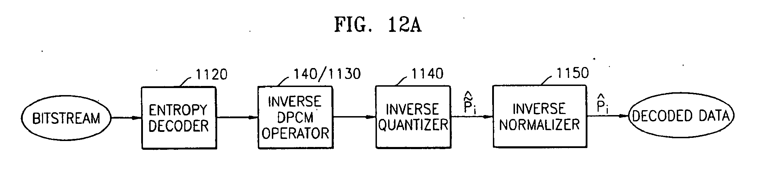

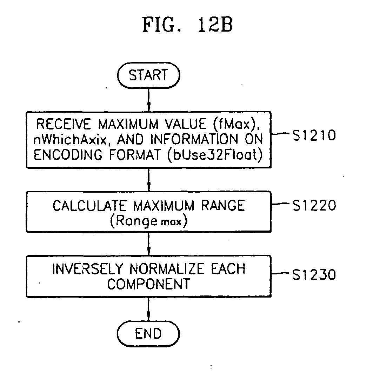

Hereinafter, an apparatus for decoding data according to a third embodiment of the present invention will be described with reference to FIGS. 12A and 12B. The apparatus for decoding data according to the third embodiment of the present invention decodes a bitstream, into which data having a plurality of components that have been normalized by the normalizer according to the present invention are encoded.

Referring to FIG. 12A, the apparatus for decoding data according to the third embodiment of the present invention includes an entropy decoder 1120 which entropy-decodes an input bitstream and thus outputs differential data, an inverse DPCM operator 140/1130 which performs an inverse DPCM operation on the differential data input from the entropy decoder 1120 and outputs quantized data, an inverse quantizer 1140 which inversely quantizes the quantized data input from the inverse DPCM operator 140/1130 and outputs normalized data, and an inverse normalizer 1150 which receives minimum among key value data of each component and a maximum value of a component having the maximum range, calculates a maximum range of normalized data, and inversely normalizes the quantized data input from the inverse quantizer 1140 based on the maximum range.

The operations and structures of the entropy decoder 1120, the inverse DPCM operator 140/1130, and the inverse quantizer 1140 are the same as the operations and structures of the corresponding elements of the apparatus for decoding data according to FIG. 11, and thus their description will not be repeated here. The operation of the inverse normalizer 1150 will be described in the following with reference to FIG. 12B.

The inverse normalizer 1150 receives the maximum value fMax used for normalization, which is decoded from the input bitstream, the minimum values fMin_X, fMin_Y, and fMin_Z of the x, y, and z components, respectively, the information nWhichAxis on which component axis has a maximum value, and the information bUse32Float on the type of encoding in step S1210.

The inverse normalizer 1150 identifies based on bUse32Float whether or not fMax, fMin_X, fMin_Y, and fMin_Z are encoded with IEEE Standard 754 floating-point number format, and if they are not, the inverse normalizer 1150 calculates a maximum value $Range_{max}$ in a maximum range using the following equations. If fMax, fMin_X, fMin_Y, and fMin_Z are encoded with 32 bits, the inverse normalizer 1150 determines fMax as $Range_{max}$ in step S1220.

$$Range_{max} = fMax - fMin\_X \quad (if\ nWhichAxis = 0) \quad \cdots(15)$$
$$Range_{max} = fMax - fMin\_Y \quad (if\ nWhichAxis = 1)$$
$$Range_{max} = fMax - fMin\_Z \quad (if\ nWhichAxis = 2)$$

If $Range_{max}$ is determined, the inverse normalizer 1150 inversely normalizes the data of each of the x, y, and z components based on $Range_{max}$ using the following equations in step S1230.

$$\hat{P}_{i,x} = \hat{\tilde{P}}_{i,x} \times Range_{max} + fMin\_X \quad \cdots(16)$$
$$\hat{P}_{i,y} = \hat{\tilde{P}}_{i,y} \times Range_{max} + fMin\_Y$$
$$\hat{P}_{i,z} = \hat{\tilde{P}}_{i,z} \times Range_{max} + fMin\_Z \quad (i = 0, 1, ..., n)$$

In Equation (16), n represents the number of data.

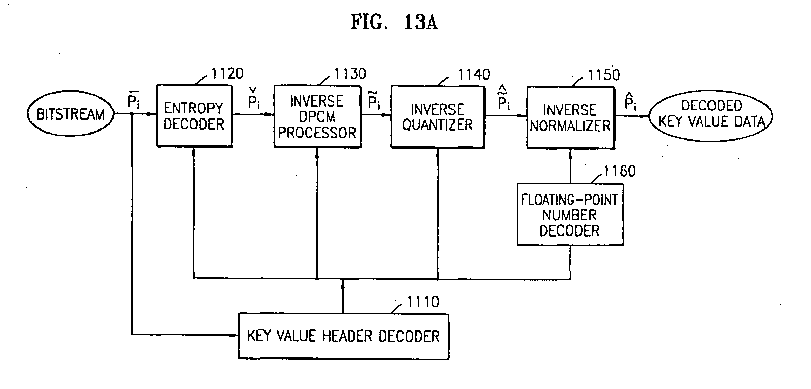

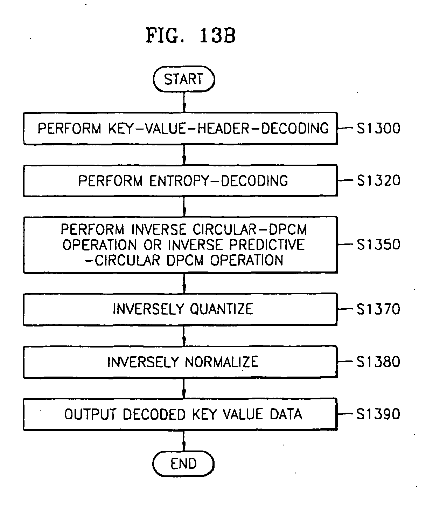

Hereinafter, an apparatus and a method for decoding data according to a fourth embodiment of the present invention will be described with reference to FIGS. 13A and 13B. The apparatus for decoding data according to the fourth embodiment of the present invention decodes a bitstream, into which key value data of a position interpolator representing the location of an object in a three-dimensional animation have been encoded using the method for encoding data according to the present invention.

Referring to FIG. 13A, the apparatus for decoding data according to the fourth embodiment of the present invention includes a key value header decoder 1110, which decodes information required for decoding from a bitstream, an entropy decoder 1120, which entropy decodes the bitstream input thereinto and thus outputs differential data, an inverse DPCM processor 1130, which performs an inverse circular DPCM operation or an inverse predictive-circular DPCM operation on the differential data input from the entropy decoder 1120 and thus outputs quantized key value data, an inverse quantizer 1140, which inversely quantizes the quantized key value data input from the inverse DPCM processor 1130 and thus outputs normalized key value data, a floating-point number decoder 1160, which receives minimum and maximum values from the key value header decoder 1110, converts minimum values among the key value data of each of the x, y, and z components and the maximum value of a component having the maximum range, into binary numbers, and outputs the binary numbers, and an inverse normalizer 1150, which receives the minimum values among the key value data of each of the x, y, and z components and a maximum value of a component having the maximum range, from the floating-point number decoder 1160, calculates the maximum range from the minimum values and the maximum value from the floating-point number decoder 1160 and then inversely normalizes the key value data input from the inverse quantizer 1140.

Hereinafter, a method for decoding data according to a fourth embodiment of the present invention will be described with reference to FIG. 13B. Referring to FIG. 13B, a bit stream of encoded key value data are input into the entropy decoder 1120 and the key value header decoder 1110. Then, the key value header decoder 1110 decodes header information required for decoding from the bitstream and outputs the decoded header information to the entropy decoder 1120, the inverse DPCM processor 1130, and the inverse quantizer 1140 in step S1300.

The entropy decoder 1120 entropy-decodes the bitstream and then outputs differential data to the inverse DPCM processor 1130 in step S1320.

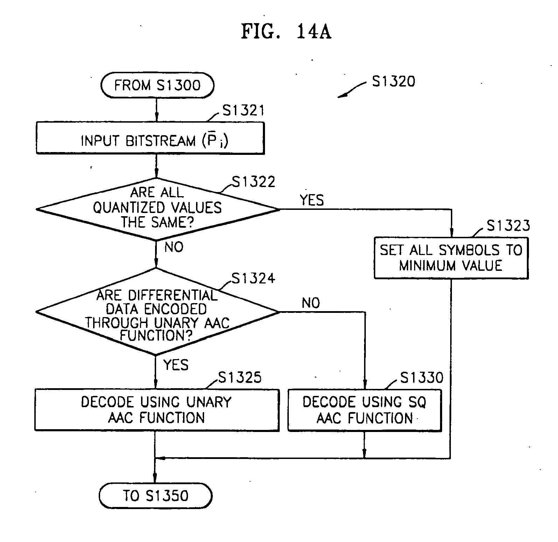

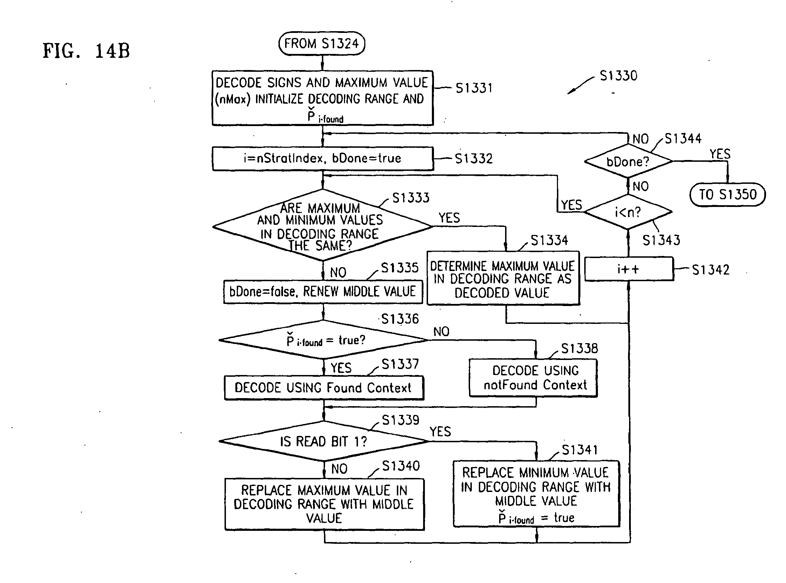

FIG. 14A is a detailed flowchart of step S1320. Referring to FIG. 14A, a bitstream $\overline{P}_i$ is input into the entropy decoder 1120 in step S1321. FIG. 15 is diagram showing the sequence of encoded key value data which are input into the entropy decoder 1120 and are subjected to entropy-decoding.

The entropy decoder 1120 checks if key value data of a component, for example, x, have the same quantized value in step S1322. If the key value data of the component have the same quantized value, all symbols of the component are decoded setting them as a minimum value input from the key value header decoder 1110, for example, fMin_X, in step S1323.

If the key value data of the component do not have the same quantized value, the entropy decoder 1120 checks if the key value data have been encoded using an unary AAC function, in step S1324. If the key value data have been encoded using an unary AAC function, they are decoded using the unary AAC function in step S1325.

The unary AAC function reads 0s from the bitstream until a bit "1" appears, converts the number of 0s into an absolute value, reads a bit next to the bit "1" as the sign of value if the bit is "0", the sign of value is positive, if the bit is "1", the sign of value is negative, and outputs a decoded value.

If the key value data of the component have not been encoded using the unary AAC function, the entropy decoder 1120 decodes the bitstream, into which the key value data of the component are encoded, using an SQ AAC function, which will be described in the following.

The entropy decoder 1120 decodes the signs of all the symbols from the bitstream, decodes the maximum value nMax, and initializes the decoding range of all the symbols (ranging from 0 to nMax) and the flag $\breve{P}_{i \cdot found}$ as 'false' in step S1331.

Thereafter, the entropy decoder 1120 determines a key value datum to be decoded first (i = nStartIndex) and sets bDone as 'true' in step S1332.

The entropy decoder 1120 performs steps S1333 through S1343 again to decode the symbols.

In particular, the entropy decoder 1120 checks if the maximum value $\breve{P}_{i \cdot max}$ and the minimum value $\breve{P}_{i \cdot min}$ in the decoding range are the same in step S1333.

If $\breve{P}_{i \cdot max}$ and $\breve{P}_{i \cdot min}$ are the same, the symbol to be encoded is determined as a maximum value (or a minimum value) in the decoding range in step S1334, and if not, the entropy decoder 1120 sets bDone as 'false' and renews a middle value nMid in the decoding range following Equation (17) in step S1335.

$$nMid = \frac{\breve{P}_{i \cdot max} + \breve{P}_{i \cdot min}}{2} + \breve{P}_{i \cdot min} + 1 \quad \cdots (17)$$

The entropy decoder 1120 checks if the context flag $\breve{P}_{i \cdot found}$ is true in order to determine a probability model for decoding, in step S1336. If the context flag $\breve{P}_{i \cdot found}$ is true, the entropy decoder 1120 decodes the bitstream using FoundContext in step S1337, and if not, the entropy decoder 1120 decodes the bitstream using notFoundContext in step S1338.

The entropy decoder 1120, which has decoded one bit from the bitstream, checks if the bit read from the bitstream is 1 in step S1339, and if not, the entropy decoder 1120 replaces the maximum value $\breve{P}_{i \cdot max}$ in the decoding range with the middle value nMid in step S1340. If the bit decoded from the bitstream is 1, the entropy decoder 1120 replaces the minimum value $\breve{P}_{i \cdot min}$ in the decoding range with the middle value nMid and sets the context flag $\breve{P}_{i \cdot found}$ as 'true' in step S1341.

The entropy decoder 1120 increases the decoding index i by 1 in step S1342, checks if all the key value data of the component are completely decoded in the current stage in step S1343, and performs steps S1333 through S1342 if there are symbols left to be decoded in the current stage.

If all the key value data of the current stage have been decoded, the entropy decoder 1120 checks if additional stage is needed to decode key value data of the current components in step S1344 and if so, performs steps S1332 through S1343 again. The entropy decoder checks if all key value data of the current component have been decoded, the entropy decoder starts to decode the key value data of the next component.

Referring to FIGS. 13A and 13B, differential data of the key value data decoded by the entropy decoder 1120 are input into the inverse DPCM processor 130, and then the inverse DPCM processor 1130 performs an inverse circular DPCM operation or an inverse predictive-circular DPCM operation on the input differential data depending on the type of DPCM performed. The inverse circular DPCM operation and the predictive-circular DPCM operation are the same as the operation of the aforementioned inverse DPCM operator except that they are performed on the key value data of each of the x, y, and z components, separately.

The inverse DPCM processor 1130 outputs quantized key value data $\tilde{P}_{i,j}$ generated by an inverse DPCM operation to the inverse quantizer 1140, and then the inverse quantizer 1140 inversely quantizes $\tilde{P}_{i,j}$ using the quantization bits nKeyValueQBits input from the key value header decoder 1110 in step S1370. When n represents the number of key value data input from the key value header decoder 110, the inverse quantization performed in the inverse quantizer 1140 can be expressed by the following equation.

$$\hat{P}_{ij} = \frac{\tilde{P}_{ij}}{(2^{nKeyValueQBits} - 1)} \qquad (i = nStartIndex, ..., n; \ j = x, y, z) \qquad \cdots (18)$$

The inverse quantizer 1140 generates normalized data by performing inverse quantization on the key value data of each of the x, y, and z components and outputs the normalized key value data of each of the x, y, and z components to the inverse normalizer 1150.

The inverse normalizer 1150 inverse normalizes the normalized key value data input from the inverse quantizer 1140 using the information input from the floating-point number decoder 1160.

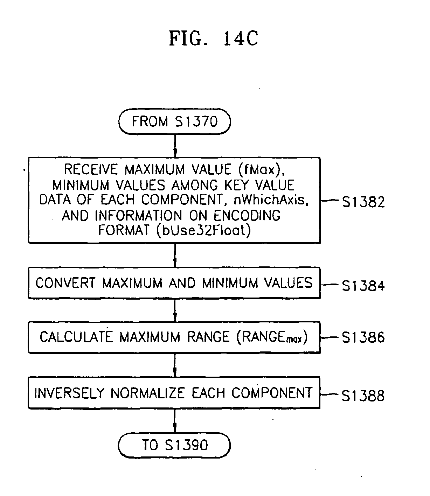

Hereinafter, the inverse normalization of the normalized key value data of each of the x, y, and z components will be described with reference to FIG. 14C.

The floating-point number decoder 1160 receives the information bUse32Float and checks if bUse32Float is true. If bUse32Float is true, the floating-point number decoder receives the maximum value fMax used for inverse normalization, the minimum values fMin_X, fMin_Y, and fMin_Z among the key value data of each of the x, y, and z components with IEEE Standard 754 floating-point number format, if not, the floating-point number decoder receives the maximum value fMax used for inverse normalization, the minimum values fMin_X, fMin_Y, and fMin_Z among the key value data of each of the x, y, and z components, and receives the information nWhichAxis on which component the maximum value fMax belongs to in step S1382.

The floating-point number decoder 1160 converts fMax, fMin_X, fMin_Y, and fMin_Z which are represented in the decimal system into binary numbers following Equation (9) and outputs the converted values to the inverse normalizer 1150 in step S1384.

The inverse normalizer 1150 checks based on bUse32Float if fMax, fMin_X, fMin_Y, and fMin_Z have been encoded into 32 bits. If fMax, fMin_X, fMin_Y, and fMin_Z have been encoded into 32 bits, the inverse normalizer 1150 determines fMax as Range$_{max}$ and if not, the inverse normalizer and calculates the maximum value Range$_{max}$ in the maximum range following Equation (15) in step S1386.

If Range$_{max}$ is determined, the inverse normalizer 1150 inversely normalizes the key value data of each of the x, y, and z components based on Range$_{max}$, following Equation (16) in step S1388.

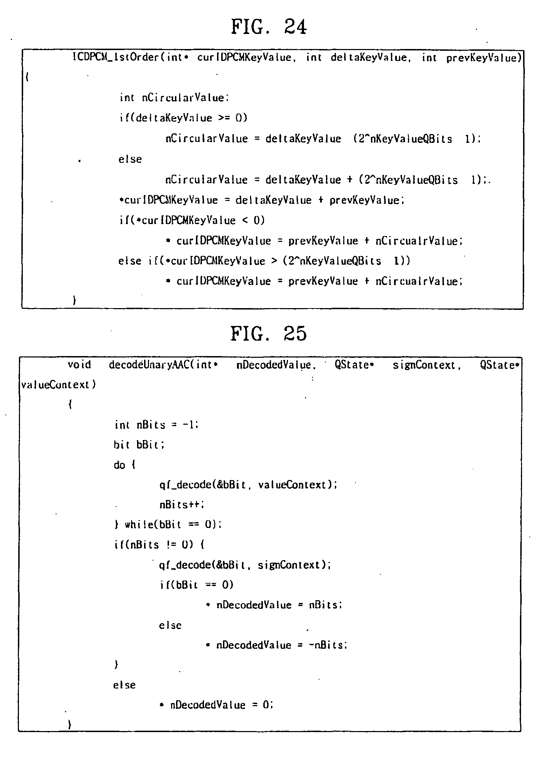

Examples of program codes, by which the operation of the apparatus for decoding data according to the fourth embodiment of the present invention are realized, are shown in FIGS. 24 through 27.

FIG. 24 shows an example of C++ program codes, into which an inverse circular DPCM operation is realized, and FIG. 25 shows an example of C++ program codes, by which an inverse predictive-circular DPCM operation is realized.

The inverse circular DPCM operation and the inverse predictive-circular DPCM operation all include an inverse circular quantization routine for selecting a certain value in a quantization range.

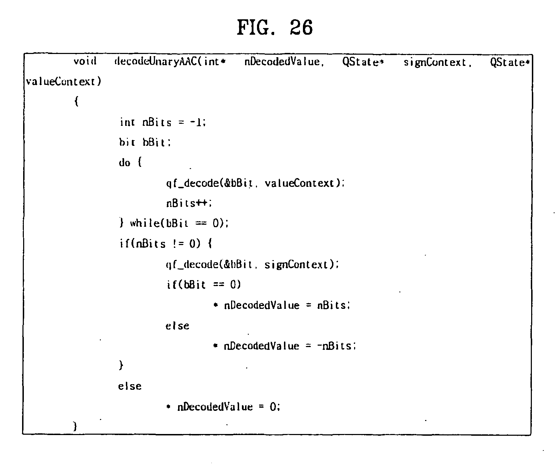

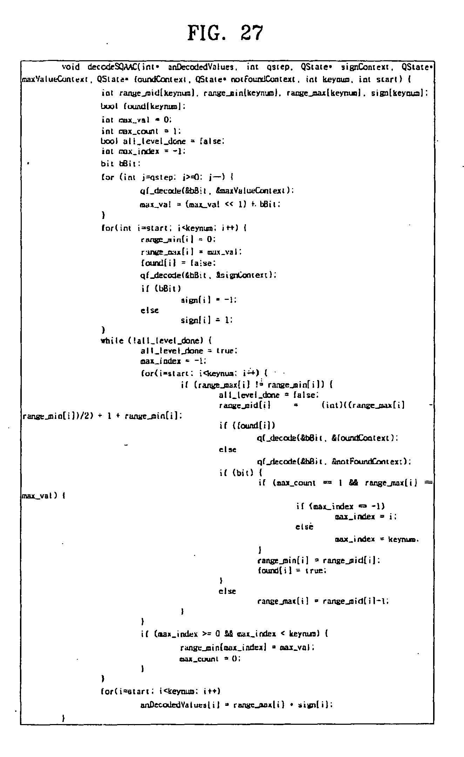

Examples of C++ program codes, by which the operation of an entropy decoder (adaptive arithmetic decoder) is realized, are shown in FIGS. 26 and 27. Here, qf_decode() represents a function for reading one bit from a bitstream.

The present invention can be realized as computer-readable codes written on a computer-readable recording medium. Here, the computer-readable recording medium includes any kind of recording medium which can be read by a computer system. For example, the computer-readable recording medium may be a ROM, a RAM, a CD-ROM, a magnetic tape, a floppy disk, an optical data storage, and carrier wave (transmission through the Internet). The computer-readable recording medium can be transmitted to computer systems connected via a network, and a computer can read the recording medium in a decentralized way.

As described above, the DPCM operator according to the present invention and its operation can considerably reduce the size of differential data by performing a predictive DPCM operation and a circular quantization operation as well as a conventional DPCM operation. In addition, it is possible to dramatically enhance the efficiency of encoding data by encoding data using the DPCM operation according to the present invention.

In addition, it is possible to enhance the efficiency of encoding data by normalizing data having a plurality of components based on one of the x, y, and z components using the normalizer of the present invention so as to decrease the size of the data.

Moreover, it is possible to encode and decode key value data of a position interpolator with a higher compression rate by performing a circular quantization operation after performing a DPCM operation and a predictive DPCM operation and thus reducing the range of differential data to be encoded.

While this invention has been particularly shown and described with reference to preferred embodiments thereof, it will be understood by those skilled in the art that various changes in form and details may be made therein without departing from the scope of the invention as defined by the appended claims.

## Claims

1. An apparatus for encoding data representing the position of an object with x, y, z components, the apparatus comprising:

   a normalizer (300) which is arranged to calculate a maximum range among data ranges of the components and to normalize the data of each of the components based on the maximum range;
   a quantizer (310) which is arranged to quantize the normalized data with predetermined quantization bits;
   a DPCM operator (340) which is arranged to perform a DPCM operation on the quantized data and then to output differential data; and
   an entropy encoder (350) which is arranged to entropy-encode the differential data and to output a bitstream, into which the differential data are encoded.

2. The apparatus of claim 1, wherein the normalizer (310) is arranged to calculate maximum and minimum values among the data of each of the components, to obtain the maximum range among data ranges of the components using the maximum and minimum values of the components, and to normalize the data of each of the components based on the maximum range.

3. An apparatus for encoding data according to claim 1 for encoding key value data of a position interpolator representing the position of an object with x, y, and z components,
   wherein the normalizer (300) is arranged to calculate a maximum range among data ranges of the components, to normalize the key value data of each of the x, y, and z components based on the maximum range, and to output normalized key value data;
   wherein the quantizer (310) is arranged to quantize the normalized key value data with predetermined quantization bits;
   further comprising a floating-point number encoder (330) which is arranged to receive minimum values among the key value data of each of the x, y, and z components, a maximum range among data ranges of the components from the normalizer, to calculate the maximum value of a component having the maximum range, and to convert the maximum value and the minimum values into decimal numbers;
   wherein the DPCM processor (340) is arranged to obtain differential data and predicted differential data of the quantized key value data and to perform a circular quantization operation on the differential data using the assumption that the maximum value and minimum value in the quantization range between maximum and minimum values are circularly connected to each other so that differential data greater than half the maximum value in the quantization range have their values reduced by subtracting the maximum value from the differential data so as to reduce the range of differential data;
   wherein the entropy encoder (350) is arranged to entropy-encode the differential data and then to output a bitstream, into which the key value data are encoded; and
   further comprising a key value header encoder (360) which is arranged to encode information required for decoding the bitstream to be included in the bitstream.

4. The apparatus of claim 3 further comprising a quantization error minimizer (320) which is arranged to adjust minimum and maximum values among the input key value data of each of the x, y, and z components so as to minimize a quantization error and to output the adjusted maximum and minimum values to the floating-point number encoder.

5. The apparatus of claim 3 or 4, wherein the floating-point number encoder (330) is arranged to encode the mantissas and exponents of the minimum values among the key value data of each of the x, y, and z components and the mantissa and exponent of the maximum value of a component having the maximum range by converting binary numbers input thereinto into decimal numbers consisting of their mantissas and exponents and to output the encoded values to the key value header encoder.

6. The apparatus of claim 5, wherein the floating-point number encoder (330) is arranged to output at least one out of the digit numbers of the minimum values among the key value data of each of the x, y, and z components, the digit number of the maximum value of a component having the maximum range, the one having the greatest absolute value among the exponents of the minimum values among the key value data of each of the x, y, and z components and the maximum value of the component having the maximum range, the signs of the greatest absolute exponents of the minimum values among the key value data of each of the x, y, and z components and the exponent of the maximum value of the component having the maximum range, and the digit numbers are output to the bitstream if necessary.

7. The apparatus of any of claims 3 to 6, wherein the DPCM processor comprises:

   a circular DPCM operator (210) which is arranged to generate differential data by performing a DPCM operation on the quantized data and to generate and output circular-quantized differential data by performing a circular quantization operation on the differential data so as to reduce their range;
   a predictive-circular DPCM operator (240) which is arranged to generate predicted differential data by performing a predictive DPCM operation on the quantized data and to generate and output circular-quantized predicted differential data by performing a circular quantization operation on the predicted differential data so as to reduce their range; and
   a selector (260) which is arranged to select the circular-quantized differential data or the predicted differential data depending on the number of bits required for encoding.

8. The apparatus of claim 7, wherein in the circular quantization operation, the differential data having a reduced size are generated by performing a predetermined operation on the differential data and the maximum value in the quantization range.

9. The apparatus of claim 8, wherein in the circular quantization operation, circular-quantized differential data are obtained by subtracting the maximum value in the quantization range from the differential data if differential data are not smaller than a predetermined reference value and, if not, adding the differential data to the maximum value in the quantization range and the ones having a smaller size between the differential data and the circular-quantized differential data are finally output as circular-quantized differential data.

10. The apparatus of any of claims 7 to 9, wherein in the predictive DPCM operation, the differences between data $\tilde{P}_i$ currently being quantized and predicted data, and the predicted data are generated by performing a predetermined operation on quantized data $\tilde{P}_{i-1}$ having been input into the predictive-circular DPCM operator prior to $\tilde{P}_i$.

11. The apparatus of claim 10, wherein in the predictive DPCM operation, the predicted data are generated by performing a predetermined operation on $\tilde{P}_{i-1}$ and data $\tilde{P}_{i-2}$ which has been quantized prior to $\tilde{P}_{i-1}$.

12. The apparatus of any of claims 3 to 11, wherein the entropy encoder (350) is arranged to encode differential data by representing a series of first figures representing the magnitude of the differential data and a bit of a second figure indicating an end of the series of the first figures.

13. The apparatus of any of claims 3 to 12, wherein if the differential data to be encoded belong to an upper part of an encoding range, the entropy encoder (350) is arranged to encode the series of the first figures and to renew a value of a lower part of the encoding range, and if the differential data to be encoded belong to the lower part of the encoding range, to encode the second figure and renew a value of the upper part of the encoding range.

14. The apparatus of claim 13, wherein the entropy encoder (350) is arranged to calculate a middle value in the encoding range and to renew the upper and lower parts of the encoding range with the middle value.

15. The apparatus of claims 13 or 14, wherein the entropy encoder (350) is arranged to convert the differential data to be encoded to have the same sign, to determine the encoding range by identifying a maximum value among the differential data, and to perform the encoding of the differential data until the value of the upper part of the encoding range is equal to the value of the lower part of the encoding range.

16. An apparatus for decoding data, which decodes a bitstream into which data having x, y and z component representing the position of an object are encoded, the apparatus comprising:

an entropy decoder (1120) which is arranged to entropy-decode a bitstream input thereinto and outputs differential data;

an inverse DPCM operator (1130) which is arranged to perform an inverse DPCM operation on the differential data and to output quantized data;

an inverse quantizer (1140) which is arranged to inversely quantize the quantized data and to output normalized data; and

an inverse normalizer (1150) which is arranged to receive minimum values among data of each component and a maximum value of a component having the maximum range, to obtain a maximum range of the normalized data, and to inversely normalize the normalized data based on the maximum range.

17. The apparatus of claim 16, wherein the inverse normalizer (1150) is arranged to inversely normalize the normalized data input thereinto using the maximum range and minimum values of the component to which the normalized data belong.

18. The apparatus of claim 16 or 17, wherein the inverse normalizer (1150) is arranged to inversely normalize the normalized data input thereinto by multiplying the normalized data by the maximum range and adding the minimum value of the component, to which the normalized data belong, to the results of the multiplication.

19. An apparatus for decoding data according to claim 16, which decodes a bitstream into which key value data of a position interpolator representing the position of an object using x, y, and z components are encoded,

further comprising a key value header decoder (1110) which is arranged to decode information required for decoding from the bitstream;

wherein the inverse DPCM processor (1130) is arranged to perform an inverse circular DPCM operation or an inverse predictive-circular DPCM operation on the differential data depending on the type of DPCM performed on the differential data and thus outputs quantized key value data;

further comprising a floating-point number decoder (1160) which is arranged to receive minimum values among the input key value data of each of the x, y, and z components and a maximum value of a component having the maximum range from the key value header decoder, to convert the minimum and maximum values into binary numbers, outputs the binary numbers to the inverse normalizer; and

wherein the inverse normalizer (1150) is arranged to receive the minimum values among the key value data of each of the x, y, and z components and a maximum value of a component having the maximum range from the floating-point number decoder, to obtain a maximum range of the normalized data using the minimum values and the maximum value and inversely normalizes the key value data of the x, y, and z components;

wherein if nMax is a maximum value in a quantization range of the input differential data, the inverse circular DPCM processor obtains quantized differential data $\tilde{P}'_i$ from the input differential data $\tilde{P}_i$ using:

$$\tilde{P}'_i = \tilde{P}_i - (nMax + 1) \qquad (if \ \tilde{P}_i \geq 0) \quad \cdots (11)$$
$$\tilde{P}'_i = \tilde{P}_i + (nMax + 1) \qquad (if P\breve{}_i < 0)$$

for inverse circular DPCM, calculating A and B using:

$$A = \tilde{P}_i + \widetilde{P}_{i-1} \quad \cdots (12)$$
$$B = \tilde{P}'_i + \widetilde{P}_{i-1}$$

where n represents the number of data, and i represents an integer between 1 and n-1, and

if A is not smaller than 0 and not greater than nMax, outputting A as inverse circular-DPCMed data $\tilde{P}_i$, and if A is smaller than 0 or greater than nMax outputting 0,

and for inverse predictive circular DPCM calculating A and B using

$$A = nMax - \check{P}_i \qquad (if P > nMax) \quad \cdots(13)$$
$$A = \check{P}_i \qquad (if P < 0)$$
$$A = \check{P}_i + P \qquad (otherwise)$$

$$B = nMax - \check{P'}_i \qquad (if P > nMax) \quad \cdots(14)$$
$$B = \check{P'}_i \qquad (if P < 0)$$
$$B = \check{P'}_i + P \qquad (otherwise)$$

where n represents the number of data and i is an integer between 1 and n - 1; and
if A is not smaller than 0 and not greater than nmax, outputting A as the inversely predictive-circular-DPCMed data $\tilde{P}_i$, if A is smaller than 0 or greater than nMax, outputting B as $\tilde{P}_i$.

20. The apparatus of claim 19, wherein if the key value data of one of the x, y, and z components have the same quantized value, the entropy decoder (1120) is arranged to decode all the key value data of the component into the minimum value among the input key value data of the component.

21. The apparatus of claim 19 or 20, wherein the entropy decoder (1120) is arranged to decode the differential data by continuously reading a second figure from the bitstream until a first figure comes from the bitstream, converting the number of second figures into a magnitude, and reading a bit next to the first figure so as to decode a sign.

22. The apparatus of any of claims 19 to 21, wherein the entropy decoder (1120) is arranged to set up a decoding range by decoding a maximum value among encoded differential data from the bitstream, to renew maximum and minimum values in the decoding range using the values read from the bitstream, and to output the maximum value in the decoding range into a decoded symbol when the maximum value in the decoding range is the same as the minimum value in the decoding range.

23. The apparatus of claim 22, wherein the entropy decoder (1120) is arranged to calculate a middle value in the decoding range by performing a predetermined operation, to renew the maximum value in the decoding range with the middle value if a bit read from the bitstream is the first figure, and to renew the minimum value in the decoding range with the middle value if the bit read from the bitstream is as the second figure.

24. The apparatus of any of claims 19 to 23, wherein the inverse DPCM processor comprises:

an inverse circular DPCM operator (1020) which is arranged to perform an inverse circular quantization operation on differential data input thereinto, to perform an inverse DPCM operation on the inversely circular-quantized differential data, and then to output quantized key value data;
an inverse predictive-circular DPCM operator (1030) which is arranged to perform an inverse circular quantization operation on differential data input thereinto, to perform an inverse predictive DPCM operation on the inversely circular-quantized differential data, and then to output quantized key value data; and
a determining unit (1010) which is arranged to output differential data to either the inverse circular DPCM operator or the inverse predictive-circular DPCM operator depending on the information input from the key value header decoder,
wherein in the inverse circular quantization operation, the inversely circular-quantized differential data are generated by performing a predetermined operation on the input differential data and a maximum value in the range of the quantized data.

25. A method for encoding data which encodes data having x, y and z components representing the position of an object, the method comprising:

(a) calculating a maximum range among data ranges of the components and normalizing the data of each of the components based on the maximum range;

(b) quantizing the normalized data with predetermined quantization bits;
(c) generating differential data by performing a DPCM operation on the quantized data; and
(d) generating a bitstream, into which data are encoded, by entropy-encoding the differential data.

26. The method of claim 25, wherein step (a) comprises:

(a1) calculating maximum and minimum values among the data of each of the components
(a2) calculating the data ranges of the components and the maximum range among the data ranges of the components using the maximum and minimum values; and
(a3) normalizing the data of each of the components based on the maximum range.

27. A method according to claim 25 for encoding data which encodes key value data of a position interpolator representing the position of an object with x, y, and z components,
wherein step (a) comprises calculating a maximum range among data ranges of components, normalizing the key value data of each of the x, y, and z components based on the maximum range, and thus generating (S610) normalized key value data;
step (b) comprises quantizing the normalized key value data (S620) with predetermined quantization bits;
further comprising step (c) converting minimum values (S630) among the input key value data of each of the x, y, and z components and a maximum value among all the key value data of the x, y, and z components used in step (a) into decimal numbers;

(d) obtaining differential data and predicted differential data (S670) of the quantized key value data and performing a circular quantization operation on the differential data and the predicted differential data using the assumption that the maximum value and minimum data in the quantization range between maximum and minimum values are circularly connected to each other so that differential data greater than half the maximum value in the quantization range have their values reduced by subtracting the maximum value from the differential data so as to reduce their ranges;

wherein step (e) comprises generating a bitstream, into which the key value data are encoded, by entropy-encoding (S680) the differential data; and
further comprising (f) encoding (S730) information required for decoding the bitstream to be included in the bitstream.

28. The method of claim 27 further comprising adjusting (S630) the maximum and minimum values among the input key value data of each of the components using the input key value data and the quantized key value data so as to minimize a quantization error, between step (b) and step (c).

29. The method of claim 27 or 28, wherein in step (c), the mantissas and exponents of the minimum values among the key value data of each of the x, y, and z components and the mantissa and exponent of the maximum value of a component having the maximum range are encoded as a key value header by converting binary numbers into decimal numbers each consisting of a mantissa and an exponent.

30. The method of any of claims 27 to 29, wherein step (d) comprises:

(d1) generating differential data by performing a DPCM operation on the quantized key value data and generating predicted differential data by performing a predictive DPCM operation on the quantized key value data;
(d2) generating circular-quantized differential data and circular-quantized predicted differential data by performing a circular quantization operation on the differential data and the predicted differential data so as to reduce their ranges; and
(d3) selecting either the circular-quantized differential data or the circular-quantized predicted differential data depending on their magnitudes.

31. The method of claim 30, wherein in the circular quantization operation in step (d2), the differential data having a reduced size are generated by performing a predetermined operation on the differential data and the maximum value in the quantization range.

32. The method of claim 30 or 31, wherein in the predictive DPCM operation in step (d1), the differences between data currently being quantized and predicted data, and the predicted data are generated by performing a predetermined operation on quantized data, on which predetermined operations have been performed in step (a) prior to the data currently being quantized.

33. The method of any of claims 27 to 32, wherein in step (e), the differential data are encoded by representing a series of first figures representing the magnitude of the differential data and a bit of a second figure indicating an end of the series of the first figures.

34. The method of any of claims 27 to 32, wherein in step (e), if the differential data to be encoded belong to an upper part of an encoding range, the first figure is encoded and a value of a lower part of the encoding range is renewed, and if the differential data to be encoded belong to the lower part of the encoding range, the second figure is encoded and a value of the upper part of the encoding range is renewed.

35. The method of claim 34, wherein in step (e), a middle value in the encoding range is calculated, and the upper and lower parts of the encoding range are renewed using the middle value.

36. A computer-readable recording medium where the method of any of claims 27 to 35 is recorded in computer-readable program codes.

37. A method for decoding data, which decodes a bitstream into which data having x, y and z components represented the position of an object are encoded, the method comprising:

generating differential data by entropy-decoding an input bitstream;
generating quantized data by performing an inverse DPCM operation on the differential data;
generating normalized data by inversely quantizing the quantized data; and
obtaining a maximum range of the normalized data using minimum values among data of each component and a maximum value of a component having the maximum range, which are decoded from the bitstream, and inversely normalizing the normalized data based on the maximum range.

38. The method of claim 37, wherein in the step of obtaining a maximum range, the normalized data are inversely normalized using the maximum range and a minimum value of the component to which the normalized data belong.

39. A method for decoding data according to claim 37, which decodes a bitstream into which key value data of a position interpolator representing the position of an object using x, y, and z components are encoded, the method comprising:

(a) decoding (S1300) header information required for decoding from the bitstream;
(b) the step of generating differential data by entropy-decoding the bitstream (S1320);
(c) the step of generating quantized key value data (S1350) by performing an inverse circular DPCM operation and an inverse predictive-circular DPCM operation on the differential data;
further comprising (d) converting minimum and maximum values among the quantized key value data of each of the x, y, and z components, which have been decoded in step (a), into binary numbers and converting minimum values among the key value data of each of the x, y, and z components and a maximum value among all the key value data of the x, y, and z components into binary numbers;
(e) the step of generating normalized key value data by inversely quantizing the quantized key value data is based on the minimum and maximum values among the quantized key value data, which have been converted in step (d); and
further comprising (f) inversely normalizing the key value data based on the minimum values among the key value data of each of the x, y, and z components and a maximum value of a component having the maximum range, which have been converted in step (d);
wherein if nMax is a maximum value in a quantization range of the input differential data, the inverse circular DPCM processor obtains quantized differential data $\breve{P}'_i$ from the input differential data $\breve{P}_i$ using:

$$\breve{P}'_i = \breve{P}_i - (nMax + 1) \qquad (if \ \breve{P}_i \geq 0) \quad \cdots (11)$$
$$\breve{P}'_i = \breve{P}_i + (nMax + 1) \qquad (if P\breve{\phantom{}}_i < 0)$$

for inverse circular DPCM, calculating A and B using:

$$A = \breve{P}_i + \widetilde{P}_{i-1} \quad \cdots(12)$$
$$B = \breve{P}'_i + \widetilde{P}_{i-1}$$

where n represents the number of data, and i represents an integer between 1 and n -1, and
if A is not smaller than 0 and not greater than nMax, outputting A as inverse circular-DPCMed data $\tilde{P}_i$, and if A is smaller than 0 or greater than nMax outputting 0,
and for inverse predictive circular DPCM calculating A and B using

$$A = nMax - \breve{P}_i \quad (ifP > nMax) \quad \cdots(13)$$
$$A = \breve{P}_i \quad (ifP < 0)$$
$$A = \breve{P}_i + P \quad (otherwise)$$

$$B = nMax - \breve{P}'_i \quad (ifP > nMax) \quad \cdots(14)$$
$$B = \breve{P}'_i \quad (ifP < 0)$$
$$B = \breve{P}'_i + P \quad (otherwise)$$

where n represents the number of data and i is an integer between 1 and n - 1; and
if A is not smaller than 0 and not greater than nMax, outputting A as the inversely predictive-circular-DPCMed data $\tilde{P}_i$, if A is smaller than 0 or greater than nmax, outputting B as $\tilde{P}_i$.

40. The method of claim 39, wherein in step (b), if the key value data of one of the x, y, and z components have the same quantized value, all the key value data of the component are decoded into the minimum value among the quantized key value data of the component, which has been decoded in step (a).

41. The method of claim 39, wherein in step (b), the differential data are decoded by continuously reading a second figure from the bitstream until a first figure comes from the bitstream, converting the number of second figures into a magnitude, and reading a bit next to the first figure so as to encode a sign.

42. The method of claim 39, wherein step (b) comprises:

(b1) setting up a decoding range by decoding a maximum value among encoded differential data; and
(b2) renewing a maximum or a minimum value in the decoding range based on a value read from the bitstream and determining a maximum value in a renewed decoding range as decoded differential data when the maximum value in the renewed decoding range is equal to a minimum value in the renewed decoding range.

43. The method of claim 42, wherein in step (b2), a middle value in the decoding range is calculated by performing a predetermined operation, the maximum range in the decoding range is renewed with the middle value if the bit read from the bitstream is a first figure, and the minimum value is renewed with the middle value if the bit read from the bitstream is a second figure.

44. The method of any of claims 39 to 43, wherein step (c) comprises:

(c1) identifying the kind of DPCM which has been performed on decoded differential data;
(c2) performing an inverse circular quantization operation on the differential data so as to extend their range; and
(c3) generating quantized data by performing an inverse circular DPCM operation on the inversely circular-quantized differential data if a DPCM operation has been performed on the differential data and performing an inverse predictive-circular DPCM operation on the inversely circular-quantized differential data if a predictive DPCM operation has been performed on the differential data,
wherein the inversely circular-quantized differential data are generated by performing a predetermined operation on the differential data and a maximum value in a quantization range of the quantized data.

**45.** A computer program comprising computer program code means for performing all of the steps of any of claims 25-44 when said program is run on a computer.

**46.** A computer program as claimed in claim 45 embodied on a computer readable medium.

**47.** A bitstream, into which key value data of a position interpolator representing the location of an object using x, y, and z components are encoded, the bitstream comprising:

normalization information which includes a flag representing a component having a maximum range of key value data among the x, y, and z components, a maximum value of a component having the maximum range, and minimum values among the key value data of each of the x, y, and z components;
quantization information which includes quantization bits used for quantizing key value data normalized based on the normalization information;
DPCM operation information which indicates what kind of DPCM operation between a circular DPCM operation (200) and a predictive-circular DPCM operation (230) has been performed on key value data quantized using the quantization bits;
entropy encoding information which indicates what kind of entropy encoding operation has been performed on differential data generated by the DPCM operation indicated by the DPCM operation information; and
encoded key value data; wherein the circular DPCM operation (200) comprises a DPCM operation (210) followed by circular (220), the predictive-circular DPCM (230) comprises a predictive DPCM operation (240) followed by circular quantization (250), and the circular quantization uses the assumption that the maximum value and minimum value in the quantization range between maximum and minimum values are circularly connected to each other so that differential data greater than half the maximum value in the quantization range have their values reduced by subtracting the maximum value from the differential data.

**48.** The bitstream of claim 47, further comprising the number of key value data encoded thereinto and a maximum number of effective digits of the key value data.

**49.** The bitstream of claim 47 or 48, further comprising minimum values and maximum values among the key value data of each of the x, y, and z components, which are used for minimizing an error among the quantized key value data.

## Patentansprüche

**1.** Vorrichtung zum Codieren von Daten, die die Position eines Objekts darstellen, mit Komponenten x, y, z, wobei die Vorrichtung folgendes umfasst:

einen Normalisierer (300), der ausgelegt ist zum Berechnen eines größten Bereichs aus Datenbereichen der Komponenten und zum Normalisieren der Daten jeder der Komponenten auf der Basis des größten Bereichs;
einen Quantisierer (310), der ausgelegt ist zum Quantisieren der normalisierten Daten mit vorbestimmten Quantisierungsbits;
einen DPCM-Operator (340), der ausgelegt ist zum Durchführen einer DPCM-Operation an den quantisierten Daten und dann zum Ausgeben von Differenzdaten; und
einen Entropiecodierer (350), der ausgelegt ist zur Entropiecodierung der Differenzdaten und zum Ausgeben eines Bitstroms, in den die Differenzdaten codiert sind.

**2.** Vorrichtung nach Anspruch 1, wobei der Normalisierer (310[1]) ausgelegt ist zum Berechnen von größten und kleinsten Werten aus den Daten jeder der Komponenten zum Erhalten des größten Bereichs aus Datenbereichen der Komponenten unter Verwendung der größten und kleinsten Werte der Komponenten und zum Normalisieren der Daten jeder der Komponenten auf der Basis des größten Bereichs.
[1]Die Referenz des Normalisierers ist 300, die des Quantifizierers 310. Sollte geprüft werden.

**3.** Vorrichtung zum Codieren von Daten nach Anspruch 1 zum Codieren von Schlüsselwertdaten eines Positionsinterpolators, der die Position eines Objekts darstellt, mit Komponenten x, y und z,

wobei der Normalisierer (300) ausgelegt ist zum Berechnen eines größten Bereichs aus Datenbereichen der Komponenten zum Normalisieren der Schlüsselwertdaten jeder der Komponenten x, y und z auf der Basis des größten Bereichs und zum Ausgeben normalisierter Schlüsselwertdaten;

wobei der Quantisierer (310) ausgelegt ist zum Quantisieren der normalisierten Schlüsselwertdaten mit vorbestimmten Quantisierungsbits;

weiterhin umfassend einen Fließkommazahlencodierer (330), der ausgelegt ist zum Empfangen kleinster Werte aus den Schlüsselwertdaten jeder der Komponenten x, y und z, eines größten Bereichs aus Datenbereichen der Komponenten von dem Normalisierer, zum Berechnen des größten Werts einer Komponente mit dem größten Bereich und zum Umwandeln des größten Werts und der kleinsten Werte in Dezimalzahlen;

wobei der die DPCM-Prozessor (340) ausgelegt ist zum Erhalten von Differenzdaten und vorhergesagten Differenzdaten der quantisierten Schlüsselwertdaten und zum Durchführen einer zirkulären Quantisierungsoperation an den Differenzdaten unter Verwendung der Annahme, dass der größte Wert und die kleinsten Werte in dem Quantisierungsbereich zwischen größten und kleinsten Werten zirkulär miteinander verbunden sind, so dass die Werte von Differenzdaten größer als die Hälfte des größten Werts in dem Quantisierungsbereich durch Subtrahieren des größten Werts von den Differenzdaten reduziert werden, um den Bereich von Differenzdaten zu reduzieren;

wobei der Entropiecodierer (350) ausgelegt ist zur Entropiecodierung der Differenzdaten und dann zum Ausgeben eines Bitstroms, in den die Schlüsselwertdaten codiert sind; und

weiterhin umfassend einen Schlüsselwert-Header-Codierer (360), der ausgelegt ist zum Codieren von Informationen, die erforderlich sind zum Decodieren des Bitstroms zur Aufnahme in den Bitstrom.

4. Vorrichtung nach Anspruch 3, die weiterhin einen Quantisierungsfehlerminimierer (320) umfasst, der ausgelegt ist zum Ändern der kleinsten und größten Werte aus den eingegebenen Schlüsselwertdaten jeder der Komponenten x, y und z, um einen Quantisierungsfehler zu minimieren und die geänderten größten und kleinsten Werte an den Fließkommazahlencodierer auszugeben.

5. Vorrichtung nach Anspruch 3 oder 4, wobei der Fließkommazahlencodierer (330) ausgelegt ist zum Codieren der Mantissen und Exponenten der kleinsten Werte aus den Schlüsselwertdaten jeder der Komponenten x, y und z und der Matisse und des Exponenten des größten Werts einer Komponente mit dem größten Bereich durch Umwandeln von darin eingegebenen Binärzahlen in Dezimalzahlen, die aus ihren Mantissen und Exponenten bestehen, und zum Ausgeben der codierten Werte zu dem Schlüsselwert-Header-Codierer.

6. Vorrichtung nach Anspruch 5, wobei der Fließkommazahlencodierer (330) ausgelegt ist zum Ausgeben mindestens einer der Stellenanzahlen der kleinsten Werte aus den Schlüsselwertdaten jeder der Komponenten x, y und z, der Stellenanzahl des größten Werts einer Komponente mit dem größten Bereich, derjenigen mit dem größten Betrag aus den Exponenten der kleinsten Werte aus den Schlüsselwertdaten jeder der Komponenten x, y und z und des größten Werts der Komponente mit dem größten Bereich, der Vorzeichen der größten absoluten Exponenten der kleinsten Werte aus den Schlüsselwertdaten jeder der Komponenten x, y und z und des Exponenten des größten Werts der Komponente mit dem größten Bereich, und die Stellenanzahlen an den Bitstrom ausgegeben werden, falls notwendig.

7. Vorrichtung nach einem der Ansprüche 3 bis 6, wobei der DPCM-Prozessor folgendes umfasst:

einen zirkulären DPCM-Operator (210), der ausgelegt ist zum Generieren von Differenzdaten durch Durchführen einer DPCM-Operation an den quantisierten Daten und zum Generieren und Ausgeben von zirkulär-quantisierten Differenzdaten durch Durchführen einer zirkulären Quantisierungsoperation an den Differenzdaten, um ihren Bereich zu reduzieren;

einen prädiktiv-zirkulären DPCM-Operator (240), der ausgelegt ist zum Generieren vorhergesagter Differenzdaten durch Durchführen einer prädiktiven DPCM-Operation an den quantisierten Daten und zum Generieren und Ausgeben von zirkulär-quantisierten vorhergesagten Differenzdaten durch Durchführen einer zirkulären Quantisierungsoperation an den vorhergesagten Differenzdaten, um ihren Bereich zu reduzieren; und

einen Wähler (260), der ausgelegt ist zum Wählen der zirkulär-quantisierten Differenzdaten oder der vorhergesagten Differenzdaten je nach der für das Codieren erforderlichen Anzahl von Bits.

8. Vorrichtung nach Anspruch 7, wobei bei der zirkulären Quantisierungsoperation die Differenzdaten mit einer reduzierten Größe generiert werden durch Durchführen einer vorbestimmten Operation an den Differenzdaten und dem größten Wert in dem Quantisierungsbereich.

9. Vorrichtung nach Anspruch 8, wobei bei der zirkulären Quantisierungsoperation zirkulär-quantisierte Differenzdaten erhalten werden durch Subtrahieren des größten Werts in dem Quantisierungsbereich von den Differenzdaten, falls Differenzdaten nicht kleiner sind als ein vorbestimmter Referenzwert, anderenfalls durch Addieren der Differenzdaten zu dem größten Wert in dem Quantisierungsbereich, und die mit einer kleineren Größe zwischen den Differenzdaten und den zirkulär-quantisierten Differenzdaten schließlich als zirkulär-quantisierte Differenzdaten ausgegeben werden.

10. Vorrichtung nach einem der Ansprüche 7 bis 9, wobei bei der prädiktiven DPCM-Operation die Differenzen zwischen gegenwärtig quantisierten Daten $\tilde{P}_i$ und vorhergesagten Daten und den vorhergesagten Daten generiert werden durch Durchführen einer vorbestimmten Operation an quantisierten Daten $\tilde{P}_{i-1}$, die vor $\tilde{P}_i$ in den prädiktiv-zirkulären DPCM-Operator eingegeben worden sind.

11. Vorrichtung nach Anspruch 10, wobei bei der prädiktiven DPCM-Operation die vorhergesagten Daten generiert werden durch Durchführen einer vorbestimmten Operation an $\tilde{P}_{i-1}$ und Daten $\tilde{P}_{i-2}$, die vor $\tilde{P}_{i-1}$ quantisiert worden sind.

12. Vorrichtung nach einem der Ansprüche 3 bis 11, wobei der Entropiecodierer (350) ausgelegt ist zum Codieren von Differenzdaten durch Darstellen einer Serie von ersten Ziffern, die die Größe der Differenzdaten darstellen, und einem Bit einer zweiten Ziffer, das ein Ende der Serie der ersten Ziffern anzeigt.

13. Vorrichtung nach einem der Ansprüche 3 bis 12, wobei, falls die zu codierenden Differenzdaten zu einem oberen Teil eines Codierbereichs gehören, der Entropiecodierer (350) ausgelegt ist zum Codieren der Serie der ersten Ziffern und zum Erneuern eines Werts eines unteren Teils des Codierbereichs, und falls die zu codierenden Differenzdaten zu dem unteren Teil des Codierbereichs gehören, zum Codieren der zweiten Ziffer und zum Erneuern eines Werts des oberen Teils des Codierbereichs.

14. Vorrichtung nach Anspruch 13, wobei der Entropiecodierer (350) ausgelegt ist zum Berechnen eines Mittelwerts in dem Codierbereich und zum Erneuern des oberen und unteren Teils des Codierbereichs mit dem Mittelwert.

15. Vorrichtung nach den Ansprüchen 13 oder 14, wobei der Entropiecodierer (350) ausgelegt ist zum Umwandeln der zu codierenden Differenzdaten, damit sie dasselbe Vorzeichen aufweisen, zum Bestimmen des Codierbereichs durch Identifizieren eines größten Werts aus den Differenzdaten und zum Durchführen der Codierung der Differenzdaten, bis der Wert des oberen Teils des Codierbereichs gleich dem Wert des unteren Teils des Codierbereichs ist.

16. Vorrichtung zum Codieren von Daten, die einen Bitstrom decodiert, in den Daten mit Komponenten x, y und z, die die Position eines Objekts darstellen, codiert sind, wobei die Vorrichtung folgendes umfasst:

einen Entropiecodierer (1120), der ausgelegt ist zur Entropiedecodierung eines darin eingegebenen Bitstroms und Differenzdaten ausgibt;
einen inversen DPCM-Operator (1130), der ausgelegt ist zum Durchführen einer inversen DPCM-Operation an den Differenzdaten und zum Ausgeben quantisierter Daten;
einen inversen Quantisierer (1140), der ausgelegt ist zum inversen Quantisieren der quantisierten Daten und zum Ausgeben normalisierter Daten; und
einen inversen Normalisierer (1150), der ausgelegt ist zum Empfangen von kleinsten Werten aus den Daten jeder Komponente und eines größten Werts einer Komponente mit dem größten Bereich, zum Erhalten eines größten Bereichs der normalisierten Daten und zum inversen Normalisieren der normalisierten Daten auf der Basis des größten Bereichs.

17. Vorrichtung nach Anspruch 16, wobei der inverse Normalisierer (1150) ausgelegt ist zum inversen Normalisieren der darin eingegebenen normalisierten Daten unter Verwendung des größten Bereichs und der kleinsten Werte der Komponenten, zu der die normalisierten Daten gehören.

18. Vorrichtung nach Anspruch 16 oder 17, wobei der inverse Normalisierer (1150) ausgelegt ist zum inversen Normalisieren der darin eingegebenen normalisierten Daten durch Multiplizieren der normalisierten Daten mit dem größten Bereich und Addieren des kleinsten Werts der Komponente, zu der die normalisierten Daten gehören, zu den Ergebnissen der Multiplikation.

19. Vorrichtung zum Decodieren von Daten nach Anspruch 16, die einen Bitstrom decodiert, in den Schlüsselwertdaten eines Positionsinterpolators, die die Position eines Objekts unter Verwendung von Komponenten x, y und z darstellen, codiert sind,

weiterhin umfassend einen Schlüsselwert-Header-Decodierer (1110), der ausgelegt ist zum Decodieren von für das Decodieren aus dem Bitstrom erforderlichen Informationen;

wobei der inverse DPCM-Prozessor (1130) ausgelegt ist zum Durchführen einer inversen zirkulären DPCM-Operation oder einer inversen prädiktiv-zirkulären DPCM-Operation an den Differenzdaten je nach der an den Differenzdaten durchgeführten DPCM-Art und somit quantisierte Schlüsselwertdaten ausgibt;

weiterhin umfassend einen Fließkommazahlendecodierer (1160), der ausgelegt ist zum Empfangen von kleinsten Werten aus den eingegebenen Schlüsselwertdaten jeder der Komponenten x, y und z und eines größten Werts einer Komponente mit dem größten Bereich von dem Schlüsselwert-Header-Decodierer, um die kleinsten und größten Werte in Binärzahlen umzuwandeln, die Binärzahlen zu dem inversen Normalisierer ausgibt; und

wobei der inverse Normalisierer (1150) ausgelegt ist zum Empfangen der kleinsten Werte aus den Schlüsselwertdaten jeder der Komponenten x, y und z und eines größten Werts einer Komponente mit dem größten Bereich von dem Fließkommazahlendecodierer, um einen größten Bereich der normalisierten Daten unter Verwendung der kleinsten Werte und des größten Werts zu erhalten, und die Schlüsselwertdaten der Komponenten x, y und z invers normalisiert;

wobei, falls nMax ein größter Wert in einem Quantisierungsbereich der eingegebenen Differenzdaten ist, der invers-zirkuläre DPCM-Prozessor quantisierte Differenzdaten $\breve{P}'_i$ aus den eingegebenen Differenzdaten $\breve{P}_i$ erhält mit

$$\breve{P}'_i = \breve{P}_i - (nMax + 1) \qquad (if\ \breve{P}_i \geq 0) \quad \cdots (11)$$
$$\breve{P}'_i = \breve{P}_i + (nMax + 1) \qquad (if\ \breve{P}_i < 0)$$

für eine invers-zirkuläre DPCM, Berechnen von A und B unter Verwendung von

$$A = \breve{P}_i + \widetilde{P}_{i-1} \quad \cdots (12)$$
$$B = \breve{P}'_i + \widetilde{P}_{i-1}$$

wobei n die Anzahl von Daten darstellt und i eine ganze Zahl zwischen 1 und n-1 darstellt, und falls A nicht kleiner als 0 und größer als nMax ist, Ausgeben von A als invers-zirkuläre DPCM-Daten $\widetilde{P}_i$, und falls A kleiner als 0 oder größer als nMax ist, Ausgeben von 0, und

für eine invers-prädiktive zirkuläre DPCM, Berechnen von A und B unter Verwendung von

$$A = nMax - \breve{P}_i \qquad (if\ P > nMax) \quad \cdots (13)$$
$$A = \breve{P}_i \qquad (if\ P < 0)$$
$$A = \breve{P}_i + P \qquad (otherwise)$$

$$B = nMax - \breve{P}'_i \qquad (if\ P > nMax) \quad \cdots (14)$$
$$B = \breve{P}'_i \qquad (if\ P < 0)$$
$$B = \breve{P}'_i + P \qquad (otherwise)$$

wobei n die Anzahl von Daten darstellt und i eine ganze Zahl zwischen 1 und n-1 ist; und falls A nicht kleiner als 0 und nicht größer als nMax ist, Ausgeben von A als die invers-prädiktiv-zirkuläre DPCM-Daten $\widetilde{P}_i$, und falls A kleiner als 0 oder größer als nMax ist, Ausgeben von B als $\widetilde{P}_i$.

**20.** Vorrichtung nach Anspruch 19, wobei, falls die Schlüsselwertdaten eine der Komponenten x, y und z denselben quantisierten Wert aufweisen, der Entropiedecodierer (1120) ausgelegt ist zum Decodieren aller Schlüsselwertdaten der Komponente in den kleinsten Wert aus den eingegebenen Schlüsselwertdaten der Komponente.

**21.** Vorrichtung nach Anspruch 19 oder 20, wobei der Entropiedecodierer (1120) ausgelegt ist zum Decodieren der Differenzdaten durch kontinuierliches Lesen einer zweiten Ziffer aus dem Bitstrom, bis eine erste Ziffer aus dem Bitstrom kommt, wobei die Anzahl von zweiten Ziffern in eine Größe umgewandelt wird, und Lesen eines Bits neben der ersten Ziffer, um ein Vorzeichen zu decodieren.

**22.** Vorrichtung nach einem der Ansprüche 19 bis 21, wobei der Entropiedecodierer (1120) ausgelegt ist zum Errichten eines Decodierbereichs durch Decodieren eines größten Werts aus codierten Differenzdaten aus dem Bitstrom, zum Erneuern größter und kleinster Werte in dem Decodierbereich unter Verwendung der aus dem Bitstrom gelesenen Werte und zum Ausgeben des größten Werts in dem Decodierbereich in ein decodiertes Symbol, wenn der größte Wert in dem Decodierbereich derselbe ist wie der kleinste Wert in dem Decodierbereich.

**23.** Vorrichtung nach Anspruch 22, wobei der Entropiedecodierer (1120) ausgelegt ist zum Berechnen eines Werts in dem Decodierbereich durch Durchführen einer vorbestimmten Operation, zum Erneuern des größten Werts in dem Decodierbereich mit dem Mittelwert, falls ein aus dem Bitstrom gelesenes Bit die erste Ziffer ist, und zum Erneuern des kleinsten Werts in dem Decodierbereich mit dem Mittelwert, falls das aus dem Bitstrom ausgelesene Bit die zweite Ziffer ist.

**24.** Vorrichtung nach einem der Ansprüche 19 bis 23, wobei der inverse DPCM -Prozessor Folgendes umfasst:

einen inversen zirkulären DPCM-Operator (1020), der ausgelegt ist zum Durchführen einer inversen zirkulären Quantisierungsoperation an darin eingegebenen Differenzdaten, zum Durchführen einer inversen DPCM -Operation an den invers-zirkulären quantisierten Differenzdaten und dann zum Ausgeben quantisierter Schlüsselwertdaten;

einen inversen prädiktiv-zirkulären DPCM -Operator (1030), der ausgelegt ist zum Durchführen einer inversen zirkulären Quantisierungsoperation an darin eingegebenen Differenzdaten, zum Durchführen einer inversen prädiktiv in DPCM-Operation an den invers-zirkulär quantisierten Differenzdaten und dann Ausgeben quantisierter Schlüsselwertdaten; und

eine Bestimmungseinheit (1010), die ausgelegt ist zum Ausgeben von Differenzdaten entweder an den inversen zirkulären DPCM-Operator oder den inversen prädiktiv-zirkulären DPCM-Operator jeden nach den von dem Schlüsselwert-Header-Decodierer eingegebenen Informationen,

wobei bei der inversen zirkulären Quantisierungsoperation die invers-zirkulär quantisierten Differenzdaten generiert werden durch Durchführen einer vorbestimmten Operation an den eingegebenen Differenzdaten und einem größten Wert in dem Bereich der quantisierten Daten.

**25.** Verfahren zum Codieren von Daten, das Daten mit Komponenten x, y und z, die die Position eines Objekts darstellen, codiert, wobei das Verfahren Folgendes umfasst:

(a) Berechnen eines größten Bereichs aus Datenbereichen der Komponenten und Normalisieren der Daten jeder der Komponenten auf der Basis des größten Bereichs;

(b) Quantisieren der normalisierten Daten mit vorbestimmten Quantisierungsbits;

(c) Generieren von Differenzdaten durch Durchführen einer DPCM -Operation an den quantisierten Daten und

(d) Generieren eines Bitstroms, in den Daten codiert werden, durch Entropiecodierung der Differenzdaten.

**26.** Verfahren nach Anspruch 25, wobei Schritt (a) Folgendes umfasst:

(a1) Berechnen von größten und kleinsten Werten aus den Daten jeder der Komponenten

(a2) Berechnen der Datenbereiche der Komponenten und des größten Bereichs aus den Datenbereichen der Komponenten unter Verwendung der größten und kleinsten Werte und

(a3) Normalisieren der Daten jeder der Komponenten auf der Basis des größten Bereichs.

**27.** Verfahren nach Anspruch 25 zum Codieren von Daten, das Schlüsselwertdaten eines Positionsinterpolators codiert, die die Position eines Objekts mit Komponenten x, y und z darstellen,

wobei Schritt (a) das Berechnen eines größten Bereichs aus Datenbereichen von Komponenten, das Normalisieren der Schlüsselwertdaten jeder der Komponenten x, y und z auf der Basis des größten Bereichs und somit das Generieren (S610) normalisierter Schlüsselwertdaten umfasst; Schritt (b) das Quantisieren der normalisierten Schlüsselwertdaten (S620) mit vorbestimmten Quantisierungsbits umfasst;

weiterhin umfassend Schritt (c) Umwandeln von kleinsten Werten (S630) aus den eingegebenen Schlüsselwertdaten jeder der Komponenten x, y und z und eines größten Werts aus allen den Schlüsselwertdaten der Komponenten x, y und z, die in Schritt (a) verwendet werden, in Dezimalzahlen;

(d) Erhalten von Differenzdaten und vorhergesagten Differenzdaten (S670) der quantisierten Schlüsselwertdaten und Durchführen einer zirkulären Quantisierungsoperation an den Differenzdaten und den vorhergesagten Differenzdaten unter Verwendung der Annahme, dass der größte Wert und kleinste Daten in dem Quantisierungsbereich zwischen größten und kleinsten Werten zirkulär miteinander verbunden sind, so dass die Werte von Differenzdaten, die größer als die Hälfte des größten Werts in dem Quantisierungsbereich sind, reduziert werden durch Subtrahieren des größten Werts von den Differenzdaten, um so ihre Bereiche zu reduzieren;

wobei Schritt (e) das Generieren eines Bitstroms umfasst, in den die Schlüsselwertdaten codiert sind, durch Entropiecodierung (S680) der Differenzdaten; und
weiterhin umfassend (f) das Codieren (S730) von Informationen, die erforderlich sind zum Decodieren des Bitstroms zur Aufnahme in den Bitstrom.

28. Verfahren nach Anspruch 27, weiterhin umfassend das Einstellen (S630) der größten und kleinsten Werte aus den eingegebenen Schlüsselwertdaten jeder der Komponenten unter Verwendung der eingegebenen Schlüsselwertdaten und der quantisierten Schlüsselwertdaten, um zwischen Schritt (b) und Schritt (c) einen Quantisierungsfehler zu minimieren..

29. Verfahren nach Anspruch 27 oder 28, wobei in Schritt (c) die Mantissen und Exponenten der kleinsten Werte aus den Schlüsselwertdaten jeder der Komponenten x, y und z und die Mantisse und der Exponent des größten Werts einer Komponente mit dem größten Bereich als ein Schlüsselwert-Header codiert werden durch Umwandeln von Binärzahlen in Dezimalzahlen, die jeweils aus einer Mantisse und einem Exponenten bestehen.

30. Verfahren nach einem der Ansprüche 27 bis 29, wobei Schritt (d) Folgendes umfasst:

(d1) Generieren von Differenzdaten durch Durchführen einer DPCM-Operation an den quantisierten Schlüsselwertdaten und Generieren vorhergesagter Differenzdaten durch Durchführen einer prädiktiven DPCM-Operation an den quantisierten Schlüsselwertdaten;
(d2) Generieren zirkulär-quantisierter Differenzdaten und zirkulär-quantisierter vorhergesagter Differenzdaten durch Durchführen einer zirkulären Quantisierungsoperation an den Differenzdaten und den vorhergesagten Differenzdaten, um ihre Bereiche zu reduzieren; und
(d3) Wählen entweder der zirkulär-quantisierten Differenzdaten oder der zirkulär-quantisierten vorhergesagten Differenzdaten je nach ihren Größen.

31. Verfahren nach Anspruch 30, wobei bei der zirkulären Quantisierungsoperation in Schritt (d2) die Differenzdaten mit einer reduzierten Größe generiert werden durch Durchführen einer vorbestimmten Operation an den Differenzdaten und dem größten Wert in dem Quantisierungsbereich.

32. Verfahren nach Anspruch 30 oder 31, wobei bei der prädiktiven DPCM-Operation in Schritt (d1) die Differenzen zwischen gegenwärtig quantisierten Daten und vorhergesagten Daten und den vorhergesagten Daten generiert werden durch Durchführen einer vorbestimmten Operation an quantisierten Daten, an denen vorbestimmte Operationen in Schritt (a) vor den gegenwärtig quantisierten Daten durchgeführt worden sind.

33. Verfahren nach einem der Ansprüche 27 bis 32, wobei in Schritt (d) die Differenzdaten codiert werden durch Darstellen einer Serie von ersten Ziffern, die die Größe der Differenzdaten darstellen, und ein Bit einer zweiten Ziffer ein Ende der Serie der ersten Ziffern darstellt.

34. Verfahren nach einem der Ansprüche 27 bis 32, wobei in Schritt (e), falls die zu codierenden Differenzdaten zu einem oberen Teil eines Codierbereichs gehören, die erste Ziffer codiert wird und ein Wert eines unteren Teils des Codierbereichs erneuert wird, und falls die zu codierenden Differenzdaten zu dem unteren Teil des Codierbereichs gehören, die zweite Ziffer codiert wird und ein Wert des oberen Teils des Codierbereichs erneuert wird.

35. Verfahren nach Anspruch 34, wobei in Schritt (b) ein Mittelwert in dem Codierbereich berechnet wird und der obere und untere Teil des Codierbereichs unter Verwendung des Mittelwerts erneuert werden.

36. Computerlesbares Aufzeichnungsmedium, wobei das Verfahren nach einem der Ansprüche 27 bis 35 in computerlesbaren Programmcodes aufgezeichnet ist.

**37.** Verfahren zum Decodieren von Daten, das einen Bitstrom decodiert, in den Daten mit Komponenten x, y und z, die die Position eines Objekts darstellen, codiert sind, wobei das Verfahren Folgendes umfasst:

Generieren von Differenzdaten durch Entropiedecodierung eines eingegebenen Bitstroms;
Generieren quantisierter Daten durch Durchführen einer inversen DPCM-Operation an den Differenzdaten;
Generieren normalisierter Daten durch inverses Quantisieren der quantisierten Daten und Erhalten eines größten Bereichs der normalisierten Daten unter Verwendung von kleinsten Werten aus Daten jeder Komponente und eines größten Werts einer Komponente mit dem größten Bereich, die aus dem Bitstrom decodiert sind, und inverses Normalisieren der normalisierten Daten auf der Basis des größten Bereichs.

**38.** Verfahren nach Anspruch 37, wobei in dem Schritt des Erhaltens eines größten Bereichs die normalisierten Daten unter Verwendung des größten Bereichs und eines kleinsten Werts der Komponente, zu der die normalisierten Daten gehören, invers normalisiert werden.

**39.** Verfahren zum Decodieren von Daten nach Anspruch 37, das einen Bitstrom decodiert, in den Schlüsselwertdaten eines Positionsinterpolators, die die Position eines Objekts unter Verwendung von Komponenten x, y und z darstellen, codiert sind, wobei das Verfahren Folgendes umfasst:

(a) Decodieren (S1300) von Header-Informationen, die für das Decodieren aus dem Bitstrom erforderlich sind;
(b) den Schritt des Generierens von Differenzdaten durch Entropiedecodierung des Bitstroms (S1320);
(c) den Schritt des Generierens quantisierter Schlüsselwertdaten (S1350) durch Durchführen einer inversen zirkulären DPCM-Operation und einer inversen prädiktiv-zirkulären DPCM-Operation an den Differenzdaten; weiterhin umfassend (d) Umwandeln kleinster und größter Werte aus den quantisierten Schlüsselwertdaten jeder der Komponenten x, y und z, die in Schritt (a) decodiert worden sind, in Binärzahlen und Umwandeln kleinster Werte aus den Schlüsselwertdaten jeder der Komponenten x, y und z und eines größten Werts aus allen Schlüsselwertdaten der Komponenten x, y und z in Binärzahlen;
(e) der Schritt des Generierens normalisierter Schlüsselwertdaten durch inverses Quantisieren der quantisierten Schlüsselwertdaten basiert auf den kleinsten und größten Werten aus den quantisierten Schlüsselwertdaten, die in Schritt (d) umgewandelt worden sind; und
weiterhin umfassend (f) das inverse Normalisieren der Schlüsselwertdaten auf der Basis der kleinsten Werte aus den Schlüsselwertdaten jeder der Komponenten x, y und z und eines größten Werts einer Komponente mit dem größten Bereich, die in Schritt (d) umgewandelt worden sind;
wobei, falls nMax ein größter Wert in einem Quantisierungsbereich der eingegebenen Differenzdaten ist, der invers-zirkuläre DPCM-Prozessor quantisierte Differenzdaten $\breve{P}'_i$ von den eingegebenen Differenzdaten $\breve{P}_i$ erhält unter Verwendung von

$$\breve{P}'_i = \breve{P}_i - (nMax + 1) \qquad (if\ \breve{P}_i \geq 0) \quad \cdots(11)$$
$$\breve{P}'_i = \breve{P}_i + (nMax + 1) \qquad (if\ \breve{P}_i < 0)$$

für eine invers-zirkuläre DPCM, Berechnen von A und B unter Verwendung von

$$A = \breve{P}_i + \widetilde{P}_{i-1} \quad \cdots(12)$$
$$B = \breve{P}'_i + \widetilde{P}_{i-1}$$

wobei n die Anzahl von Daten darstellt und i eine ganze Zahl zwischen 1 und n-1 darstellt, und falls A nicht kleiner als 0 und größer als nMax ist, Ausgeben von A als invers-zirkuläre DPCM-Daten $\widetilde{P}_i$, und falls A kleiner als 0 oder größer als nMax ist, Ausgeben von 0, und für eine invers-prädiktive zirkuläre DPCM, Berechnen von A und B unter Verwendung von

$$A = nMax - \breve{P}_i \qquad (if \ P > nMax) \quad \cdots (13)$$
$$A = \breve{P}_i \qquad (if \ P < 0)$$
$$A = \breve{P}_i + P \qquad (otherwise)$$

$$B = nMax - \breve{P'}_i \qquad (if \ P > nMax) \quad \cdots (14)$$
$$B = \breve{P'}_i \qquad (if \ P < 0)$$
$$B = \breve{P'}_i + P \qquad (otherwise)$$

wobei n die Anzahl von Daten darstellt und i eine ganze Zahl zwischen 1 und n-1 ist; und falls A nicht kleiner als 0 und nicht größer als nMax ist, Ausgeben von A als die invers-prädiktiv-zirkuläre DPCM-Daten $\tilde{P}_i$, und falls A kleiner als 0 oder größer als nMax ist, Ausgeben von B als $\tilde{P}_i$.

**40.** Verfahren nach Anspruch 39, wobei in Schritt (b), falls die Schlüsselwertdaten einer der Komponenten x, y und z den gleichen quantisierten Wert aufweisen, alle Schlüsselwertdaten der Komponente in den kleinsten Wert aus den quantisierten Schlüsselwertdaten der Komponente, die in Schritt (a) decodiert wurden, decodiert werden.

**41.** Verfahren nach Anspruch 39, wobei in Schritt (b) die Differenzdaten decodiert werden durch kontinuierliches Lesen einer zweiten Ziffer aus dem Bitstrom, bis eine erste Ziffer aus dem Bitstrom kommt, wobei die der Anzahl von zweiten Ziffern in eine Größe umgewandelt wird, und Lesen eines Bits neben der ersten Ziffer, um ein Vorzeichen zu codieren.

**42.** Verfahren nach Anspruch 39, wobei Schritt (b) Folgendes umfasst:

(b1) Errichten eines Decodierbereich durch Decodieren eines größten Werts aus codierten Differenzdaten und
(b2) Erneuern eines größten oder eines kleinsten Werts in dem Decodierbereich auf der Basis eines aus dem Bitstrom gelesenen Werts und Bestimmen eines größten Werts in einem erneuerten Decodierbereich als decodierte Differenzdaten, wenn der größte Wert in dem erneuerten Decodierbereich gleich einem kleinsten Wert in dem erneuerten Decodierbereich ist.

**43.** Verfahren nach Anspruch 42, wobei in Schritt (b2) ein Mittelwert in dem Decodierbereich berechnet wird durch Durchführen einer vorbestimmten Operation, der größte Bereich in dem Decodierbereich mit dem Mittelwert erneuert wird, falls das aus dem Bitstrom gelesene Bit eine erste Ziffer ist, und der kleinste Wert mit dem Mittelwert erneuert wird, falls das aus dem Bitstrom gelesene Bit eine zweite Ziffer ist.

**44.** Verfahren nach einem der Ansprüche 39 bis 43, wobei Schritt (c) Folgendes umfasst:

(c1) Identifizieren der Art von DPCM, die an decodierten Differenzdaten durchgeführt worden ist;
(c2) Durchführen einer inversen zirkulären Quantisierungsoperation an den Differenzdaten, um ihren Bereich zu erweitern; und
(c3) Generieren quantisierter Daten durch Durchführen einer inversen zirkulären DPCM-Operation an den invers-zirkulär quantisierten Differenzdaten, falls eine DPCM-Operation an den Differenzdaten durchgeführt worden ist, und Durchführen einer inversen prädiktiv-zirkulären DPCM-Operation an den invers-zirkulär quantisierten Differenzdaten, falls eine prädiktive DPCM-Operation an den Differenzdaten durchgeführt worden ist, wobei die invers-zirkulär quantisierten Differenzdaten erzeugt werden durch Durchführen einer vorbestimmten Operation an den Differenzdaten und einem größten Wert in einem Quantisierungsbereich der quantisierten Daten.

**45.** Computerprogramm, das Computerprogramm-Codemittel umfasst zum Durchführen aller Schritte nach einem der Ansprüche 25 - 44, wenn das Programm auf einem Computer läuft.

**46.** Computerprogramm nach Anspruch 45, das sich auf einem computerlesbaren Medium befindet.

**47.** Bitstrom, in den Schlüsselwertdaten eines Positionsinterpolators, die den Ort eines Objekts unter Verwendung von Komponenten x, y und z darstellen, codiert sind, wobei der Bitstrom Folgendes umfasst:

Normalisierungsinformationen, die ein Flag enthalten, das eine Komponente mit einem größten Bereich von Schlüsselwertdaten aus den Komponenten x, y und z, einen größten Wert einer Komponente mit dem größten Bereich und kleinste Werte aus den Schlüsselwertdaten jeder der Komponenten x, y und z darstellt;
Quantisierungsinformationen, die Quantisierungsbits enthalten, die zum Quantisieren von auf der Basis der Normalisierungsinformationen normalisierten Schlüsselwertdaten verwendet werden;
DPCM-Operationsinformationen, die anzeigen, welche Art von DPCM-Operation zwischen einer zirkulären DPCM-Operation (200) und einer prädiktiv-zirkulären DPCM-Operation (230) an unter Verwendung der Quantisierungsbits quantisierten Schlüsselwertdaten durchgeführt worden ist;
Entropiecodierungsinformationen, die anzeigen, welche Art von Entropiecodierungsoperation an Differenzdaten durchgeführt worden ist, die durch die durch die DPCM-Operationsinformationen angezeigte DPCM-Operation generiert werden; und
codierte Schlüsselwertdaten;
wobei die zirkuläre DPCM-Operation (200) eine DPCM-Operation (210), gefolgt von einer zirkulären Quantisierung (220), umfasst, wobei die prädiktiv-zirkuläre DPCM (230) eine prädiktive DPCM-Operation (240), gefolgt von einer zirkulären Quantisierung (250), umfasst und die zirkuläre Quantisierung die Annahme verwendet, dass der größte Wert und der kleinste Wert in dem Quantisierungsbereich zwischen größten und kleinsten Werten zirkulär miteinander verbunden sind, so dass Werte von Differenzdaten größer als die Hälfte des größten Werts in dem Quantisierungsbereich reduziert werden durch Subtrahieren des größten Werts von den Differenzdaten.

**48.** Bitstrom nach Anspruch 47, weiterhin umfassend die darin codierte Anzahl an Schlüsselwertdaten und eine größte Anzahl von effektiven Stellen der Schlüsselwertdaten.

**49.** Bitstrom nach Anspruch 47 oder 48, weiterhin umfassend kleinste Werte und größte Werte aus den Schlüsselwertdaten jeder der Komponenten x, y und z, die zum Minimieren eines Fehlers aus den quantisierten Schlüsselwertdaten verwendet werden.

## Revendications

**1.** Appareil servant à encoder des données représentant la position d'un objet avec des composantes x, y et z, l'appareil comportant :

un normaliseur (300) qui est conçu pour calculer une plage maximale parmi des plages de données des composantes et pour normaliser les données de chacune des composantes sur la base de la plage maximale ;
un quantificateur (310) qui est conçu pour quantifier les données normalisées avec des bits de quantification prédéterminés ;
un opérateur de modulation par impulsions et codage différentiel (DPCM) (340) qui est conçu pour réaliser une opération de modulation par impulsions et codage différentiel sur les données quantifiées et ensuite pour produire des données différentielles ; et
un encodeur entropique (350) qui est conçu pour effectuer un codage entropique des données différentielles et pour produire un train de bits dans lequel les données différentielles sont encodées.

**2.** Appareil selon la revendication 1, dans lequel le normaliseur (310) est conçu pour calculer des valeurs maximales et minimales parmi les données de chacune des composantes, pour obtenir la plage maximale parmi les plages de données des composantes en utilisant les valeurs maximales et minimales des composantes, et pour normaliser les données de chacune des composantes sur la base de la plage maximale.

**3.** Appareil servant à encoder des données selon la revendication 1, pour encoder des données de valeurs clés d'un interpolateur de position représentant la position d'un objet avec des composantes x, y et z,
dans lequel le normaliseur (300) est conçu pour calculer une plage maximale parmi des plages de données des composantes, pour normaliser les données de valeurs clés de chacune des composantes x, y et z sur la base de la plage maximale, et pour produire des données de valeurs clés normalisées ;
dans lequel le quantificateur (310) est conçu pour quantifier les données de valeurs clés normalisées avec des bits de quantification prédéterminés ;

comprenant en outre un encodeur de nombre à virgule flottante (330) qui est conçu pour recevoir des valeurs minimales parmi les données de valeurs clés de chacune des composantes x, y et z, une plage maximale parmi les plages de données des composantes du normaliseur, pour calculer la valeur maximale d'une composante ayant la plage maximale, et pour convertir la valeur maximale et les valeurs minimales en nombres décimaux ;

dans lequel le processeur de modulation par impulsions et codage différentiel (340) est conçu pour obtenir des données différentielles et des données différentielles prédites des données de valeurs clés quantifiées et pour réaliser une opération de quantification circulaire sur les données différentielles en se basant sur la supposition que la valeur maximale et la valeur minimale dans la plage de quantification entre les valeurs maximales et minimales sont connectées l'une à l'autre de manière circulaire afin que des données différentielles plus grandes que la moitié de la valeur maximale dans la plage de quantification aient leurs valeurs réduites par soustraction de la valeur maximale des données différentielles afin de réduire la plage des données différentielles ;

dans lequel l'encodeur entropique (350) est conçu pour effectuer un encodage entropique des données différentielles et ensuite pour produire un train de bits dans lequel les données de valeurs clés sont encodées ; et

comprenant en outre un encodeur d'en-tête de valeurs clés (360) qui est conçu pour encoder des informations nécessaires au décodage du train de bits à inclure dans le train de bits.

4. Appareil selon la revendication 3 comprenant en outre un minimiseur d'erreur de quantification (320) qui est conçu pour ajuster des valeurs minimales et maximales parmi les données de valeurs clés entrées de chacune des composantes x, y et z afin de minimiser une erreur de quantification et d'envoyer les valeurs maximales et minimales ajustées à l'encodeur de nombre à virgule flottante.

5. Appareil selon la revendication 3 ou 4, dans lequel l'encodeur de nombre à virgule flottante (330) est conçu pour coder les mantisses et les exposants des valeurs minimales parmi les données de valeurs clés de chacune des composantes x, y et z et la mantisse et l'exposant de la valeur maximale d'une composante ayant la plage maximale en convertissant des nombres binaires qui y sont entrés en nombres décimaux constitués de leurs mantisses et exposants et pour envoyer les valeurs codées à l'encodeur d'en-tête de valeurs clés.

6. Appareil selon la revendication 5, dans lequel l'encodeur de nombre à virgule flottante (330) est conçu pour produire au moins un des nombres à chiffres des valeurs minimales parmi les données de valeurs clés de chacune des composantes x, y et z, le nombre de chiffres de la valeur maximale d'une composante ayant la plage maximale, celui ayant la valeur absolue la plus élevée parmi les exposants des valeurs minimales parmi les données de valeurs clés de chacune des composantes x, y et z et la valeur maximale de la composante ayant la plage maximale, les signes des plus grands exposants absolus des valeurs minimales parmi les données de valeurs clés de chacune des composantes x, y et z et de l'exposant de la valeur maximale de la composante ayant la plage maximale, et les nombres à chiffres sont envoyés au train de bits si nécessaire.

7. Appareil selon l'une quelconque des revendications 3 à 6, dans lequel le processeur de modulation par impulsions et codage différentiel comprend :

un opérateur de modulation par impulsions et codage différentiel circulaire (210) qui est conçu pour générer des données différentielles en réalisant une opération de modulation par impulsions et codage différentiel sur les données quantifiées et pour générer et envoyer des données différentielles quantifiées de manière circulaire en réalisant une opération de quantification circulaire sur les données différentielles afin de réduire leur plage ;

un opérateur de modulation par impulsions et codage différentiel circulaire prévisionnelle (240) qui est conçu pour générer des données différentielles prédites en réalisant une opération de modulation par impulsions et codage différentiel prévisionnelle sur les données quantifiées et pour générer et envoyer des données différentielles prédites quantifiées de manière circulaire en réalisant une opération de quantification circulaire sur les données différentielles prédites afin de réduire leur plage ; et

un sélecteur (260) qui est conçu pour sélectionner les données différentielles quantifiées de manière circulaire ou les données différentielles prédites en fonction du nombre de bits requis pour l'encodage.

8. Appareil selon la revendication 7, dans lequel, dans l'opération de quantification circulaire, les données différentielles ayant une taille réduite sont générées en réalisant une opération prédéterminée sur les données différentielles et la valeur maximale dans la plage de quantification.

9. Appareil selon la revendication 8, dans lequel, dans l'opération de quantification circulaire, des données différentielles quantifiées de manière circulaire sont obtenues par soustraction de la valeur maximale dans la plage de quantification à partir des données différentielles si des données différentielles ne sont pas plus petites qu'une valeur de référence prédéterminée et, si ce n'est pas le cas, par addition des données différentielles à la valeur maximale dans la plage de quantification, et de celles ayant une taille plus petite entre les données différentielles, et les données différentielles quantifiées de manière circulaire sont finalement produites comme données différentielles quantifiées de manière circulaire.

10. Appareil selon l'une quelconque des revendications 7 à 9, dans lequel, dans l'opération de modulation par impulsions et codage différentiel prévisionnelle, les différences entre des données $\tilde{P}_i$, en cours de quantification et des données prédites, et les données prédites sont générées en réalisant une opération prédéterminée sur des données quantifiées $\tilde{P}_{i-1}$ qui ont été entrées dans l'opérateur de modulation par impulsions et codage différentiel circulaire avant $\tilde{P}_i$.

11. Appareil selon la revendication 10, dans lequel, dans l'opération de modulation par impulsions et codage différentiel prévisionnelle, les données prédites sont générées en réalisant une opération prédéterminée sur $\tilde{P}_{i-1}$, et des données $\tilde{P}_{i-2}$ qui ont été quantifiées avant $\tilde{P}_{i-1}$.

12. Appareil selon l'une quelconque des revendications 3 à 11, dans lequel l'encodeur entropique (350) est conçu pour coder des données différentielles en représentant une série de premiers chiffres représentant la grandeur des données différentielles et un bit d'un deuxième chiffre indiquant une fin de la série des premiers chiffres.

13. Appareil selon l'une quelconque des revendications 3 à 12, dans lequel, si les données différentielles à encoder appartiennent à une partie supérieure d'une plage d'encodage, l'encodeur entropique (350) est conçu pour encoder la série de premiers chiffres et pour renouveler une valeur d'une partie inférieure de la plage d'encodage, si les données différentielles à encoder appartiennent à une partie supérieure de la plage d'encodage, pour encoder le deuxième chiffre et renouveler une valeur de la partie supérieure de la plage d'encodage.

14. Appareil selon la revendication 13, dans lequel l'encodeur entropique (350) est conçu pour calculer une valeur médiane dans la plage d'encodage et pour renouveler les parties supérieure et inférieure de la plage d'encodage avec la valeur médiane.

15. Appareil selon les revendications 13 ou 14, dans lequel l'encodeur entropique (350) est conçu pour convertir les données différentielles à encoder pour qu'elles aient le même signe, pour déterminer la plage d'encodage en identifiant une valeur maximale parmi les données différentielles, et pour réaliser l'encodage des données différentielles jusqu'à ce que la valeur de la partie supérieure de la plage d'encodage soit égale à la valeur de la partie inférieure de la plage d'encodage.

16. Appareil de décodage de données qui décode un train de bits dans lequel des données ayant des composantes x, y et z représentant la position d'un objet sont encodées, l'appareil comportant :

un décodeur entropique (1120) qui est conçu pour effectuer un décodage entropique d'un train de bits entré dans celui-ci et qui génère des données différentielles ;
un opérateur de modulation par impulsions et codage différentiel (1130) qui est conçu pour réaliser une opération de modulation par impulsions et codage différentiel inverse sur les données différentielles et pour produire des données quantifiées ;
un quantificateur inverse (1140) qui est conçu pour effectuer une quantification inverse des données quantifiées et pour produire des données normalisées ; et
un normaliseur inverse (1150) qui est conçu pour recevoir des valeurs minimales parmi les données de chaque composante et une valeur maximale d'une composante ayant la plage maximale, pour obtenir une plage maximale des données normalisées, et pour effectuer une normalisation inverse des données normalisées sur la plage maximale.

17. Appareil selon la revendication 16, dans lequel le normaliseur inverse (1150) est conçu pour effectuer une normalisation inverse des données normalisées entrées dans celui-ci en utilisant la plage maximale et les valeurs minimales de la composante auxquelles les données normalisées appartiennent.

18. Appareil selon la revendication 16 ou 17, dans lequel le normaliseur inverse (1150) est conçu pour effectuer une normalisation inverse des données entrées dans celui-ci par multiplication des données normalisées par la plage maximale et par ajout de la valeur minimale de la composante, à laquelle des données normalisées appartiennent, aux résultats de la multiplication.

**19.** Appareil de décodage de données selon la revendication 16, qui décode un train de bits dans lequel des données de valeurs clés d'un interpolateur de position représentant la position d'un objet utilisant des composantes x, y et z sont encodées,

comprenant en outre un décodeur d'en-tête de valeur clé (1110) qui est conçu pour décoder des informations requises pour un décodage à partir du train de bits ;

dans lequel le processeur de modulation par impulsions et codage différentiel inverse (1130) est conçu pour réaliser une opération de modulation par impulsions et codage différentiel circulaire inverse ou une opération de modulation par impulsions et codage différentiel circulaire prévisionnelle inverse sur les données différentielles en fonction du type de modulation par impulsions et codage différentiel réalisée sur les données différentielles et produit ainsi des données de valeurs clés quantifiées ;

comprenant en outre un codeur de nombre à virgule flottante (1160) qui est conçu pour recevoir des valeurs minimales parmi les données de valeurs clés entrées de chacune des composantes x, y et z et une valeur maximale d'une composante ayant la plage maximale du décodeur d'en-tête de valeur de clé, pour convertir les valeurs maximale et minimale en nombres binaires, qui envoie les nombres binaires au normaliseur inverse ; et

dans lequel le normaliseur inverse (1150) est conçu pour recevoir les valeurs minimales parmi les données de valeurs clés de chacune des composantes x, y et z et une valeur maximale d'une composante ayant la plage maximale du décodeur de nombre à virgule flottante, pour obtenir une plage maximale des données normalisées en utilisant les valeurs minimales et la valeur maximale et qui effectue une normalisation inverse des données de valeurs clés des composantes x, y et z ;

dans lequel si nMax est une valeur maximale dans une plage de quantification des données différentielles entrées, le processeur de modulation par impulsions et codage différentiel circulaire inverse obtient des données différentielles quantifiées $\tilde{P}_i'$, à partir des données différentielles entrées $\tilde{P}_i$ en utilisant :

$$\tilde{P}'_i = \tilde{P}_i - (nMax + 1) \qquad\qquad (si\ \tilde{P}_i \geq 0) \qquad ...(11)$$

$$\tilde{P}'_i = \tilde{P}_i - (nMax + 1) \qquad\qquad (si\ \tilde{P}_i < 0)$$

pour la modulation par impulsions et codage différentiel circulaire inverse, en calculant A et B en utilisant :

$$A = \tilde{P}_i + \tilde{P}_{i-1} \qquad\qquad ...(12)$$

$$B = \tilde{P}'_i + \tilde{P}_{i-1}$$

où n représente le nombre de données, et i représente un entier entre 1 et n-1, et

si A n'est pas plus petit que 0 et pas plus grand que nMax, produire A comme données modulées par impulsions et codage différentiel circulaire inverse $\tilde{P}_i$, et si A est plus petit que 0 ou plus grand que nMax, produire 0,

et, pour la modulation par impulsions et codage différentiel circulaire prévisionnelle inverse, calculer A et B en utilisant :

$$A = nMax - \tilde{P}_i \qquad\qquad (si\ P > nMax)\ ...(13)$$

$$A = \tilde{P}_i \qquad\qquad (si\ P < 0)$$

$$A = \tilde{P}_i + P \qquad\qquad (dans\ les\ autres\ cas)$$

$$B = nMax - \widetilde{P}'_i \qquad (si\ P > nMax)\ ...(14)$$

$$B = \widetilde{P}'_i \qquad (si\ P < 0)$$

$$B = \widetilde{P}'_i + P \qquad (dans\ les\ autres\ cas)$$

où n représente le nombre de données, et i est un entier entre 1 et n-1 ; et
si A n'est pas plus petit que 0 et pas plus grand que nMax, produire A comme les données modulées inversement par impulsions et codage différentiels de manière circulaire prévisionnelle $\tilde{P}_i$, si A est plus petit que 0 ou plus grand que nMax, produire B comme $\tilde{P}_i$.

**20.** Appareil selon la revendication 19, dans lequel, si les données de valeurs clés d'une des composantes x, y et z ont la même valeur quantifiée, le décodeur entropique (1120) est conçu pour décoder toutes les données de valeurs clés de la composante en la valeur minimale parmi les données de valeurs clés entrées de la composante.

**21.** Appareil selon la revendication 19 ou 20, dans lequel le décodeur entropique (1120) est conçu pour décoder les données différentielles en effectuant une lecture continue d'un deuxième chiffre provenant du train de bits jusqu'à ce qu'un premier chiffre vienne du train de bits, en convertissant le nombre de deuxièmes chiffres en une grandeur, et en lisant un bit à côté du premier chiffre afin de décoder un signe.

**22.** Appareil selon l'une quelconque des revendications 19 à 21, dans lequel l'encodeur entropique (1120) est conçu pour définir une plage de décodage en décodant une valeur maximale parmi des données différentielles encodées du train de bits, pour renouveler des valeurs maximales et minimales dans la plage de décodage en utilisant les valeurs lues dans le train de bits, et pour générer la valeur maximale dans la plage de décodage en un symbole décodé quand la valeur maximale dans la plage de décodage est la même que la valeur minimale dans la plage de décodage.

**23.** Appareil selon la revendication 22, dans lequel l'encodeur entropique (1120) est conçu pour calculer une valeur médiane dans la plage de décodage en réalisant une opération prédéterminée, pour renouveler la valeur maximale dans la plage de décodage avec la valeur médiane si un bit lu dans le train de bits est le premier chiffre, et pour renouveler la valeur maximale dans la plage de décodage avec la valeur médiane si le bit lu dans le train de bits est comme le deuxième chiffre.

**24.** Appareil selon l'une quelconque des revendications 19 à 23, dans lequel le processeur de modulation par impulsions et codage différentiel inverse comprend :

un opérateur de modulation par impulsions et codage différentiel circulaire inverse (1020) qui est conçu pour réaliser une opération de quantification circulaire inverse sur des données différentielles entrées dans celui-ci, pour réaliser une opération de modulation par impulsions et codage différentiel inverse sur les données différentielles quantifiées inversement de manière circulaire, et ensuite pour produire des données de valeurs clés quantifiées ;
un opérateur de modulation par impulsions et codage différentiel circulaire prévisionnelle (1030) qui est conçu pour réaliser une opération de quantification circulaire inverse sur des données différentielles entrées dans celui-ci, pour réaliser une opération de modulation par impulsions et codage différentiel prévisionnelle inverse sur les données différentielles quantifiées inversement de manière circulaire, puis pour produire des données de valeurs clés quantifiées ; et
une unité de détermination (1010) qui est conçue pour envoyer des données différentielles soit à l'opérateur de modulation par impulsions et codage différentiel circulaire inverse soit à l'opérateur de modulation par impulsions et codage différentiel prévisionnel circulaire en fonction des informations fournies par le décodeur d'en-tête de valeurs clés,
dans lequel, dans l'opération de quantification circulaire inverse, les données différentielles quantifiées inversement de manière circulaire sont générées en réalisant une opération prédéterminée sur les données différentielles entrées et une valeur maximale dans la plage des données quantifiées.

**25.** Procédé d'encodage de données qui encode des données ayant des composantes x, y et z représentant la position d'un objet, ledit procédé comprenant les étapes consistant à :

(a) calculer une plage maximale parmi des plages de données des composantes et normaliser les données de chacune des composantes sur la base de la plage maximale ;

(b) quantifier les données normalisées avec des bits de quantification prédéterminés ;

(c) générer des données différentielles en réalisant une opération de modulation par impulsions et codage différentiel sur les données quantifiées ; et

(d) générer un train de bits, dans lequel des données sont encodées, par encodage entropique des données différentielles.

26. Procédé selon la revendication 25, dans lequel l'étape (a) comprend les sous-étapes consistant à :

(a1) calculer des valeurs maximales et minimales parmi les données de chacune des composantes,

(a2) calculer les plages de données des composantes et la plage maximale parmi les plages de données des composantes en utilisant les valeurs maximales et minimales ; et

(a3) normaliser les données de chacune des composantes sur la base de la plage maximale.

27. Procédé selon la revendication 25 servant à encoder des données, qui encode des données de valeurs clés d'un interpolateur de position représentant la position d'un objet avec des composantes x, y et z,

dans lequel l'étape (a) comprend la sous-étape consistant à : calculer une plage maximale parmi des plages de données de composantes, normaliser les données de valeurs clés de chacune des composantes x, y et z sur la base de la plage maximale, et ainsi générer (S610) des données de valeurs clés normalisées ;

l'étape (b) comprend la sous-étape consistant à quantifier les données de valeurs clés normalisées (S620) avec des bits de quantification prédéterminés ;

comprenant en outre une étape (c) de conversion de valeurs minimales (S630) parmi les données de valeurs clés entrées de chacune des composantes x, y et z et une valeur maximale parmi toutes les données de valeurs clés des composantes x, y et z à l'étape (a) en nombres décimaux ;

(d) obtenir des données différentielles et des données différentielles prédites (S670) des données de valeurs clés quantifiées et réaliser une opération de quantification circulaire sur les données différentielles et les données différentielles prédites en se basant sur la supposition que la valeur maximale et les données minimales dans la plage de quantification entre les valeurs maximales et minimales sont connectées circulairement l'une à l'autre afin que des données différentielles plus grandes que la moitié de la valeur maximale dans la plage de quantification aient leurs valeurs réduites par soustraction de la valeur maximale des données différentielles de manière à réduire leurs plages ;

dans lequel l'étape (e) comprend la sous-étape consistant à générer un train de bits, dans lequel des données de valeurs clés sont encodées, par encodage entropique (S680) des données différentielles ; et

comprenant en outre l'étape consistant à (f) encoder (S730) des informations requises pour décoder le train de bits à inclure dans le train de bits.

28. Procédé selon la revendication 27, comprenant en outre l'étape consistant à ajuster (S630) les valeurs maximale et minimale parmi les données de valeurs clés entrées de chacune des composantes en utilisant les données de valeurs clés entrées et les données de valeurs clés quantifiées afin de minimiser une erreur de quantification, entre l'étape (b) et l'étape (c).

29. Procédé selon la revendication 27 ou 28, dans lequel à l'étape (c), les mantisses et les exposants des valeurs minimales parmi les données de valeurs clés de chacune des composantes x, y et z et la mantisse et l'exposant de la valeur maximale d'une composante ayant la plage maximale sont encodés comme un en-tête de valeur clé par conversion des nombres binaires en nombres décimaux, chacun composé d'une mantisse et d'un exposant.

30. Procédé selon l'une quelconque des revendications 27 à 29, dans lequel l'étape (d) comprend les sous-étapes consistant à :

(d1) générer des données différentielles en réalisant une opération de modulation par impulsions et codage différentiel sur les données de valeurs clés quantifiées et générer des données différentielles prédites en réalisant une opération de modulation par impulsions et codage différentiel prévisionnelle sur les données de valeurs clés quantifiées ;

(d2) générer des données différentielles quantifiées de manière circulaire et des données différentielles prédites quantifiées de manière circulaire en réalisant une opération de quantification circulaire sur les données différentielles et les données différentielles prédites de manière à réduire leurs plages ; et

(d3) sélectionner soit les données différentielles quantifiées de manière circulaire soit les données différentielles prédites quantifiées de manière circulaire selon leurs grandeurs.

31. Procédé selon la revendication 30, dans lequel, dans l'opération de quantification circulaire de l'étape (d2), les données différentielles ayant une taille réduite sont générées en réalisant une opération prédéterminée sur les données différentielles et la valeur maximale dans la plage de quantification.

32. Procédé selon la revendication 30 ou 31, dans lequel, dans l'opération de modulation par impulsions et codage différentiel prévisionnelle de l'étape (d1), les différences entre des données en cours de quantification et des données prédites, et les données prédites sont générées en réalisant une opération prédéterminée sur des données quantifiées, sur lesquelles des opérations prédéterminées ont été réalisées à l'étape (a) avant les données actuellement en cours de quantification.

33. Procédé selon l'une quelconque des revendications 27 à 32, dans lequel à l'étape (e), les données différentielles sont encodées en représentant une série de premiers chiffres représentant la grandeur des données différentielles et un bit d'un deuxième chiffre indiquant une fin de la série des premiers chiffres.

34. Procédé selon l'une quelconque des revendications 27 à 32, dans lequel à l'étape (e), si les données différentielles à encoder appartiennent à une partie supérieure d'une plage d'encodage, le premier chiffre est encodé et une valeur d'une partie inférieure de la plage d'encodage est renouvelée, et, si les données différentielles à encoder appartiennent à la partie supérieure de la plage d'encodage, le deuxième chiffre est encodé et une valeur de la partie supérieure de la plage d'encodage est renouvelée.

35. Procédé selon la revendication 34, dans lequel à l'étape (e), une valeur médiane dans la plage d'encodage est calculée, et les parties supérieure et inférieure de la plage d'encodage sont renouvelées en utilisant la valeur médiane.

36. Support d'enregistrement lisible par ordinateur où le procédé selon l'une quelconque des revendications 27 à 35 est enregistré sous forme de codes de programme lisibles par ordinateur.

37. Procédé de décodage de données, qui décode un train de bits dans lequel des données ayant des composantes x, y et z représentant la position d'un objet sont encodées, ledit procédé comprenant les étapes :

générer des données différentielles par décodage entropique d'un train de bits d'entrée ;
générer des données quantifiées en réalisant une opération de modulation par impulsions et codage différentiel inverse sur les données différentielles ;
générer des données normalisées en effectuant une quantification inverse des données quantifiées ; et
obtenir une plage maximale des données normalisées en utilisant des valeurs minimales parmi des données de chaque composante et une valeur maximale d'une composante ayant la plage maximale, qui sont décodées du train de bits, et effectuer une normalisation inverse des données normalisées sur la base de la plage maximale.

38. Procédé selon la revendication 37, dans lequel, à l'étape d'obtention d'une plage maximale, on effectue une normalisation inverse des données normalisées en utilisant la plage maximale et une valeur minimale de la composante auxquelles les données normalisées appartiennent.

39. Procédé de décodage de données selon la revendication 37, qui décode un train de bits dans lequel des données de valeurs clés d'un interpolateur de position représentant la position d'un objet utilisant des composantes x, y et z sont encodées, ledit procédé comprenant :

(a) l'étape de décodage (S1300) des informations d'en-tête requises pour le décodage du train de bits ;
(b) l'étape de génération de données différentielles par décodage entropique du train de bits (S1320);
(c) l'étape de génération de données de valeurs clés quantifiées (S1350) en réalisant une opération de modulation par impulsions et codage différentiel circulaire inverse et une opération de modulation par impulsions et codage différentiel circulaire prévisionnelle inverse sur les données différentielles;
comprenant en outre (d) l'étape de conversion des valeurs minimales et maximales parmi les données de valeurs clés quantifiées de chacune des composantes x, y et z, qui ont été décodées à l'étape (a), en nombres binaires et en convertissant les valeurs minimales parmi les données de valeurs clés de chacune des composantes x, y et z et une valeur maximale d'une composante parmi toutes les données de valeurs clés des composantes x, y et z en nombres binaires ;

(e) l'étape de génération des données de valeurs clés normalisées en effectuant une quantification inverse des données de valeurs clés quantifiées est basée sur les valeurs minimales et maximales parmi les données de valeurs clés quantifiées, qui ont été converties à l'étape (d) ; et

comprenant en outre (f) l'étape de normalisation inverse des données de valeurs clés sur la base des valeurs minimales parmi les données de valeurs clés de chacune des composantes x, y et z et une valeur maximale d'une composante ayant la plage maximale, qui ont été converties à l'étape (d) ;

dans lequel, si nMax est une valeur maximale dans une plage de quantification des données différentielles d'entrée, le processeur de modulation par impulsions et codage différentiel circulaire inverse obtient des données différentielles quantifiées $\tilde{P}_i$ à partir des données différentielles $\tilde{P}_i$ d'entrée, en utilisant :

$$\widetilde{P}'_i = \widetilde{P}_i - (nMax + 1) \qquad (si\ \widetilde{P}_i \geq 0) \quad \dots (11)$$

$$\widetilde{P}'_i = \widetilde{P}_i + (nMax + 1) \qquad (si\ \widetilde{P}_i < 0)$$

pour la modulation par impulsions et codage différentiel circulaire inverse, en calculant A et B en utilisant :

$$A = \widetilde{P}_i + \widetilde{P}_{i-1} \qquad \dots (12)$$

$$B = \widetilde{P}'_i + \widetilde{P}_{i-1}$$

où n représente le nombre de données, et i représente un entier entre 1 et n-1, et

si A n'est pas plus petit que 0 et pas plus grand que nMax, produire A comme données modulées par impulsions et codage différentiel de manière circulaire inverse $\tilde{P}_i$ et, si A est plus petit que 0 ou plus grand que nMax, produire 0,

et, pour la modulation par impulsions et codage différentiel circulaire prédictive inverse, calculer A et B en utilisant :

$$A = nMax - \widetilde{P}_i \quad (si\ P > nMax) \quad \dots (13)$$

$$A = \widetilde{P}_i \qquad (si\ P < 0)$$

$$A = \widetilde{P}_i + P \qquad (dans\ les\ autres\ cas)$$

$$B = nMax - \widetilde{P}'_i, \qquad (si\ P > nMax) \quad \dots (14)$$

$$B = \widetilde{P}'_i \qquad (si\ P < 0)$$

$$B = \widetilde{P}'_i + P \qquad (dans\ les\ autres\ cas)$$

où n représente le nombre de données, et i est un entier entre 1 et n-1 ; et

si A n'est pas plus petit que 0 et pas plus grand que nMax, produire A comme les données modulées inversement par impulsions et codage différentiel de manière circulaire prévisionnelle $\tilde{P}_i$, si A est plus petit que 0 ou plus grand que nMax, produire B comme $\tilde{P}_i$.

40. Procédé selon la revendication 39, dans lequel à l'étape (b), si les données de valeurs clés d'une des composantes x, y et z ont la même valeur quantifiée, toutes les données de valeurs clés de la composante sont décodées en la valeur minimale parmi les données de valeurs clés quantifiées de la composante, qui a été décodée à l'étape (a).

41. Procédé selon la revendication 39, dans lequel à l'étape (b), les données différentielles sont décodées par lecture continue d'un deuxième chiffre dans le train de bits jusqu'à ce qu'un premier chiffre vienne du train de bits, en convertissant le nombre de deuxièmes chiffres en une grandeur, et en lisant un bit à côté du premier chiffre afin d'encoder un signe.

42. Procédé selon la revendication 39, dans lequel l'étape (b) comprend les sous-étapes consistant à :

   (b1) définir une plage de décodage par décodage d'une valeur maximale parmi des données différentielles encodées ; et
   (b2) renouveler une valeur maximale ou minimale dans la plage de décodage sur la base d'une valeur lue dans le train de bits et déterminer une valeur maximale dans une plage de décodage renouvelée comme données différentielles décodées quand la valeur maximale dans la plage de décodage renouvelée est égale à une valeur minimale dans la plage de décodage renouvelée.

43. Procédé selon la revendication 42, dans lequel, à l'étape (b2), une valeur médiane dans la plage de décodage est calculée en réalisant une opération prédéterminée, la plage maximale dans la plage de décodage est renouvelée avec la valeur médiane si un bit lu dans le train de bits est un premier chiffre, et la valeur minimale est renouvelée avec la valeur médiane si le bit lu dans le train de bits est un deuxième chiffre.

44. Procédé selon l'une quelconque des revendications 39 à 43, dans lequel l'étape (c) comprend les sous-étapes consistant à :

   (c1) identifier le type de modulation par impulsions et codage différentiel qui a été réalisée sur des données différentielles décodées ;
   (c2) réaliser une opération de quantification circulaire inverse sur les données différentielles de manière à réduire leur plage ; et
   (c3) générer des données différentielles en réalisant une opération de modulation par impulsions et codage différentiel circulaire inverse sur les données différentielles inversement quantifiées de manière circulaire si une opération de modulation par impulsions et codage différentiel a été réalisée sur les données différentielles et réaliser une opération de modulation par impulsions et codage différentiel circulaire prévisionnelle inverse sur les données différentielles inversement quantifiées de manière circulaire, si une opération de modulation par impulsions et codage différentiel prévisionnelle a été réalisée sur les données différentielles,
   dans lequel les données différentielles inversement quantifiées de manière circulaire sont générées en réalisant une opération prédéterminée sur les données différentielles et une valeur maximale dans une plage de quantification des données quantifiées.

45. Programme informatique comportant un moyen de code informatique servant à réaliser toutes les étapes de l'une quelconque des revendications 25 à 44 quand ledit logiciel est exécuté sur un ordinateur.

46. Programme informatique selon la revendication 45 trouvant sa réalisation sur un support lisible par ordinateur.

47. Train de bits dans lequel des données de valeurs clés d'un interpolateur de position représentant l'emplacement d'un objet utilisant des composantes x, y et z sont encodées, le train de bits comprenant :

   des informations de normalisation incluant un drapeau représentant une composante ayant une plage maximale de données de valeurs clés parmi les composantes x, y et z, une valeur maximale d'une composante ayant la plage maximale, et des valeurs minimales parmi les données de valeurs clés de chacune des composantes x, y et z ;
   des informations de quantification qui comprennent des bits de quantification servant à quantifier des données de valeurs clés normalisées sur la base des informations de normalisation ;

des informations d'opération de modulation par impulsions et codage différentiel qui indiquent quel type d'opération de modulation par impulsions et codage différentiel à savoir une opération de modulation par impulsions et codage différentiel circulaire (200), une opération de modulation par impulsions et codage différentiel circulaire prévisionnelle (230) a été réalisé sur des données de valeurs clés quantifiées en utilisant les bits de quantification ;

des informations d'encodage entropique qui indiquent quel type d'opération d'encodage entropique a été réalisé sur des données différentielles générées par l'opération de modulation par impulsions et codage différentiel indiquée par les informations d'opération de modulation par impulsions et codage différentiel ; et

des données de valeurs clés encodées ; dans lequel l'opération de modulation par impulsions et codage différentiel circulaire (200) comprend une opération de modulation par impulsions et codage différentiel (210) suivie d'une quantification circulaire (220), l'opération de modulation par impulsions et codage différentiel circulaire prévisionnelle (230) comprend une opération de modulation par impulsions et codage différentiel prévisionnelle (240) suivie d'une quantification circulaire (250), et la quantification circulaire se base sur la supposition que la valeur maximale et la valeur minimale dans la plage de quantification entre des valeurs maximales et minimales sont connectées de manière circulaire l'une à l'autre afin que des données différentielles qui sont plus grandes que la moitié de la valeur maximale dans la plage de quantification aient leurs valeurs réduites par soustraction de la valeur maximale des données différentielles.

48. Train de bits de la revendication 47, comprenant en outre le nombre de données de valeurs clés encodées dans celui-ci et un nombre maximum de nombre de chiffres effectifs des données de valeurs clés.

49. Train de bits selon la revendication 47 ou 48, comprenant en outre des valeurs minimales et maximales parmi les données de valeurs clés de chacune des composantes x, y et z, qui sont utilisées pour minimiser une erreur parmi les données de valeurs clés quantifiées.

FIG. 1 (PRIOR ART)

APPARATUS FOR ENCODING DATA

INPUT DATA → QUANTIZER (100) → DPCM (110) → ENTROPY ENCODER (120) → BITSTREAM

APPARATUS FOR DECODING DATA

DECODED DATA ← INVERSE QUANTIZER (150) ← INVERSE DPCM OPERATOR (140) ← ENTROPY DECODER (130) ← BITSTREAM

EP 1 564 999 B1

FIG. 2A

## FIG. 2B

```
         ( START )
             │
             ▼
┌─────────────────────────┐
│  RECEIVE QUANTIZED DATA  │──S210
└─────────────────────────┘
             │
      ┌──────┴──────┐
      ▼             ▼
┌──────────────┐  ┌──────────────────┐
│ PERFORM DPCM │  │ PERFORM PREDICTIVE│
│ AND CIRCULAR │──S220a │ DPCM AND CIRCULAR │──S220b
│ QUANTIZATION │  │  QUANTIZATION     │
└──────────────┘  └──────────────────┘
      └──────┬──────┘
             ▼
┌─────────────────────────┐
│     PERFORM SAD ON      │──S230
│   DIFFERENTIAL DATA     │
└─────────────────────────┘
             │
             ▼
┌─────────────────────────────┐
│ SELECT AND OUTPUT DIFFERENTIAL│
│  DATA HAVING SMALLER         │──S240
│  RESULTS OF SAD             │
└─────────────────────────────┘
             │
             ▼
         (  END  )
```

## FIG. 3A

```
                    310          340          350
┌────────────┐  ┌───────────┐ ┌──────────┐ ┌──────────┐  ┌────────────┐
│ INPUT DATA │─▶│ QUANTIZER │▶│   DPCM   │▶│ ENTROPY  │─▶│ BITSTREAM  │
└────────────┘  └───────────┘ │ PROCESSOR│ │ ENCODER  │  └────────────┘
                              └──────────┘ └──────────┘
```

FIG. 3B

START

RECEIVE DATA —S310

QUANTIZE INPUT DATA —S320

PERFORM CIRCULAR DPCM
OPERATION AND PREDICTIVE-
CIRCULAR DPCM OPERATION —S330

SELECT DIFFERENTIAL DATA —S340

PERFORM ENTROPY-ENCODING —S350

END

FIG. 4A

EP 1 564 999 B1

EP 1 564 999 B1

# FIG. 4B

```
           ( START )
              │
┌──────────────────────────────────────┐
│ RECEIVE ORIGINAL DATA AND QUANTIZED DATA │── S402
└──────────────────────────────────────┘
              │
┌──────────────────────────────────────┐
│ OBTAIN MAXIMUM(max) AND MINIMUM(min)  │
│ FROM AMONG INPUT DATA, CALCULATE      │── S404
│ DIGIT NUMBER OF MINIMUM, AND SET INITIAL │
│ MINIMUM ERROR VALUE(emin)             │
└──────────────────────────────────────┘
              │
┌──────────────────────────────────────┐
│ SET ADJUSTED MINIMUM VALUE(min') AND  │── S406
│ INITIAL ERROR MINIMIZING VALUE(min min) │
└──────────────────────────────────────┘
              │
┌──────────────────────────────────────┐
│      RENEW ADJUSTED MINIMUM VALUE     │── S408
└──────────────────────────────────────┘
```

$e_{min} = e$, $e_{min} > e$, $min_{min} = min'$

## FIG. 5A

DATA HAVING PLURALITY OF COMPONENTS → $\bar{P}_{i,j}$ → NORMALIZER (300) → $\check{P}_{i,j}$ → QUANTIZER (310) → DPCM OPERATOR (110/340) → ENTROPY ENCODER (350) → BITSTREAM

FIG. 5B

```
          ┌─────────┐
          │  START  │
          └─────────┘
               │
  ┌────────────────────────────┐
  │ CALCULATE DATA RANGE OF EACH│──── S512
  │        COMPONENT            │
  └────────────────────────────┘
               │
  ┌────────────────────────────┐
  │  CALCULATE MAXIMUM DATA RANGE│──── S514
  └────────────────────────────┘
               │
  ┌────────────────────────────┐
  │ NORMALIZE DATA OF EACH COMPONENT│──── S516
  │ BASED ON MAXIMUM DATA RANGE │
  └────────────────────────────┘
               │
          ┌─────────┐
          │   END   │
          └─────────┘
```

FIG. 6A

## FIG. 6B

START

RECEIVE KEY VALUE DATA —S600

NORMALIZE KEY VALUE DATA —S610

QUANTIZE KEY VALUE DATA —S620

ADJUST MAXIMUM AND MINIMUM VALUES AMONG QUANTIZED KEY VALUE DATA SO AS TO MINIMIZE QUANTIZATION ERROR —S630

ENCODE MAXIMUM AND MINIMUM VALUES —S650

PERFORM CIRCULAR DPCM OPERATION AND PREDICTIVE—CIRCULAR DPCM OPERATION —S670

PERFORM ENTROPY—ENCODING —S680

ENCODE KEY VALUE HEADER —S730

END

FIG. 7A

```
                        ( START )                        ╱—S650

        ┌──────────────────────────────────────┐
        │RECEIVE x_min, y_min, z_min, max, nWhichAxis│
        │INFORMATION ON COMPONENT, TO WHICH max │—S651
        │ BELONGS, AND DIGIT NUMBER OF ORIGINAL  │
        │            KEY VALUE DATA              │
        └──────────────────────────────────────┘
                             │
        ┌──────────────────────────────────────┐
        │  CONVERT x_min, y_min, z_min, AND max │—S652
        │          INTO DECIMAL NUMBERS         │
        └──────────────────────────────────────┘
                             │
                        ╱ S653
              ◇ ARE DIGIT NUMBERS ◇        NO    ┌──────────────────────┐
              ◇ OF x_min, y_min, and z_min ◇────→│ENCODE DIGIT NUMBERS OF│╱S654
              ◇    THE SAME?    ◇                 │ x_min, y_min, AND z_min│
                     │YES                        │ INTO KEY VALUE HEADER │
                     │                           └──────────────────────┘
                ╱ S655
          ◇  DIGIT NUMBERS OF  ◇          NO
          ◇ x_min, y_min, and z_min=DIGIT ◇────┐
          ◇ NUMBER OF ORIGINAL KEY ◇           │
          ◇       VALUE?        ◇              ┌──────────────────────┐
                 │YES                          │ENCODE DIGIT NUMBER   │
                 │                             │OF MINIMUM VALUE INTO  │—S656
                 │                             │  KEY VALUE HEADER    │
                 │                             └──────────────────────┘
                ╱ S657
          ◇   DIGIT NUMBER OF   ◇         NO
          ◇ MAXIMUM NUMBER(max)=DIGIT ◇
          ◇ NUMBER OF MINIMUM NUMBER OF THE ◇──┐
          ◇  CORRESPDING COMPONENT? ◇          │
                 │YES                   ┌──────────────────────┐
                 │                      │ENCODE DIGIT NUMBER OF│╱S658
                 │                      │  MAXIMUM VALUE(max)  │
                 │                      └──────────────────────┘
        ┌──────────────────────────────────────┐
        │ ENCODE MAXIMUM VALUE(nMaxExp) AMONG   │—S659
        │ ABSOLUTE VALUES OF EXPONENTS OF MAXIMUM│
        │ AND MINIMUM VALUES OF EACH COMPONENT INTO│
        │KEY VALUE HEADER WITH PREDETERMINED BITS│
        └──────────────────────────────────────┘
                             │
                        ╱ S660
          ◇          IS          ◇         NO
          ◇ ALL SIGN OF EXPONENT  ◇
          ◇ OF MINIMUM VALUES OF EACH ◇─────┐
          ◇ COMPONENT AND THE MAXIMUM ◇     │
          ◇      VALUE SAME?       ◇   ┌──────────────────┐
                 │YES   ╱S661          │ bSameSignExp=0   │╱S662
        ┌──────────────────────────────┐└──────────────────┘
        │ENCODE THE SIGN INTO KEY VALUE HEADER│
        │       bSameSignExp=1         │
        └──────────────────────────────┘
                             │
                          ( A )
```

55

## FIG. 7B

```
( FROM "A" OF FIG. 7A )
            │
            ▼
┌──────────────────────────────┐
│   ENCODE SIGN OF CONVERTED    │──── S663
│    FLOATING-POINT NUMBER      │
└──────────────────────────────┘
            │
            ▼
┌──────────────────────────────┐
│ ENCODE MANTISSA OF FLOATING-POINT│
│   NUMBER INTO KEY VALUE HEADER   │
│  TO HAVE AS MANY BITS AS NUMBER OF│──── S664
│   BITS FOR ENCODING CONVERTED    │
│      FLOATING-POINT NUMBER       │
└──────────────────────────────┘
            │
            ▼
┌──────────────────────────────┐
│ CALCULATE NUMBER OF BITS REQUIRED │
│  FOR ENCODING nMaxExp AND ENCODE  │
│ EXPONENT OF CONVERTED FLOATING-POINT│──── S665
│    NUMBER TO HAVE AS MANY BITS AS  │
│     RESULT OF THE CALCULATION      │
└──────────────────────────────┘
            │
            ▼
         S666
      ╱────────╲                    NO
     ╱ bSameSignExp=1? ╲───────────────────┐
      ╲────────╱                           │
            │                              ▼      S667
          YES              ┌──────────────────────────────┐
            │              │  ENCODE SIGN OF EXPONENT OF   │
            │              │   CONVERTED FLOATING-POINT    │
            │              │           NUMBER             │
            │              └──────────────────────────────┘
            │                              │
            ▼◄─────────────────────────────┘
        ( END )
```

# FIG. 7C

```
        FROM S670                              ╱─ S680

                    ╱─ S681
              ARE
       ALL QUANTIZED VALUES          YES
            THE SAME?

              │ NO
                    ╱─ S682
          USE UNARY                  NO
        AAC FUNCTION?

              │ YES
                    ╱─ S683                    ╱─ S690
    ┌──────────────────────────┐   ┌──────────────────────────┐
    │ ENCODE DIFFERENTIAL VALUES│   │ ENCODE DIFFERENTIAL VALUES│
    │  USING UNARY AAC FUNCTION │   │   USING SQ AAC FUNCTION   │
    └──────────────────────────┘   └──────────────────────────┘

          TO S730
```

# FIG. 7D

```
                    ( START )
                        │
                        ▼
        ┌──────────────────────────────────────┐
        │ RECEIVE DIFFERENTIAL DATA (SYMBOLS),  │─── S692
        │ NUMBER OF BITS FOR ENCODING(nQP),     │
        │ nStartIndex, AND NUMBER OF SYMBOLS    │
        └──────────────────────────────────────┘
                        │
                        ▼
        ┌──────────────────────────────────────┐
        │ ENCODE SIGNS OF SYMBOLS AND CONVERT   │─── S694
        │ SYMBOLS INTO POSITIVE NUMBERS         │
        └──────────────────────────────────────┘
                        │
                        ▼
        ┌──────────────────────────────────────┐
        │ ENCODE MAXIMUM VALUE (nMax) AMONG THE │─── S696
        │ SYMBOLS INTO AS MANY BITS AS nQp      │
        └──────────────────────────────────────┘
```

S690

INITIALIZE ENCODING RANGE — S698
$( \hat{P}_{i\text{-}max} = nMax, \hat{P}_{i\text{-}min} = 0, \hat{P}_{i\text{-}found} = 0 )$

i = nStratIndex, bDone = true — S700

$\hat{P}_{i\text{-}max} = \hat{P}_{i\text{-}min} ?$ — S702

bDone = false — S704

CALCULATE MIDDLE VALUE nMid IN ENCODING RANGE — S706

$nMid \le \hat{P}_i ?$ — S708

REPLACE $\hat{P}_{i\text{-}max}$ WITH nMid — S710

REPLACE $\hat{P}_{i\text{-}min}$ WITH nMid, $\hat{P}_{i\text{-}found} = 1$ — S712

$\hat{P}_{i\text{-}found} = 1 ?$ — S714

ENCODE USING FoundContext — S716

ENCODE USING notFoundcontext — S718

i++ — S720

i < n ? — S722

bDone? — S724

END

# FIG. 8

**One symbol**          **One symbol ...**

| 0 | 0 | 0 | ... | 0 | 1 | 0 | . | ... |

Magnitude of symbol

Ending flag

sign

# FIG. 9A

| | | |
|---|---|---|
| **Input Symbol** | 1 | 1 is in lower half of [0..9], i.e. [0..4]. Issue "0" |
| Range of symbol | 0..9 | |
| 1st Stage | 0 | 1 is in lower half of [0..4], i.e. [0..1]. Issue "0" |
| | 0..4 | |
| 2nd Stage | 0 | 1 is in upper half of [0..1], i.e. [1..1]. Issue "1" |
| | 0..1 | |
| 3rd Stage | 1 | |
| | 1..1 | |

# FIG. 9B

| Input Symbol | 0 | 1 | 2 | 3 | 4 | 9 |
|---|---|---|---|---|---|---|
| Range of each symbol | 0..9 | 0..9 | 0..9 | 0..9 | 0..9 | 0..9 |

Rough    *1st* Stage

| 0 | 0 | 0 | 0 | 0 | 1 |
|---|---|---|---|---|---|

| 0..4 | 0..4 | 0..4 | 0..4 | 0..4 | 5..9 |

*2nd* Stage

| 0 | 0 | 1 | 1 | 1 |
|---|---|---|---|---|

| 0..1 | 0..1 | 2..4 | 2..4 | 2..4 |

*3rd* Stage

| 0 | 1 | 0 | 1 | 1 |
|---|---|---|---|---|

| 0..0 | 1..1 | 2..2 | 3..4 | 3..4 |

Fine    *4th* Stage

|  |  |  | 0 | 1 |
|---|---|---|---|---|

| 3..3 | 4..4 |

Bitstream

EP 1 564 999 B1

# FIG. 10A

## FIG. 10B

```
              ( START )
                  │
                  ▼
    ┌─────────────────────────┐
    │ DETERMINE INVERSE DPCM  │── S1010
    │    TO BE PERFORMED      │
    └─────────────────────────┘
                  │
                  ▼
    ┌─────────────────────────┐
    │ PERFORM INVERSE CIRCULAR│── S1020
    │      QUANTIZATION       │
    └─────────────────────────┘
                  │
                  ▼
    ┌─────────────────────────┐
    │ PERFORM INVERSE CIRCULAR│
    │   DPCM OR PREDICTIVE    │── S1030
    │     CIRCULAR DPCM       │
    └─────────────────────────┘
                  │
                  ▼
    ┌─────────────────────────┐
    │ OUTPUT RESULTS OF INVERSE│── S1040
    │          DPCM           │
    └─────────────────────────┘
                  │
                  ▼
               ( END )
```

## FIG. 11

```
                    1120        1130         1140
  ┌───────────┐  ┌─────────┐ ┌─────────┐ ┌─────────┐  ┌──────────────┐
  │ BITSTREAM │→ │ ENTROPY │→│ INVERSE │→│ INVERSE │→ │ DECODED DATA │
  └───────────┘  │ DECODER │ │  DPCM   │ │QUANTIZER│  └──────────────┘
                 └─────────┘ │OPERATOR │ └─────────┘
                             └─────────┘
```

FIG. 12A

FIG. 12B

```
        ( START )
            |
            v
+-------------------------------------+
| RECEIVE MAXIMUM VALUE (fMax),        |
| nWhichAxix, AND INFORMATION ON       |--- S1210
| ENCODING FORMAT (bUse32Float)        |
+-------------------------------------+
            |
            v
+-------------------------------------+
| CALCULATE MAXIMUM RANGE              |--- S1220
| (Range max)                          |
+-------------------------------------+
            |
            v
+-------------------------------------+
| INVERSELY NORMALIZE EACH             |--- S1230
| COMPONENT                            |
+-------------------------------------+
            |
            v
          ( END )
```

# FIG. 13A

BITSTREAM

$\overline{P}_i$

1120 ENTROPY DECODER

$\check{P}_i$

1130 INVERSE DPCM PROCESSOR

$\tilde{P}_i$

1140 INVERSE QUANTIZER

$\hat{\tilde{P}}_i$

1150 INVERSE NORMALIZER

$\hat{P}_i$

DECODED KEY VALUE DATA

1160 FLOATING-POINT NUMBER DECODER

1110 KEY VALUE HEADER DECODER

## FIG. 13B

```
                    (  START  )
                         |
  PERFORM KEY-VALUE-HEADER-DECODING ─── S1300
                         |
     PERFORM ENTROPY-DECODING        ─── S1320
                         |
   PERFORM INVERSE CIRCULAR-DPCM
   OPERATION OR INVERSE PREDICTIVE   ─── S1350
     -CIRCULAR DPCM OPERATION
                         |
       INVERSELY QUANTIZE            ─── S1370
                         |
       INVERSELY NORMALIZE           ─── S1380
                         |
   OUTPUT DECODED KEY VALUE DATA     ─── S1390
                         |
                    (   END   )
```

## FIG. 14A

```
        ( FROM S1300 )                           ⟋ S1320
                |  ⟋ S1321
                ▼
   ┌───────────────────────────┐
   │  INPUT BITSTREAM ($\bar{P}_i$)  │
   └───────────────────────────┘
                │  ⟋ S1322
                ▼
            ╱ ARE ALL ╲                 YES
        ╱ QUANTIZED VALUES ╲ ──────────────────────┐
            ╲ THE SAME? ╱                           │
                │ NO                                 ▼  ⟋ S1323
                │                           ┌──────────────────┐
                │                           │ SET ALL SYMBOLS TO │
                │                           │  MINIMUM VALUE     │
                ▼  ⟋ S1324                  └──────────────────┘
        ╱ ARE DIFFERENTIAL ╲        NO                 │
      ╱   DATA ENCODED       ╲ ────────────┐           │
      ╲ THROUGH UNARY AAC    ╱             │           │
          ╲ FUNCTION? ╱                    │           │
                │ YES                       ▼  ⟋ S1330   │
                │  ⟋ S1325        ┌──────────────────┐   │
                ▼                 │ DECODE USING SQ   │   │
   ┌───────────────────────┐      │  AAC FUNCTION     │   │
   │  DECODE USING UNARY   │      └──────────────────┘   │
   │   AAC FUNCTION        │              │               │
   └───────────────────────┘              │               │
                │                          │               │
                ◄──────────────────────────┴───────────────┘
                ▼
        ( TO S1350 )
```

**FIG. 14B**

FROM S1324

DECODE SIGNS AND MAXIMUM VALUE (nMax) INITIALIZE DECODING RANGE AND $\check{P}_{i\text{-found}}$ — S1331

S1330

i=nStratIndex, bDone=true — S1332

ARE MAXIMUM AND MINIMUM VALUES IN DECODING RANGE THE SAME? — S1333

NO — S1335

bDone=false, RENEW MIDDLE VALUE

YES

DETERMINE MAXIMUM VALUE IN DECODING RANGE AS DECODED VALUE — S1334

$\check{P}_{i\text{-found}}$ = true? — S1336

YES — S1337

DECODE USING Found Context

NO

DECODE USING notFound Context — S1338

IS READ BIT 1? — S1339

NO — S1340

REPLACE MAXIMUM VALUE IN DECODING RANGE WITH MIDDLE VALUE

YES

REPLACE MINIMUM VALUE IN DECODING RANGE WITH MIDDLE VALUE $\check{P}_{i\text{-found}}$ = true — S1341

NO /S1344

bDone? YES

NO

i<n? — S1343

YES

i++ — S1342

TO S1350

EP 1 564 999 B1

68

FIG. 14C

FROM S1370

RECEIVE MAXIMUM VALUE (fMax),
MINIMUM VALUES AMONG KEY VALUE
DATA OF EACH COMPONENT, nWhichAxis,
AND INFORMATION ON ENCODING
FORMAT (bUse32Float) — S1382

CONVERT MAXIMUM AND MINIMUM VALUES — S1384

CALCULATE MAXIMUM RANGE (RANGE$_{max}$) — S1386

INVERSELY NORMALIZE EACH COMPONENT — S1388

TO S1390

## FIG. 15

$$\boxed{\bar{P}_{nStartIndex\_X,x}}\boxed{\bar{P}_{nStartIndex\_X+1,x}}\boxed{\cdots}\boxed{\bar{P}_{nNumberOfKeyValue-1,x}}$$

$$\boxed{\bar{P}_{nStartIndex\_Y,y}}\boxed{\bar{P}_{nStartIndex\_Y+1,y}}\boxed{\cdots}\boxed{\bar{P}_{nNumberOfKeyValue-1,y}}$$

$$\boxed{\bar{P}_{nStartIndex\_Z,z}}\boxed{\bar{P}_{nStartIndex\_Z+1,z}}\boxed{\cdots}\boxed{\bar{P}_{nNumberOfKeyValue-1,z}}$$

## FIG. 16A

─◆─ 2nd DPCM using Simple Prediction

## FIG. 16B

## FIG. 17A

## FIG. 17B

The Result of DPCM

$(2^{nQBits}-2)$

$-(2^{nQBits}-2)$

## FIG. 17C

The Result of Circular DPCM

$(2^{nQBits-1}-1)$

$-(2^{nQBits-1}-1)$

FIG. 18A

FIG. 18B

FIG. 19

```
class CompressedPositionInterpolator {
        PosIKeyValueHeader posIKVHeader;
        qf_start():
        aligned(8) PosIKeyValue posIKV(posIKVHeader,
posIKVHeader.nNumberOfKeyValue);
}
```

## FIG. 20

```
class PosIKeyValueHeader() {
        unsigned int(5) nNumKeyValueCodingBit;
        unsigned int(nNumKeyVaueCodingBit) nNumberOfKeyValue;
        unsigned int(5) nKVQBit;
        bit(1) x_keyvalue_flag;
        bit(1) y_keyvalue_flag;
        bit(1) z_keyvalue_flag;
        unsigned int(4) nKVDigit;
        int nBits = (int)(log10(nKVQBit)/log10(2)) + 1;
if(x_keyvalue_flag == 1) {
                bit(1) nKVDPCMOrder_X;
                bit(1) bIsUnaryAAC_X;
                if(bIsUnaryAAC_X != 1) {
                        unsigned int(nBits) nKVCodingBit_X;
                        unsigned int(1) nStartIndex_X;
                }
        }
        if(y_keyvalue_flag == 1) {
                bit(1) nKVDPCMOrder_Y;
                bit(1) bIsUnaryAAC_Y;
                if(bIsUnaryAAC_Y != 1) {
                        unsigned int(nBits) nKVCodingBit_Y;
                        unsigned int(1) nStartIndex_Y;
                }
        }
        if(z_keyvalue_flag == 1) {
                bit(1) nKVDPCMOrder_Z;
                bit(1) bIsUnaryAAC_Z;
                if(bIsUnaryAAC_Z != 1) {
                        unsigned int(nBits) nKVCodingBit_Z;
                        unsigned int(1) nStartIndex_Z;
                }
        }
        if((nStartIndex_X == 1) && (x_keyvalue_flag == 1))
                        unsigned int(nKVQBit) firstKV_X;
        if((nStartIndex_Y == 1) && (y_keyvalue_flag == 1))
                        unsigned int(nKVQBit) firstKV_Y;
        if((nStartIndex_X == 1) && (z_keyvalue_flag == 1))
                        unsigned int(nKVQBit) firstKV_Z;
        KeyValueMinMax kvMinMax(nKVDigit);
}
```

# EP 1 564 999 B1

# FIG. 21

```
class KeyValueMinMax(int nKeyValueDigit) {
        bit(1) bUse32Float;
        if(bUse32Float == 0) {
                bit(2) nWhichAxis;
                bit(1) bAllSameMantissaDigitFlag;
                if(bAllSameMantissaDigitFlag == 0) {
                        unsigned int(4) nMantissaDigit_X;
                        unsigned int(4) nMantissaDigit_Y;
                        unsigned int(4) nMantissaDigit_Z;
                } else {
                        bit(1) bSameKVDigitFlag;
                        if(bSameKVDigitFlag == 0)
                                unsigned int(4) nMantissaDigit_X;
                        else
                                nMantissaDigit_X = nKeyValueDigit;
                        nMantissaDigit_Y = nMantissaDigit_X;
                        nMantissaDigit_Z = nMantissaDigit_X;
                }
                bit(1) bMaxDigitFlag;
                if(bMaxDigitFlag == 1)
                        unsigned int(4) nMantissaDigit_M;
                else {
                        switch(nWhichAxis){
                        case 0:
                                nMantissaDigit_M = nMantissaDigit_X;
                                break;
                        case 1:
                                nMantissaDigit_M = nMantissaDigit_Y;
                                break;
                        case 2:
                                nMantissaDigit_M = nMantissaDigit_Z;
                                break;
                        }
                }
                unsigned int(6) nExponentBits;
                nExponentBits = (int)(log10(nExponentBits)/log10(2)) + 1;
                bit(1) bAllSameExponentSign;
                if(bAllSameExponentSign == 1)
                        bit(1) nExponentSign;
                FloatingPointNumber fpnMin_X(nMantissaDigit_X, nExponentBits, bAllSameExponentSign,
nExponentSign);
                FloatingPointNumber fpnMin_Y(nMantissaDigit_Y, nExponentBits, bAllSameExponentSign,
nExponentSign);
                FloatingPointNumber fpnMin_Z(nMantissaDigit_Z, nExponentBits, bAllSameExponentSign,
nExponentSign);
                FloatingPointNumber fpnMax(nMantissaDigit_M, nExponentBits, bAllSameExponentSign,
nExponentSign);
        } else {
                float(32) fMin_X;
                float(32) fMin_Y;
                float(32) fMin_Z;
                float(32) fMax;
        }
}
```

76

FIG. 22

```
class FloatingPointNumber(unsigned int nDigit, unsigned int nExponentBits,
unsigned int bAllSameExponentSign, int nSameExponentSign) {
        if(nDigit != 0) {
                bit(1) nSign;
                int nBits = (int)(log10(10^nDigit - 1)/log10(2)) + 1;
                unsigned int(nBits) nMantissa;
                unsigned int(nExpoentBits) nExponent;
                if(bAllSameExponentSign == 0)
                        bit(1) nExponentSign;
                else
                        nExponentSign = nSameExponentSign;
        }
}
```

## FIG. 23

```
class PosIKeyValue (PosIKeyValueHeader kVHeader, int nNumberOfKeyValue) {
        if(kVHeader.x_keyvalue_flag == 1) {
                if(kVHeader.bIsUnaryAAC_X == 1)
                        for(i=kVHeader.nStartIndex_X; i<nNumberOfKeyValue; i++)
                                decodeUnaryAAC(&keyValue_X[i], kVXSignContext,
kVXUContext);
                else
                        decodeSQAAC(keyValue_X, kVHeader.nKVCodingBit_X,
kVXSignContext, kVXMaxValueContext, kVXFoundContext, kVXNotFoundContext,
nNumberOfKeyValue, kVHeader.nStartIndex_X);
        }
        if(kVHeader.y_keyvalue_flag == 1) {
                if(kVHeader.bIsUnaryAAC_Y == 1) {
                        for(i= kVHeader.nStartIndex_Y; i<nNumberOfKeyValue; i++)
                                decodeUnaryAAC(&keyValue_Y[i], kVYSignContext,
kVYUContext);
                else
                        decodeSQAAC(keyValue_Y, kVHeader.nKVCodingBit_Y,
kVYSignContext, kVYMaxValueContext, kVYFoundContext, kVYNotFoundContext,
nNumberOfKeyValue, kVHeader.nStartIndex_Y);
        }
        if(kVHeader.z_keyvalue_flag == 1) {
                if(kVHeader.bIsUnaryAAC_Z == 1)
                        for(i= kVHeader.nStartIndex_Z; i<nNumberOfKeyValue; i++)
                                decodeUnaryAAC(&keyValue_Z[i], kVZSignContext,
kVZUContext);
                else
                        decodeSQAAC(keyValue_Z, kVHeader.nKVCodingBit_Z,
kVZSignContext, kVZMaxValueContext, kVZFoundContext, kVZNotFoundContext,
nNumberOfKeyValue, kVHeader.nStartIndex_Z);
        }
}
```

# FIG. 24

```
ICDPCM_1stOrder(int* curIDPCMKeyValue, int deltaKeyValue, int prevKeyValue)
{
        int nCircularValue;
        if(deltaKeyValue >= 0)
                nCircularValue = deltaKeyValue (2^nKeyValueQBits 1);
        else
                nCircularValue = deltaKeyValue + (2^nKeyValueQBits 1);.
        *curIDPCMKeyValue = deltaKeyValue + prevKeyValue;
        if(*curIDPCMKeyValue < 0)
                * curIDPCMKeyValue = prevKeyValue + nCircualrValue;
        else if(*curIDPCMKeyValue > (2^nKeyValueQBits 1))
                * curIDPCMKeyValue = prevKeyValue + nCircualrValue;
}
```

# FIG. 25

```
        void    decodeUnaryAAC(int*    nDecodedValue,   QState*   signContext,   QState*
valueContext)
        {
                int nBits = -1;
                bit bBit;
                do {
                        qf_decode(&bBit, valueContext);
                        nBits++;
                } while(bBit == 0);
                if(nBits != 0) {
                        qf_decode(&bBit, signContext);
                        if(bBit == 0)
                                * nDecodedValue = nBits;
                        else
                                * nDecodedValue = -nBits;
                }
                else
                        * nDecodedValue = 0;
        }
```

FIG. 26

```
        void    decodeUnaryAAC(int*    nDecodedValue,    QState*    signContext,    QState*
valueContext)
    {
        int nBits = -1;
        bit bBit;
        do {
                qf_decode(&bBit, valueContext);
                nBits++;
        } while(bBit == 0);
        if(nBits != 0) {
                qf_decode(&bBit, signContext);
                if(bBit == 0)
                        * nDecodedValue = nBits;
                else
                        * nDecodedValue = -nBits;
        }
        else
                * nDecodedValue = 0;
    }
```

## FIG. 27

```
        void decodeSQAAC(int* anDecodedValues, int qstep, QState* signContext, QState*
maxValueContext, QState* foundContext, QState* notFoundContext, int keynum, int start) {
                int range_mid[keynum], range_min[keynum], range_max[keynum], sign[keynum];
                bool found[keynum];
                int max_val = 0;
                int max_count = 1;
                bool all_level_done = false;
                int max_index = -1;
                bit bBit;
                for (int j=qstep; j>=0; j--) {
                        qf_decode(&bBit, &maxValueContext);
                        max_val = (max_val << 1) + bBit;
                }
                for(int i=start; i<keynum; i++) {
                        range_min[i] = 0;
                        range_max[i] = max_val;
                        found[i] = false;
                        qf_decode(&bBit, &signContext);
                        if (bBit)
                                sign[i] = -1;
                        else
                                sign[i] = 1;
                }
                while (!all_level_done) {
                        all_level_done = true;
                        max_index = -1;
                        for(i=start; i<keynum; i++) {
                                if (range_max[i] != range_min[i]) {
                                        all_level_done = false;
                                        range_mid[i]      =      (int)((range_max[i]      -
range_min[i])/2) + 1 + range_min[i];
                                        if (!found[i])
                                                qf_decode(&bBit, &foundContext);
                                        else
                                                qf_decode(&bBit, &notFoundContext);
                                        if (bit) {
                                                if (max_count == 1 && range_max[i] ==
max_val) {
                                                        if (max_index == -1)
                                                                max_index = i;
                                                        else
                                                                max_index = keynum.
                                                }
                                                range_min[i] = range_mid[i];
                                                found[i] = true;
                                        }
                                        else
                                                range_max[i] = range_mid[i]-1;
                                }
                        }
                        if (max_index >= 0 && max_index < keynum) {
                                range_min[max_index] = max_val;
                                max_count = 0;
                        }
                }
                for(i=start; i<keynum; i++)
                        anDecodedValues[i] = range_max[i] * sign[i];
        }
```